(19) Europäisches Patentamt / European Patent Office / Office européen des brevets

(11) **EP 4 580 093 A1**

(12) **EUROPEAN PATENT APPLICATION**
published in accordance with Art. 153(4) EPC

(43) Date of publication:
**02.07.2025 Bulletin 2025/27**

(21) Application number: **23870672.5**

(22) Date of filing: **25.09.2023**

(51) International Patent Classification (IPC):
**H04B 17/309** (2015.01)

(52) Cooperative Patent Classification (CPC):
**H04B 17/309; H04L 5/00**

(86) International application number:
**PCT/CN2023/120934**

(87) International publication number:
**WO 2024/067441 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211230368**

(71) Applicant: **Huawei Technologies Co., Ltd.
Shenzhen, Guangdong 518129 (CN)**

(72) Inventors:
- **LIU, Yunfeng
  Shenzhen, Guangdong 518129 (CN)**
- **GUO, Zhiheng
  Shenzhen, Guangdong 518129 (CN)**
- **SONG, Xinghua
  Shenzhen, Guangdong 518129 (CN)**
- **XIE, Xinqian
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, APPARATUS AND SYSTEM**

(57) This application provides a communication method, apparatus, and system. In the method, a terminal receives channel state information-reference signal CSI-RS configuration information. When a CSI-RS resource configured by a network device includes both a resource for uplink transmission and a resource for downlink transmission, the CSI-RS resource is divided into a plurality of resource sets, so that the terminal device performs CSI-RS measurement only on the resource for downlink transmission, to avoid impact of CSI-RS measurement performed by the terminal on the uplink resource. This improves accuracy of channel measurement, so that communication performance can be further improved.

FIG. 11

**Description**

This application claims priority to Chinese Patent Application No. 202211230368.8, filed with the China National Intellectual Property Administration on September 30, 2022 and entitled "COMMUNICATION METHOD, APPARATUS, AND SYSTEM", which is incorporated herein by reference in its entirety.

**TECHNICAL FIELD**

This application relates to the communication field, and in particular, to a communication method, apparatus, and system.

**BACKGROUND**

A 5G new radio (New Radio, NR) wireless communication system is deployed in medium and high frequency bands, and achieves a high data rate and low latency at a large bandwidth. In a time division duplexing (time division duplexing, TDD) system, a terminal device can perform only receiving or sending on one symbol, but cannot perform receiving and sending simultaneously. In addition, in the TDD system, a downlink (downlink, DL) usually occupies a main time resource, which causes coverage imbalance between the DL and an uplink (uplink, UL). The TDD system has poorer uplink coverage and higher uplink latency than a frequency division duplexing (frequency division duplexing, FDD) system. To resolve problems of uplink coverage and latency of the TDD system, a subband full duplex (subband full duplex, SBFD) solution is proposed in Rel-18. A frequency domain resource in one slot includes at least one downlink subband and at least one uplink subband, so that an uplink transmission resource available to the terminal device increases. This can effectively improve the UL coverage and reduce the UL latency.

The terminal receives a channel state information-reference signal to obtain channel state information. The channel state information-reference signal supports a wideband configuration and a narrowband configuration. Because channel state information-reference signal resources configured by a base station are a segment of consecutive resources, and in the SBFD system, a resource for UL transmission and a resource for DL transmission may overlap in one slot, a resource for CSI-RS measurement configured by a network device and the resource for UL transmission may overlap in frequency domain, and the channel state information-reference signal cannot be measured in an overlapped part. Consequently, channel measurement is inaccurate, affecting communication performance.

Therefore, how to improve accuracy of channel measurement and improve communication performance is a problem to be urgently resolved.

**SUMMARY**

This application provides a communication method, apparatus, and system, so that accuracy of channel measurement and communication performance can be improved.

According to a first aspect, an embodiment of this application provides a communication method. The method may be performed by a terminal device, or may be performed by a chip or a circuit used in the terminal device. This is not limited in this application. For ease of description, an example in which the method is performed by a terminal device is used below for description. The method may include: receiving configuration information, where the configuration information indicates a first resource of a channel state information-reference signal CSI-RS, the first resource includes a second resource and a third resource, the second resource is used for downlink transmission, the third resource is used for uplink transmission, the second resource and the third resource are different frequency domain resources on a same time domain resource, the second resource includes N resource sets, each of the N resource sets includes at least one physical resource block PRB, the N resource sets do not overlap each other, and PRBs included in each of the N resource sets are consecutive, or PRBs included in at least one of the N resource sets are inconsecutive; and separately measuring the CSI-RS on M resource sets in the N resource sets, where M is less than or equal to N, and M and N are positive integers.

In the method, through division of a frequency domain resource set, the terminal device may remove a resource for UL transmission from a configured CSI-RS resource, to implement CSI-RS measurement only on a DL resource. This avoids impact on a channel measurement result due to CSI-RS measurement performed by the terminal device on an uplink resource, improves accuracy of channel measurement, and further improves communication performance.

With reference to the first aspect, in some implementations of the first aspect, a quantity of PRBs included in each of the N resource sets is determined based on a first parameter, and the first parameter includes at least one of the following: a maximum quantity of PRBs included in any one of the N resource sets, an index ID of a start PRB of the second resource, and a total quantity of PRBs included in the second resource.

With reference to the first aspect, in some implementations of the first aspect, the PRBs included in each of the N resource sets are consecutive, the second resource includes a first partial frequency domain range and a second partial frequency domain range, the first partial frequency domain range includes N1 resource sets, the second partial frequency domain range includes N2 resource sets, the first partial frequency domain range and the second partial frequency domain range are not adjacent in frequency domain, a sum of N1 and N2 is N, and the quantity of PRBs included in each of the resource sets included in the second resource and the first parameter meet the following relationship:

$$QA = N_{PRB}^{SB} - (N_1^{start} \bmod N_{PRB}^{SB});$$

$$QB = \left(N_1^{start} + N_1^{size}\right) \bmod N_{PRB}^{SB} \text{ and } \left(N_1^{start} + N_1^{size}\right) \bmod N_{PRB}^{SB} \text{ is not } 0,$$

or

$$QB = N_{PRB}^{SB} \text{ and } \left(N_1^{start} + N_1^{size}\right) \bmod N_{PRB}^{SB} \text{ is } 0;$$

$$QC = N_{PRB}^{SB};$$

$$QD = N_{PRB}^{SB} - (N_2^{start} \bmod N_{PRB}^{SB});$$

and

$$QE = \left(N_2^{start} + N_2^{size}\right) \bmod N_{PRB}^{SB} \text{ and } \left(N_2^{start} + N_2^{size}\right) \bmod N_{PRB}^{SB} \text{ is not } 0,$$

or

$$QE = N_{PRB}^{SB} \text{ and } \left(N_2^{start} + N_2^{size}\right) \bmod N_{PRB}^{SB} \text{ is } 0,$$

where

QA is a quantity of PRBs included in a first resource set, and the first resource set is a resource set whose start PRB has a smallest ID in the N1 resource sets;

QB is a quantity of PRBs included in a second resource set, and the second resource set is a resource set whose start PRB has a largest ID in the N1 resource sets;

QD is a quantity of PRBs included in a third resource set, and the third resource set is a resource set whose start PRB has a smallest ID in the N2 resource sets;

QE is a quantity of PRBs included in a fourth resource set, and the fourth resource set is a resource set whose start PRB has a largest ID in the N2 resource sets;

QC is a quantity of PRBs included in a fifth resource set, and a resource set other than the first resource set, the second resource set, the third resource set, and the fourth resource set in the (N1+N2) resource sets is one or more fifth resource sets;

$N_{PRB}^{SB}$ is the maximum quantity of PRBs included in any resource set of the second resource;

$N_1^{start}$ and $N_2^{start}$ are an ID of a start PRB occupied by the first partial frequency domain range and an ID of a start PRB occupied by the second partial frequency domain range respectively;

$N_1^{size}$ and $N_2^{size}$ are a total quantity of PRBs included in the first partial frequency domain range and a total quantity of PRBs included in the second partial frequency domain range respectively.

In this manner, the first resource may include three partial frequency domain ranges. Resources in two partial frequency domain ranges (namely, the first partial frequency domain range and the second partial frequency domain range) are separated by the third resource, and PRBs in each partial frequency domain range are consecutive.

With reference to the first aspect, in some implementations of the first aspect, a value of $N_{PRB}^{SB}$ is K0; and the method further includes:

separately performing measurement on first (K0/2) PRBs in each of the one or more fifth resource sets and reporting a 1st PMI for the (K0/2) PRBs;

separately performing measurement on last (K0/2) PRBs in each of the one or more fifth resource sets and reporting a 2nd PMI for the (K0/2) PRBs;

in a case in which the quantity of RBs included in the first resource set and the quantity of RBs included in the third resource set are S1 and S3 respectively,

if S1 is less than or equal to K0/2, performing measurement on the PRB in the first resource set and reporting one PMI for the first resource set; or

if S1 is greater than K0/2, performing measurement on first (S1-(K0/2)) PRBs in the first resource set and reporting a 1st PMI for the (S1-(K0/2)) PRBs, and performing measurement on last (K0/2) PRBs in the first resource set and reporting a 2nd PMI for the (K0/2) PRBs; and

if S3 is less than or equal to K0/2, performing measurement on the PRB in the third resource set and reporting one PMI for the third resource set; or

if S3 is greater than K0/2, performing measurement on first (S3-(K0/2)) PRBs in the third resource set and reporting a 1st PMI for the (S3-(K0/2)) PRBs, and performing measurement on last (K0/2) PRBs in the third resource set and reporting a 2nd PMI for the (K0/2) PRBs; and

in a case in which the quantity of PRBs included in the second resource set and the quantity of PRBs included in the fourth resource set are S2 and S4 respectively,

if S2 is less than or equal to K0/2, performing measurement on the PRB in the second resource set and reporting one PMI for the second resource set; or

if S2 is greater than K0/2, performing measurement on first (K0/2) PRBs in the second resource set and reporting a 1st PMI for the (K0/2) PRBs, and performing measurement on last (S2-(K0/2)) PRBs in the second resource set and reporting a 2nd PMI for the (S2-(K0/2)) PRBs; and

if S4 is less than or equal to K0/2, performing measurement on the PRB in the fourth resource set and reporting one PMI for the resource set; or

if S4 is greater than K0/2, performing measurement on first (K0/2) PRBs in the fourth resource set and reporting a 1st PMI for the (K0/2) PRBs, and performing measurement on last (S4-(K0/2)) PRBs in the fourth resource set and reporting a 2nd PMI for the (S4-(K0/2)) PRBs.

In this manner, for a case in which each resource set includes different quantities of PRBs, a specific measurement manner and a measurement result reporting manner are provided, thereby further improving accuracy of determining a measurement result by a network device. It should be understood that, in the foregoing manner, the PMI is used as an example of the measurement result. This application is not limited thereto.

With reference to the first aspect, in some implementations of the first aspect, the PRBs included in at least one of the N resource sets are inconsecutive, the second resource includes a third resource subset and a fourth resource subset, the third resource subset includes N1 resource sets, the fourth resource subset includes N2 resource sets, a sum of N1 and N2 is N, an ID of a start PRB in the third resource subset is smaller than an ID of a start PRB in the fourth resource subset, the third resource subset and the fourth resource subset are not adjacent in frequency domain, and the quantity of PRBs included in each of the resource sets included in the second resource and the first parameter meet the following relationship:

$$Qi = N_{PRB}^{SB} - (N_1^{start} \bmod N_{PRB}^{SB});$$

$$Qr = \left(N_1^{start} + N_{1+2}^{size}\right) \bmod N_{PRB}^{SB} \text{ and } \left(N_1^{start} + N_{1+2}^{size}\right) \bmod N_{PRB}^{SB} \text{ is not } 0,$$

or

$$Qr = N_{PRB}^{SB} \text{ and } \left(N_1^{start} + N_{1+2}^{size}\right) \bmod N_{PRB}^{SB} \text{ is } 0;$$

and

$$Qv = N_{PRB}^{SB},$$

where

Qi is a quantity of PRBs included in a sixth resource set, and the sixth resource set is a resource set whose start PRB has a smallest ID in the N resource sets;

Qr is a quantity of PRBs included in a seventh resource set, and the seventh resource set is a resource set whose start PRB has a largest ID in the N resource sets;

Qv is a quantity of PRBs included in an eighth resource set, and a resource set other than the sixth resource set and the seventh resource set in the N resource sets is one or more eighth resource sets;

$N_{PRB}^{SB}$ is the maximum quantity of PRBs included in any resource set of the second resource;

$N_1^{start}$ is an ID of a start PRB occupied by the third resource subset; and

$N_{1+2}^{size}$ is the total quantity of PRBs included in the third resource subset and the fourth resource subset.

In this manner, the first resource may include three partial frequency domain ranges. Resources in two partial frequency domain ranges (namely, the first partial frequency domain range and the second partial frequency domain range) are separated by the third resource, and PRBs in each partial frequency domain range may be inconsecutive.

With reference to the first aspect, in some implementations of the first aspect, a value of $N_{PRB}^{SB}$ is K0; and the method further includes:

separately performing measurement on first (K0/2) PRBs in each of the one or more eighth resource sets and reporting a 1st PMI for the (K0/2) PRBs;

separately performing measurement on last (K0/2) PRBs in each of the one or more eighth resource sets and reporting a 2nd PMI for the (K0/2) PRBs;

in a case in which the quantity of RBs included in the sixth resource set is J1,

if J1 is less than or equal to K0/2, performing measurement on the PRB in the sixth resource set and reporting one PMI for the resource set; or

if J1 is greater than K0/2, performing measurement on first (S1-(K0/2)) PRBs in the sixth resource set and reporting a 1st PMI for the (S1-(K0/2)) PRBs, and performing measurement on last (K0/2) PRBs in the sixth resource set and reporting a 2nd PMI for the (K0/2) PRBs; and

in a case in which the quantity of PRBs included in the seventh resource set is J2,

if J2 is less than or equal to K0/2, performing measurement on the PRB in the seventh resource set and reporting one PMI for the resource set; or

if J2 is greater than K0/2, performing measurement on first (K0/2) PRBs in the seventh resource set and reporting a 1st PMI for the (K0/2) PRBs, and performing measurement on last (S4-(K0/2)) PRBs in the seventh resource set and reporting a 2nd PMI for the (S4-(K0/2)) PRBs.

In this manner, inconsecutive PRBs may be included in a same resource set, so that a quantity of PRBs included in the resource set can meet $N_{PRB}^{SB}$. This manner provides diversified selections for resource configuration. When a quantity of the resources in the first partial frequency domain range and a quantity of the resources in the second partial frequency domain range are the same, compared with the foregoing manner in which PRBs in each resource set are consecutive, this manner can reduce a quantity of resource sets, and therefore reduce reporting overheads.

According to a second aspect, an embodiment of this application provides a communication method. The method may be performed by a terminal device, or may be performed by a chip or a circuit used in the terminal device. This is not limited in this application. For ease of description, an example in which the method is performed by a terminal device is used below for description. The method may include: receiving configuration information, where the configuration information indicates a first resource of a CSI-RS, the first resource includes P resource sets, the P resource sets do not overlap each other, each of the P resource sets includes at least one PRB, the P resource sets include a resource set #a, the resource set #a includes a first PRB and a second PRB, the first PRB is used for downlink transmission, the second PRB is used for uplink transmission, and P is a positive integer; and separately measuring a CSI-RS on PRBs that are used for downlink transmission and that are included in S resource sets in the P resource sets, where S is a positive integer less than P.

In the method, the terminal device measures only a resource for downlink transmission, so that impact of some uplink resources on a channel measurement result is avoided, accuracy of channel measurement is improved, and communication performance can be improved.

With reference to the second aspect, in some implementations of the second aspect, a quantity of PRBs included in each of the resource sets included in the first resource is determined based on a first parameter, and the first parameter includes at least one of the following: a maximum quantity of PRBs (subband size) included in any resource set of the first resource, an ID of a start PRB of the first resource, and a total quantity of PRBs included in the first resource.

With reference to the second aspect, in some implementations of the second aspect, the quantity of PRBs included in each of the N resource sets and the first parameter meet the following relationship:

$$Qj = N_{PRB}^{SB} - \left(N_{BWP,i}^{start} \bmod N_{PRB}^{SB}\right);$$

$$Qk = \left(N_{BWP,i}^{start} + N_{BWP,i}^{size}\right) \bmod N_{PRB}^{SB} \text{ and } \left(N_{BWP,i}^{start} + N_{BWP,i}^{size}\right) \bmod N_{PRB}^{SB} \text{ is not } 0,$$

or

$$Qk = N_{PRB}^{SB} \text{ and } \left(N_{BWP,i}^{start} + N_{BWP,i}^{size}\right) \bmod N_{PRB}^{SB} \text{ is } 0;$$

and

$$Ql = N_{PRB}^{SB},$$

where

Qj is a quantity of PRBs included in a ninth resource set, and the ninth resource set is a resource set ranked first in the P resource sets;
Qk is a quantity of PRBs included in a tenth resource set, and the tenth resource set is a resource set ranked last in the P resource sets;
Ql is a quantity of PRBs included in an eleventh resource set, and a resource set other than the ninth resource set and the tenth resource set in the P resource sets is one or more eleventh resource sets;
$N_{PRB}^{SB}$ is the maximum quantity of PRBs included in any one of the P resource sets;
$N_{BWP,i}^{start}$ is the ID of the start PRB occupied by the first resource; and
$N_{BWP,i}^{size}$ is the total quantity of PRBs included in the P resource sets.

With reference to the second aspect, in some implementations of the second aspect, a value of $N_{PRB}^{SB}$ is K1, K1 is an even number greater than 0, the first resource includes a second resource and a third resource, the second resource is used for downlink transmission, the third resource is used for uplink transmission, the second resource and the third resource are different frequency domain resources on a same time domain resource, the second resource includes a first partial frequency domain range and a second partial frequency domain range, an ID of a start PRB of the first partial frequency domain range is smaller than an ID of a start PRB of the second partial frequency domain range, the first partial frequency domain range overlaps N1 resource sets in frequency domain, and the second partial frequency domain range overlaps N2 resource sets in frequency domain; and the method further includes:

a twelfth resource set is a resource set whose start PRB has a largest ID in the N1 resource sets, and a thirteenth resource set is a resource set including a PRB that is overlapped between the twelfth resource set and the first partial frequency domain range;
a fourteenth resource set is a resource set whose start PRB has a smallest ID in the N2 resource sets, and a fifteenth resource set is a resource set including a PRB that is overlapped between the fourteenth resource set and the second partial frequency domain range;
the quantity of PRBs included in the ninth resource set and the quantity of PRBs included in the tenth resource set are E1 and E4 respectively, the resource set #a belongs to the one or more eleventh resource sets, and the second PRB in the resource set #a belongs to the third frequency domain resource;
a quantity of PRBs included in the thirteenth resource set and a quantity of PRBs included in the fifteenth resource set are E2 and E3 respectively;
if E1 is less than or equal to K1/2, performing measurement on the PRB in the ninth resource set and reporting one PMI for the resource set; or if E1 is greater than K1/2, performing measurement on first (E1-(K1/2)) PRBs in the ninth resource set and reporting a 1st PMI for the (E1-(K1/2)) PRBs, and performing measurement on last (K1/2) PRBs in the ninth resource set and reporting a 2nd PMI for the (K0/2) PRBs;

if E3 is less than or equal to K1/2, performing measurement on the PRB in the fifteenth resource set and reporting one PMI for the resource set; or if E3 is greater than K1/2, performing measurement on first (E3-(K1/2)) PRBs in the fifteenth resource set and reporting a 1st PMI for the (E3-(K1/2)) PRBs, and performing measurement on last (K1/2) PRBs in the fifteenth resource set and reporting a 2nd PMI for the (K0/2) PRBs;

if E2 is less than or equal to K1/2, performing measurement on the PRB in the thirteenth resource set and reporting one PMI for the resource set; or if E2 is greater than K1/2, performing measurement on first (K1/2) PRBs in the thirteenth resource set and reporting a 1st PMI for the (K1/2) PRBs, and performing measurement on last (E2-(K1/2)) PRBs in the thirteenth resource set and reporting a 2nd PMI for the (E2-(K1/2)) PRBs;

if E4 is less than or equal to K1/2, performing measurement on the PRB in the tenth resource set and reporting one PMI for the resource set; or if E4 is greater than K1/2, performing measurement on first (K1/2) PRBs in the tenth resource set and reporting a 1st PMI for the (K1/2) PRBs; and performing measurement on last (E4-(K1/2)) PRBs in the tenth resource set and reporting a 2nd PMI for the (E4-(K1/2)) PRBs; and

performing measurement on first (K1/2) PRBs in each of one or more sixteenth resource sets and reporting a 1st PMI for the (K1/2) PRBs; and performing measurement on last (K1/2) PRBs in each of the one or more sixteenth resource sets and reporting a 2nd PMI for the (K1/2) PRBs, where a resource set other than the ninth resource set, the tenth resource set, the twelfth resource set, and the fourteenth resource set in the N1 and N2 resource sets is the one or more sixteenth resource sets, and the sixteenth resource set includes $N_{PRB}^{SB}$ PRBs.

With reference to the second aspect, in some implementations of the second aspect, first information is received, where the first information indicates the M resource sets, or the first information indicates the S resource sets.

In this manner, a network device indicates, to the terminal device by using the first information, a resource set that needs to be measured, and the terminal device does not need to determine a measurable resource set, so that power consumption is reduced.

According to a third aspect, an embodiment of this application provides a communication method. The method may be performed by a terminal device, or may be performed by a chip or a circuit used in the terminal device. This is not limited in this application. For ease of description, an example in which the method is performed by a terminal device is used below for description. The method may include: receiving configuration information, where the configuration information indicates a fourth resource for CLI measurement, the fourth resource is used for downlink transmission, the fourth resource includes L resource sets, each of the L resource sets includes at least one PRB, and the L resource sets do not overlap each other; and separately performing CLI measurement on the L resource sets.

In this manner, for a resource configured for CLI measurement, the terminal separately performs measurement based on different resource sets in the resource for CLI measurement, to accurately measure CLI strength in different frequency domain ranges, so that accuracy of channel measurement can be improved.

With reference to the third aspect, in some implementations of the third aspect, in the L resource sets, at least two resource sets include different maximum quantities of PRBs.

In other words, it is allowed that resource sets in the L resource sets may include different maximum quantities of PRBs. This improves flexibility of resource configuration.

With reference to the third aspect, in some implementations of the third aspect, an index of a first value is sent, where the first value is an average value of CLIs respectively corresponding to the L resource sets; and a second value corresponding to a difference between an index of a first measurement result and the index of the first value is sent, where the second value indicates an interval in which the difference falls or the difference, and the first measurement result is measurement results respectively corresponding to the L resource sets.

In this manner, a measurement result of wideband measurement and a difference between a measurement result of subband-level measurement and the measurement result of wideband measurement are reported, so that reporting overheads can be reduced.

With reference to the third aspect, in some implementations of the third aspect, a correspondence between the second value and the L resource sets is sent.

In this manner, the correspondence is reported, so that the network device can be prevented from confusing a relationship between a measurement result and a measurement resource, to further improve accuracy of determining the measurement result by the network device. This reduces power consumption.

According to a fourth aspect, an embodiment of this application provides a communication method. The method may be performed by a network device, or may be performed by a chip or a circuit used in the network device. This is not limited in this application. For ease of description, an example in which the method is performed by a network device is used below for description. The method may include: determining a first resource of a CSI-RS, where the first resource includes a second resource and a third resource, the second resource is used for downlink transmission, the third resource is used for uplink transmission, the second resource and the third resource are different frequency domain resources on a same time domain resource, the second resource includes N resource sets, each of the N resource sets includes at least one physical resource block PRB, the N resource sets do not overlap each other, and PRBs included in each of the N resource sets are consecutive, or PRBs included in at least one of the N resource sets are inconsecutive; and sending configuration information, where the configuration information indicates the first resource.

With reference to the fourth aspect, in some implementations of the fourth aspect, a quantity of PRBs included in each of the N resource sets is determined based on a first parameter, and the first parameter includes at least one of the following: a maximum quantity of PRBs included in any one of the N resource sets, an ID of a start PRB occupied by the second resource, and a total quantity of PRBs included in the second resource.

With reference to the fourth aspect, in some implementations of the fourth aspect, the PRBs included in each of the N resource sets are consecutive, the second resource includes a first partial frequency domain range and a second partial frequency domain range, the first partial frequency domain range includes N1 resource sets, the second partial frequency domain range includes N2 resource sets, the first partial frequency domain range and the second partial frequency domain range are not adjacent in frequency domain, a sum of N1 and N2 is N, and the quantity of PRBs included in each of the resource sets included in the second resource and the first parameter meet the following relationship:

$$QA = N_{PRB}^{SB} - (N_1^{start} \ mod \ N_{PRB}^{SB});$$

$$QB = \left(N_1^{start} + N_1^{size}\right) mod \ N_{PRB}^{SB} \ \ and \ \left(N_1^{start} + N_1^{size}\right) mod \ N_{PRB}^{SB} \ \ is \ not \ 0,$$

or

$$QB = N_{PRB}^{SB} \ \ and \ \left(N_1^{start} + N_1^{size}\right) mod \ N_{PRB}^{SB} \ \ is \ 0;$$

$$QC = N_{PRB}^{SB};$$

$$QD = N_{PRB}^{SB} - (N_2^{start} \ mod \ N_{PRB}^{SB});$$

and

$$QE = \left(N_2^{start} + N_2^{size}\right) mod \ N_{PRB}^{SB} \ \ and \ \left(N_2^{start} + N_2^{size}\right) mod \ N_{PRB}^{SB} \ \ is \ not \ 0,$$

or

$$QE = N_{PRB}^{SB} \ \ and \ \left(N_2^{start} + N_2^{size}\right) mod \ N_{PRB}^{SB} \ \ is \ 0,$$

where

QA is a quantity of PRBs included in a first resource set, and the first resource set is a resource set whose start PRB has a smallest ID in the N1 resource sets;
QB is a quantity of PRBs included in a second resource set, and the second resource set is a resource set whose start PRB has a largest ID in the N1 resource sets;
QD is a quantity of PRBs included in a third resource set, and the third resource set is a resource set whose start PRB has a smallest ID in the N2 resource sets;
QE is a quantity of PRBs included in a fourth resource set, and the fourth resource set is a resource set whose start PRB has a largest ID in the N2 resource sets;
QC is a quantity of PRBs included in a fifth resource set, and a resource set other than the first resource set, the second resource set, the third resource set, and the fourth resource set in the (N1+N2) resource sets is one or more fifth resource sets;

$N_{PRB}^{SB}$ is the maximum quantity of PRBs included in any resource set of the second resource;

$N_1^{start}$ and $N_2^{start}$ are an ID of a start PRB occupied by the first partial frequency domain range and an ID of a start PRB occupied by the second partial frequency domain range respectively; and

$N_1^{size}$ and $N_2^{size}$ are a total quantity of PRBs included in the first partial frequency domain range and a total quantity of PRBs included in the second partial frequency domain range respectively.

With reference to the fourth aspect, in some implementations of the fourth aspect, at least one PMI is received, where a value of $N_{PRB}^{SB}$ is K0;

the at least one PMI includes a PMI corresponding to first (K0/2) PRBs in each of the one or more fifth resource sets, and the at least one PMI further includes a PMI corresponding to last (K0/2) PRBs in each of the one or more fifth resource sets;
the quantity of RBs included in the first resource set and the quantity of RBs included in the third resource set are S1 and S3 respectively, where
if S1 is less than or equal to K0/2, the at least one PMI includes one PMI corresponding to the first resource set; or
if S1 is greater than K0/2, the at least one PMI includes one PMI corresponding to first (S 1-(K0/2)) PRBs in the first resource set, and the at least one PMI further includes one PMI corresponding to last (K0/2) PRBs in the first resource set; and
if S3 is less than or equal to K0/2, the at least one PMI includes one PMI corresponding to the PRB in the third resource set; or
if S3 is greater than K0/2, the at least one PMI includes one PMI corresponding to first (S3-(K0/2)) PRBs in the third resource set, and the at least one PMI further includes one PMI corresponding to last (K0/2) PRBs in the third resource set; and
the quantity of PRBs included in the second resource set and the quantity of PRBs included in the fourth resource set are S2 and S4 respectively, where
if S2 is less than or equal to K0/2, the at least one PMI includes one PMI corresponding to the second resource set; or
if S2 is greater than K0/2, the at least one PMI includes one PMI corresponding to first (K0/2) PRBs in the second resource set, and the at least one PMI further includes one PMI corresponding to last (S2-(K0/2)) PRBs in the second resource set; and
if S4 is less than or equal to K0/2, the at least one PMI includes one PMI corresponding to the fourth resource set; or
if S4 is greater than K0/2, the at least one PMI includes one PMI corresponding to first (K0/2) PRBs in the fourth resource, and the at least one PMI further includes one PMI corresponding to last (S4-(K0/2)) PRBs in the fourth resource set.

With reference to the fourth aspect, in some implementations of the fourth aspect, the PRBs included in at least one of the N resource sets are inconsecutive, the second resource includes a third resource subset and a fourth resource subset, the third resource subset includes N1 resource sets, the fourth resource subset includes N2 resource sets, a sum of N1 and N2 is N, an ID of a start PRB in the third resource subset is smaller than an ID of a start PRB in the fourth resource subset, the third resource subset and the fourth resource subset are not adjacent in frequency domain, and the quantity of PRBs included in each of the resource sets included in the second resource and the first parameter meet the following relationship:

$$Qi = N_{PRB}^{SB} - (N_1^{start} \ mod \ N_{PRB}^{SB});$$

$$Qr = \left(N_1^{start} + N_{1+2}^{size}\right) mod \ N_{PRB}^{SB} \ \text{and} \ \left(N_1^{start} + N_{1+2}^{size}\right) mod \ N_{PRB}^{SB} \ \text{is not } 0,$$

or

$$Qr = N_{PRB}^{SB} \ \text{and} \ \left(N_1^{start} + N_{1+2}^{size}\right) mod \ N_{PRB}^{SB} \ \text{is } 0;$$

and

$$Qv = N_{PRB}^{SB},$$

where

Qi is a quantity of PRBs included in a sixth resource set, and the sixth resource set is a resource set whose start PRB has a smallest ID in the N resource sets;

Qr is a quantity of PRBs included in a seventh resource set, and the seventh resource set is a resource set whose start PRB has a largest ID in the N resource sets;

Qv is a quantity of PRBs included in an eighth resource set, and a resource set other than the sixth resource set and the seventh resource set in the N resource sets is one or more eighth resource sets;

$N_{PRB}^{SB}$ is the maximum quantity of PRBs included in any resource set of the second resource;

$N_1^{start}$ is an ID of a start PRB occupied by the third resource subset; and

$N_{1+2}^{size}$ is the total quantity of PRBs included in the third resource subset and the fourth resource subset.

With reference to the fourth aspect, in some implementations of the fourth aspect, at least one PMI is received, where a value of $N_{PRB}^{SB}$ is K0;

the at least one PMI includes a PMI corresponding to first (K0/2) PRBs in each of the one or more eighth resource sets, and the at least one PMI further includes a PMI corresponding to last (K0/2) PRBs in each of the one or more eighth resource sets;

the quantity of RBs included in the sixth resource set is J1, where

if J1 is less than or equal to K0/2, the at least one PMI includes one PMI corresponding to the sixth resource set; or

if J1 is greater than K0/2, the at least one PMI includes one PMI corresponding to first (S1-(K0/2)) PRBs in the sixth resource set, and the at least one PMI further includes one PMI corresponding to last (K0/2) PRBs in the sixth resource set; and

the quantity of PRBs included in the seventh resource set is J2, where

if J2 is less than or equal to K0/2, the at least one PMI includes one PMI corresponding to the seventh resource set; or

if J2 is greater than K0/2, the at least one PMI includes one PMI corresponding to first (K0/2) PRBs in the seventh resource set, and the at least one PMI further includes one PMI corresponding to last (S4-(K0/2)) PRBs in the seventh resource set.

It should be understood that the fourth aspect is an implementation method on a network device side corresponding to the first aspect, and explanations, supplements, and descriptions of beneficial effects of the first aspect are also applicable to the fourth aspect.

According to a fifth aspect, an embodiment of this application provides a communication method. The method may be performed by a network device, or may be performed by a chip or a circuit used in the network device. This is not limited in this application. For ease of description, an example in which the method is performed by a network device is used below for description. The method may include: determining a first resource of a CSI-RS, where the first resource includes P resource sets, the P resource sets do not overlap each other, each of the P resource sets includes at least one PRB, the P resource sets include a resource set #a, the resource set #a includes a first PRB and a second PRB, the first PRB is used for downlink transmission, the second PRB is used for uplink transmission, and P is a positive integer; and sending configuration information, where the configuration information indicates the first resource.

With reference to the fifth aspect, in some implementations of the fifth aspect, a quantity of PRBs included in each of the resource sets included in the first resource is determined based on a first parameter, and the first parameter includes at least one of the following: a maximum quantity of PRBs (subband size) included in any resource set of the first resource, an ID of a start PRB of the first resource, and a total quantity of PRBs included in the first resource.

With reference to the fifth aspect, in some implementations of the fifth aspect, the quantity of PRBs included in each of the P resource sets and the first parameter meet the following relationship:

$$Qj = N_{PRB}^{SB} - \left( N_{BWP,i}^{start} \ mod \ N_{PRB}^{SB} \right);$$

$$Qk = \left( N_{BWP,i}^{start} + N_{BWP,i}^{size} \right) mod \ N_{PRB}^{SB} \ \text{and} \ \left( N_{BWP,i}^{start} + N_{BWP,i}^{size} \right) mod \ N_{PRB}^{SB} \ \text{is not 0,}$$

or

$$Qk = N_{PRB}^{SB} \ \text{and} \ \left( N_{BWP,i}^{start} + N_{BWP,i}^{size} \right) mod \ N_{PRB}^{SB} \ \text{is 0;}$$

and

$$Ql = N_{PRB}^{SB},$$

where

Qj is a quantity of PRBs included in a ninth resource set, and the ninth resource set is a resource set ranked first in the P resource sets;

Qk is a quantity of PRBs included in a tenth resource set, and the tenth resource set is a resource set ranked last in the P resource sets;

Ql is a quantity of PRBs included in an eleventh resource set, and a resource set other than the ninth resource set and the tenth resource set in the P resource sets is one or more eleventh resource sets;

$N_{PRB}^{SB}$ is the maximum quantity of PRBs included in any one of the P resource sets;

$N_{BWP,i}^{start}$ is the ID of the start PRB occupied by the first resource; and

$N_{BWP,i}^{size}$ is the total quantity of PRBs included in the P resource sets.

With reference to the fifth aspect, in some implementations of the fifth aspect, a value of $N_{PRB}^{SB}$ is K1, K1 is an even number greater than 0, the first resource includes a second resource and a third resource, the second resource is used for downlink transmission, the third resource is used for uplink transmission, the second resource and the third resource are different frequency domain resources on a same time domain resource, the second resource includes a first partial frequency domain range and a second partial frequency domain range, an ID of a start PRB of the first partial frequency domain range is smaller than an ID of a start PRB of the second partial frequency domain range, the first partial frequency domain range overlaps N1 resource sets in frequency domain, and the second partial frequency domain range overlaps N2 resource sets in frequency domain; and the method further includes:

a twelfth resource set is a resource set whose start PRB has a largest ID in the N1 resource sets, and a thirteenth resource set is a resource set including a PRB that is overlapped between the twelfth resource set and the first partial frequency domain range;

a fourteenth resource set is a resource set whose start PRB has a smallest ID in the N2 resource sets, and a fifteenth resource set is a resource set including a PRB that is overlapped between the fourteenth resource set and the second partial frequency domain range;

the quantity of PRBs included in the ninth resource set and the quantity of PRBs included in the tenth resource set are E1 and E4 respectively, the resource set #a belongs to the one or more eleventh resource sets, and the second PRB in the resource set #a belongs to the third resource;

a quantity of PRBs included in the thirteenth resource set and a quantity of PRBs included in the fifteenth resource set are E2 and E3 respectively;

receiving at least one PMI, where

if E1 is less than or equal to K1/2, the at least one PMI includes one PMI corresponding to the ninth resource set; or if E1 is greater than K1/2, the at least one PMI includes one PMI corresponding to first (E1-(K1/2)) PRBs in the ninth resource set, and the at least one PMI further includes one PMI corresponding to last (K1/2) PRBs in the ninth resource set;

if E3 is less than or equal to K1/2, the at least one PMI includes one PMI corresponding to the fifteenth resource set; or if E3 is greater than K1/2, the at least one PMI includes one PMI corresponding to first (E3-(K1/2)) PRBs in the fifteenth resource set, and the at least one PMI further includes one PMI corresponding to last (K1/2) PRBs in the fifteenth resource set;

if E2 is less than or equal to K1/2, the at least one PMI includes one PMI corresponding to the thirteenth resource set; or if E2 is greater than K1/2, the at least one PMI includes one PMI corresponding to first (K1/2) PRBs in the thirteenth resource set, and the at least one PMI further includes one PMI corresponding to last (E2-(K1/2)) PRBs in the thirteenth resource set;

if E4 is less than or equal to K1/2, the at least one PMI includes one PMI corresponding to the PRB in the tenth resource set; or if E4 is greater than K1/2, the at least one PMI includes one PMI corresponding to first (K1/2) PRBs in the tenth resource set, and the at least one PMI further includes one PMI corresponding to last (E4-(K1/2)) PRBs in the tenth resource set; and

the at least one PMI includes a PMI corresponding to first (K1/2) PRBs in each of one or more sixteenth resource sets;

the at least one PMI includes a PMI corresponding to last (K1/2) PRBs in each of the one or more sixteenth resource sets; and a resource set other than the ninth resource set, the tenth resource set, the twelfth resource set, and the fourteenth resource set in the N1 and N2 resource sets is the one or more sixteenth resource sets, and the sixteenth resource set includes $N_{PRB}^{SB}$ PRBs.

In some implementations, first information is sent, where the first information indicates the M resource sets, or the first information indicates S resource sets.

It should be understood that the fifth aspect is an implementation method on a network device side corresponding to the second aspect, and explanations, supplements, and descriptions of beneficial effects of the second aspect are also applicable to the fifth aspect.

According to a sixth aspect, an embodiment of this application provides a communication method. The method may be performed by a network device, or may be performed by a chip or a circuit used in the network device. This is not limited in this application. For ease of description, an example in which the method is performed by a network device is used below for description. The method may include: determining a fourth resource for CLI measurement, where the fourth resource is used for downlink transmission, the fourth resource includes L resource sets, each of the L resource sets includes at least one PRB, and the L resource sets do not overlap each other; and sending configuration information, where the configuration information indicates the fourth resource.

With reference to the sixth aspect, in some implementations of the sixth aspect, in the L resource sets, at least two resource sets include different maximum quantities of PRBs.

With reference to the sixth aspect, in some implementations of the sixth aspect, an index of a first value is received, where the first value is an average value of CLIs respectively corresponding to the L resource sets; and a second value corresponding to a difference between an index of a first measurement result and the index of the first value is received, where the second value indicates an interval in which the difference falls or the difference, and the first measurement result is measurement results respectively corresponding to the L resource sets.

With reference to the sixth aspect, in some implementations of the sixth aspect, a correspondence between the second value and the L resource sets is received.

It should be understood that the sixth aspect is an implementation method on a network device side corresponding to the third aspect, and explanations, supplements, and descriptions of beneficial effects of the third aspect are also applicable to the sixth aspect.

According to a seventh aspect, an embodiment of this application provides a communication apparatus. The apparatus includes a processing unit and a transceiver unit. The transceiver unit may be configured to: receive configuration information, where the configuration information indicates a first resource of a CSI-RS, the first resource includes a second resource and a third resource, the second resource is used for downlink transmission, the third resource is used for uplink transmission, the second resource and the third resource are different frequency domain resources on a same time domain resource, the second resource includes N resource sets, each of the N resource sets includes at least one physical resource block PRB, the N resource sets do not overlap each other, and PRBs included in each of the N resource sets are consecutive, or PRBs included in at least one of the N resource sets are inconsecutive; and separately measure the CSI-RS on M resource sets in the N resource sets, where M is less than or equal to N, and M and N are positive integers.

With reference to the seventh aspect, in some possible implementations of the seventh aspect, a value of $N_{PRB}^{SB}$ is K0. The processing unit is configured to perform measurement on first (K0/2) PRBs in each of the one or more fifth resource sets. The transceiver unit is configured to report a 1st PMI for the (K0/2) PRBs. The processing unit is further configured to perform measurement on last (K0/2) PRBs in each of the one or more fifth resource sets. The transceiver unit is further configured to report a 2nd PMI for the (K0/2) PRBs.

In a case in which a quantity of RBs included in a first resource set and a quantity of RBs included in a third resource set are S1 and S3 respectively,

if S1 is less than or equal to K0/2, the processing unit is configured to perform measurement on the PRB in the first resource set, and the transceiver unit is configured to report one PMI for the first resource set; or
if S1 is greater than K0/2, the processing unit is configured to perform measurement on first (S1-(K0/2)) PRBs in the first resource set, the transceiver unit reports a 1st PMI for the (S1-(K0/2)) PRBs, the processing unit is configured to perform measurement on last (K0/2) PRBs in the first resource set, and the transceiver unit reports a 2nd PMI for the (K0/2) PRBs; and
if S3 is less than or equal to K0/2, the processing unit is configured to perform measurement on the PRB in the third resource set, and the transceiver unit is configured to report one PMI for the third resource set; or
if S3 is greater than K0/2, the processing unit is configured to perform measurement on first (S3-(K0/2)) PRBs in the third resource set, the transceiver unit is configured to report a 1st PMI for the (S3-(K0/2)) PRBs, the processing unit is configured to perform measurement on last (K0/2) PRBs in the third resource set, and the transceiver unit is configured to report a 2nd PMI for the (K0/2) PRBs.

In a case in which a quantity of PRBs included in a second resource set and a quantity of PRBs included in a fourth resource set are S2 and S4 respectively,

if S2 is less than or equal to K0/2, the processing unit is configured to perform measurement on the PRB in the second resource set, and the transceiver unit is configured to report one PMI for the second resource set; or

if S2 is greater than K0/2, the processing unit is configured to perform measurement on first (K0/2) PRBs in the second resource set, the transceiver unit is configured to report a 1st PMI for the (K0/2) PRBs, the processing unit is configured to perform measurement on last (S2-(K0/2)) PRBs in the second resource set, and the transceiver unit is configured to report a 2nd PMI for the (S2-(K0/2)) PRBs; and

if S4 is less than or equal to K0/2, the processing unit is configured to perform measurement on the PRB in the fourth resource set, and the transceiver unit is configured to report one PMI for the resource set; or

if S4 is greater than K0/2, the processing unit is configured to perform measurement on first (K0/2) PRBs in the fourth resource set, the transceiver unit is configured to report a 1st PMI for the (K0/2) PRBs, and perform measurement on last (S4-(K0/2)) PRBs in the fourth resource set, and the transceiver unit is configured to report a 2nd PMI for the (S4-(K0/2)) PRBs.

With reference to the seventh aspect, in some possible implementations of the seventh aspect, a value of $N_{PRB}^{SB}$ is K0.

The processing unit is configured to perform measurement on first (K0/2) PRBs in each of one or more eighth resource sets, and the transceiver unit is configured to report a 1st PMI for the (K0/2) PRBs.

The processing unit is configured to perform measurement on last (K0/2) PRBs in each of the one or more eighth resource sets, and the transceiver unit is configured to report a 2nd PMI for the (K0/2) PRBs.

When a quantity of RBs included in a sixth resource set is J1,

if J1 is less than or equal to K0/2, the processing unit is configured to perform measurement on the PRB in the sixth resource set, and the transceiver unit is configured to report one PMI for the resource set; or

if J1 is greater than K0/2, the processing unit is configured to perform measurement on first (S1-(K0/2)) PRBs in the sixth resource set, the transceiver unit is configured to report a 1st PMI for the (S 1-(K0/2)) PRBs, the processing unit is configured to perform measurement on last (K0/2) PRBs in the sixth resource set, and the transceiver unit is configured to report a 2nd PMI for the (K0/2) PRBs.

When a quantity of PRBs included in a seventh resource set is J2,

if J2 is less than or equal to K0/2, the processing unit is configured to perform measurement on the PRB in the seventh resource set, and the transceiver unit is configured to report one PMI for the resource set; or

if J2 is greater than K0/2, the processing unit is configured to perform measurement on first (K0/2) PRBs in the seventh resource set, the transceiver unit is configured to report a 1st PMI for the (K0/2) PRBs, the processing unit is configured to perform measurement on last (S4-(K0/2)) PRBs in the seventh resource set, and the transceiver unit is configured to report a 2nd PMI for the (S4-(K0/2)) PRBs.

It should be understood that the seventh aspect is an implementation method on a terminal apparatus side corresponding to the first aspect, and explanations, supplements, and descriptions of beneficial effects of the first aspect are also applicable to the seventh aspect.

According to an eighth aspect, an embodiment of this application provides a communication apparatus. The apparatus includes a processing unit and a transceiver unit. The transceiver unit may be configured to: receive configuration information, where the configuration information indicates a first resource of a CSI-RS, the first resource includes P resource sets, the P resource sets do not overlap each other, each of the P resource sets includes at least one PRB, the P resource sets include a resource set #a, the resource set #a includes a first PRB and a second PRB, the first PRB is used for downlink transmission, the second PRB is used for uplink transmission, and P is a positive integer; and separately measure the CSI-RS on PRBs that are used for downlink transmission and that are included in S resource sets in the P resource sets, where S is a positive integer less than P.

With reference to the eighth aspect, in some possible implementations of the eighth aspect, a value of $N_{PRB}^{SB}$ is K1, K1 is an even number greater than 0, the first resource includes a second resource and a third resource, the second resource is used for downlink transmission, the third resource is used for uplink transmission, the second resource and the third resource are different frequency domain resources on a same time domain resource, the second resource includes a first partial frequency domain range and a second partial frequency domain range, an ID of a start PRB of the first partial frequency domain range is smaller than an ID of a start PRB of the second partial frequency domain range, the first partial frequency domain range overlaps N1 resource sets in frequency domain, and the second partial frequency domain range overlaps N2 resource sets in frequency domain; and the method further includes:

a twelfth resource set is a resource set whose start PRB has a largest ID in the N1 resource sets, and a thirteenth resource set is a resource set including a PRB that is overlapped between the twelfth resource set and the first partial frequency domain range;

a fourteenth resource set is a resource set whose start PRB has a smallest ID in the N2 resource sets, and a fifteenth resource set is a resource set including a PRB that is overlapped between the fourteenth resource set and the second partial frequency domain range;

a quantity of PRBs included in a ninth resource set and a quantity of PRBs included in the tenth resource set are E1 and E4 respectively, the resource set #a belongs to one or more eleventh resource sets, and the second PRB in the resource set #a belongs to the third resource;

a quantity of PRBs included in the thirteenth resource set and a quantity of PRBs included in the fifteenth resource set are E2 and E3 respectively;

if E1 is less than or equal to K1/2, the processing unit is configured to perform measurement on the PRB in the ninth resource set, and the transceiver unit is configured to report one PMI for the resource set; or if E1 is greater than K1/2, the processing unit is configured to perform measurement on first (E1-(K1/2)) PRBs in the ninth resource set, the transceiver unit is configured to report a 1st PMI for the (E1-(K1/2)) PRBs, the processing unit is configured to perform measurement on last (K1/2) PRBs in the ninth resource set, and the transceiver unit is configured to report a 2nd PMI for the (K0/2) PRBs;

if E3 is less than or equal to K1/2, the processing unit is configured to perform measurement on the PRB in the fifteenth resource set, and the transceiver unit is configured to report one PMI for the resource set; or if E3 is greater than K1/2, the processing unit is configured to perform measurement on first (E3-(K1/2)) PRBs in the fifteenth resource set, the transceiver unit is configured to report a 1st PMI for the (E3-(K1/2)) PRBs, the processing unit is configured to perform measurement on last (K1/2) PRBs in the fifteenth resource set, and the transceiver unit is configured to report a 2nd PMI for the (K0/2) PRBs;

if E2 is less than or equal to K1/2, the processing unit is configured to perform measurement on the PRB in the thirteenth resource set, and the transceiver unit is configured to report one PMI for the resource set; or if E2 is greater than K1/2, the processing unit is configured to perform measurement on first (K1/2) PRBs in the thirteenth resource set, the transceiver unit is configured to report a 1st PMI for the (K1/2) PRBs, the processing unit is configured to perform measurement on last (E2-(K1/2)) PRBs in the thirteenth resource set, and the transceiver unit is configured to report a 2nd PMI for the (E2-(K1/2)) PRBs;

if E4 is less than or equal to K1/2, the processing unit is configured to perform measurement on the PRB in the tenth resource set, and the transceiver unit is configured to report one PMI for the resource set; or if E4 is greater than K1/2, the processing unit is configured to perform measurement on first (K1/2) PRBs in the tenth resource set, the transceiver unit is configured to report a 1st PMI for the (K1/2) PRBs, the processing unit is configured to perform measurement on last (E4-(K1/2)) PRBs in the tenth resource set, and the transceiver unit is configured to report a 2nd PMI for the (E4-(K1/2)) PRBs; and

the processing unit is configured to perform measurement on first (K1/2) PRBs in each of one or more sixteenth resource sets, the transceiver unit is configured to report a 1st PMI for the (K1/2) PRBs, the processing unit is configured to perform measurement on last (K1/2) PRBs in each of the one or more sixteenth resource sets, and the transceiver unit is configured to report a 2nd PMI for the (K1/2) PRBs, where a resource set other than the ninth resource set, the tenth resource set, the twelfth resource set, and the fourteenth resource set in the N1 and N2 resource sets is the one or more sixteenth resource sets, and the sixteenth resource set includes $N_{PRB}^{SB}$ PRBs.

In some possible implementations, the transceiver unit is further configured to receive first information, where the first information indicates the M resource sets, or the first information indicates the S resource sets.

It should be understood that the eighth aspect is an implementation method on a terminal apparatus side corresponding to the second aspect, and explanations, supplements, and descriptions of beneficial effects of the second aspect are also applicable to the eighth aspect.

According to a ninth aspect, an embodiment of this application provides a communication apparatus. The apparatus includes a processing unit and a transceiver unit. The transceiver unit may be configured to: receive configuration information, where the configuration information indicates a fourth resource for CLI measurement, the fourth resource is used for downlink transmission, the fourth resource includes L resource sets, each of the L resource sets includes at least one PRB, and the L resource sets do not overlap each other; and separately perform CLI measurement on the L resource sets.

With reference to the ninth aspect, in some possible implementations of the ninth aspect, the transceiver unit is configured to send an index of a first value, where the first value is an average value of CLIs respectively corresponding to the L resource sets; and the transceiver unit is further configured to send a second value corresponding to a difference between an index of a first measurement result and the index of the first value, where the second value indicates an interval in which the difference falls or the difference, and the first measurement result is measurement results respectively corresponding to the L resource sets.

With reference to the ninth aspect, in some implementations of the ninth aspect, the transceiver unit is further configured to send a correspondence between the second value and the L resource sets.

It should be understood that the ninth aspect is an implementation method on a terminal apparatus side corresponding to the third aspect, and explanations, supplements, and descriptions of beneficial effects of the third aspect are also applicable to the ninth aspect.

According to a tenth aspect, an embodiment of this application provides a communication apparatus. The apparatus includes a processing unit and a transceiver unit. The processing unit is configured to determine a first resource of a CSI-RS, where the first resource includes a second resource and a third resource, the second resource is used for downlink transmission, the third resource is used for uplink transmission, the second resource and the third resource are different frequency domain resources on a same time domain resource, the second resource includes N resource sets, each of the N resource sets includes at least one physical resource block PRB, the N resource sets do not overlap each other, and PRBs included in each of the N resource sets are consecutive, or PRBs included in at least one of the N resource sets are inconsecutive. The transceiver unit may be configured to send configuration information, where the configuration information indicates the first resource.

With reference to the tenth aspect, in some implementations of the tenth aspect, the transceiver unit is further configured to receive at least one PMI.

It should be understood that the tenth aspect is an implementation method of a network apparatus corresponding to the fourth aspect, and explanations, supplements, and descriptions of beneficial effects of the fourth aspect are also applicable to the tenth aspect.

According to an eleventh aspect, an embodiment of this application provides a communication apparatus. The apparatus includes a processing unit and a transceiver unit. The processing unit is configured to determine a first resource of a CSI-RS, the first resource includes P resource sets, the P resource sets do not overlap each other, each of the P resource sets includes at least one PRB, the P resource sets include a ninth resource set, the ninth resource set includes a first PRB and a second PRB, the first PRB is used for downlink transmission, the second PRB is used for uplink transmission, and P is a positive integer. The transceiver unit is configured to send configuration information, where the configuration information indicates the first resource.

With reference to the eleventh aspect, in some implementations of the eleventh aspect, the transceiver unit is further configured to receive at least one PMI.

In some implementations, the transceiver unit is further configured to send first information, where the first information indicates the M resource sets, or the first information indicates S resource sets.

It should be understood that the eleventh aspect is an implementation method of a network apparatus corresponding to the fifth aspect, and explanations, supplements, and descriptions of beneficial effects of the fifth aspect are also applicable to the eleventh aspect.

According to a twelfth aspect, an embodiment of this application provides a communication apparatus. The apparatus includes a processing unit and a transceiver unit. The processing unit is configured to determine a fourth resource for CLI measurement, where the fourth resource is used for downlink transmission, the fourth resource includes L resource sets, each of the L resource sets includes at least one PRB, and the L resource sets do not overlap each other. The transceiver unit is configured to send configuration information, where the configuration information indicates the fourth resource.

With reference to the twelfth aspect, in some implementations of the twelfth aspect, the transceiver unit is configured to receive an index of a first value, where the first value is an average value of CLIs respectively corresponding to the L resource sets; and the transceiver unit is further configured to receive a second value corresponding to a difference between an index of a first measurement result and the index of the first value, where the second value indicates an interval in which the difference falls or the difference, and the first measurement result is measurement results respectively corresponding to the L resource sets.

With reference to the twelfth aspect, in some implementations of the twelfth aspect, the transceiver unit is further configured to receive a correspondence between the second value and the L resource sets.

It should be understood that the twelfth aspect is an implementation method of a network apparatus corresponding to the sixth aspect, and explanations, supplements, and descriptions of beneficial effects of the sixth aspect are also applicable to the twelfth aspect.

According to a thirteenth aspect, an embodiment of this application provides a communication apparatus, including an interface circuit and a processor. The interface circuit is configured to implement functions of the transceiver module in the seventh aspect, the eighth aspect, or the ninth aspect, and the processor is configured to implement functions of the processing module in the seventh aspect, the eighth aspect, or the ninth aspect.

According to a fourteenth aspect, an embodiment of this application provides a communication apparatus, including an interface circuit and a processor. The interface circuit is configured to implement functions of the transceiver module in the tenth aspect, the eleventh aspect, or the twelfth aspect, and the processor is configured to implement functions of the processing module in the tenth aspect, the eleventh aspect, or the twelfth aspect.

According to a fifteenth aspect, an embodiment of this application provides a computer-readable medium. The computer-readable medium stores program code executed by a terminal device, and the program code includes instructions used to perform the method according to the first aspect, the second aspect, or the third aspect, or any possible implementation of the first aspect, the second aspect, or the third aspect, or all possible implementations of the first aspect, the second aspect, or the third aspect.

According to a sixteenth aspect, an embodiment of this application provides a computer-readable medium. The computer-readable medium stores program code executed by a network device, and the program code includes instructions used to perform the method according to the fourth aspect, the fifth aspect, or the sixth aspect, or any possible implementation of the fourth aspect, the fifth aspect, or the sixth aspect, or all possible implementations of the fourth aspect, the fifth aspect, or the sixth aspect.

According to a seventeenth aspect, a computer program product storing computer-readable instructions is provided. When the computer-readable instructions are run on a computer, the computer is enabled to perform the method according to the first aspect, the second aspect, or the third aspect, or any possible implementation of the first aspect, the second aspect, or the third aspect, or all possible implementations of the first aspect, the second aspect, or the third aspect.

According to an eighteenth aspect, a computer program product storing computer-readable instructions is provided. When the computer-readable instructions are run on a computer, the computer is enabled to perform the method according to the fourth aspect, the fifth aspect, or the sixth aspect, or any possible implementation of the fourth aspect, the fifth aspect, or the sixth aspect, or all possible implementations of the fourth aspect, the fifth aspect, or the sixth aspect.

According to a nineteenth aspect, a communication system is provided, where the communication system includes an apparatus that has various possible design functions and can implement the method according to the first aspect, the second aspect, or the third aspect, or any possible implementation of the first aspect, the second aspect, or the third aspect, or all possible implementations of the first aspect, the second aspect, or the third aspect, and an apparatus that has various possible design functions and can implement the method according to the fourth aspect, the fifth aspect, or the sixth aspect, or any possible implementation of the fourth aspect, the fifth aspect, or the sixth aspect, or all possible implementations of the fourth aspect, the fifth aspect, or the sixth aspect.

According to a twentieth aspect, a processor is provided, configured to be coupled to a memory, to perform the method according to the first aspect, the second aspect, or the third aspect, or any possible implementation of the first aspect, the second aspect, or the third aspect, or all possible implementations of the first aspect, the second aspect, or the third aspect.

According to a twenty-first aspect, a processor is provided, configured to be coupled to a memory, to perform the method according to the fourth aspect, the fifth aspect, or the sixth aspect, or any possible implementation of the fourth aspect, the fifth aspect, or the sixth aspect, or all possible implementations of the fourth aspect, the fifth aspect, or the sixth aspect.

According to a twenty-second aspect, a chip system is provided. The chip system includes a processor, and may further include a memory, configured to execute a computer program or instructions stored in the memory, so that the chip system implements the method according to the first aspect, the second aspect, the third aspect, the fourth aspect, the fifth aspect, the sixth aspect, or any possible implementation of any one of the aspects. The chip system may include a chip, or may include a chip and another discrete component.

According to a twenty-third aspect, a communication system is provided, including at least one communication apparatus according to the seventh aspect, the eighth aspect, or the ninth aspect and/or at least one communication apparatus according to the tenth aspect, the eleventh aspect, or the twelfth aspect, where the communication system is configured to implement the first aspect, the second aspect, the third aspect, the fourth aspect, the fifth aspect, or the sixth aspect, or any possible implementation of the first aspect, the second aspect, the third aspect, the fourth aspect, the fifth aspect, or the sixth aspect, or all possible implementations of the first aspect, the second aspect, the third aspect, the fourth aspect, the fifth aspect, or the sixth aspect.

According to a twenty-fourth aspect, a communication method is provided, including: A network device sends configuration information, and a terminal device receives the configuration information, where the configuration information indicates a first resource of a channel state information-reference signal CSI-RS, the first resource includes a second resource and a third resource, the second resource is used for downlink transmission, the third resource is used for uplink transmission, the second resource and the third resource are different frequency domain resources on a same time domain resource, the second resource includes N resource sets, each of the N resource sets includes at least one physical resource block PRB, the N resource sets do not overlap each other, and PRBs included in each of the N resource sets are consecutive, or PRBs included in at least one of the N resource sets are inconsecutive. The network device sends the CSI-RS on M resource sets in the N resource sets, and the terminal device separately measures the CSI-RS on the M resource sets in the N resource sets, where M is less than or equal to N, and M and N are positive integers.

For optional implementations and beneficial effects of the twenty-fourth aspect, refer to descriptions of the first aspect and the fourth aspect. Details are not described herein again.

According to a twenty-fifth aspect, a communication method is provided, including: A network device sends configuration information, and a terminal device receives the configuration information, where the configuration information indicates a first resource of a CSI-RS, the first resource includes P resource sets, the P resource sets do not overlap each other, each of the P resource sets includes at least one PRB, the P resource sets include a resource set #a, the resource set #a includes a first PRB and a second PRB, the first PRB is used for downlink transmission, the second PRB is used for uplink transmission, and P is a positive integer. The network device sends a CSI-RS on PRBs that are used for downlink transmission and that are included in S resource sets in the P resource sets, and the terminal device separately measures the CSI-RS on the PRBs that are used for downlink transmission and that are included in the S resource sets in the P resource sets, where S is a positive integer less than P.

For optional implementations and beneficial effects of the twenty-fifth aspect, refer to descriptions of the second aspect and the fifth aspect. Details are not described herein again.

According to a twenty-sixth aspect, a communication method is provided, including: A network device sends configuration information and a terminal device receives the configuration information, where the configuration information indicates a fourth resource for CLI measurement, the fourth resource is used for downlink transmission, the fourth resource includes L resource sets, each of the L resource sets includes at least one PRB, and the L resource sets do not overlap each other; and the terminal device separately performs CLI measurement on the L resource sets.

For optional implementations and beneficial effects of the twenty-fifth aspect, refer to descriptions of the third aspect and the sixth aspect. Details are not described herein again.

## BRIEF DESCRIPTION OF DRAWINGS

FIG. 1 shows a system architecture to which embodiments of this application are applicable;
FIG. 2 is a distribution diagram of a time-frequency resource;
FIG. 3 is another distribution diagram of a time-frequency resource;
FIG. 4 is another distribution diagram of a time-frequency resource;
FIG. 5 shows another system architecture to which embodiments of this application are applicable;
FIG. 6 is a distribution diagram of a frequency domain resource;
FIG. 7 is another distribution diagram of a time-frequency resource;
FIG. 8 shows another system architecture to which embodiments of this application are applicable;
FIG. 9 is a diagram of cell interference;
FIG. 10 is a distribution diagram of cross-link interference;
FIG. 11 is a diagram of a communication method according to an embodiment of this application;
FIG. 12(a) is a distribution diagram of a time-frequency resource according to an embodiment of this application;
FIG. 12(b) is another distribution diagram of a time-frequency resource according to an embodiment of this application;
FIG. 12(c) is another distribution diagram of a time-frequency resource according to an embodiment of this application;
FIG. 13 is another distribution diagram of a time-frequency resource according to an embodiment of this application;
FIG. 14 is another distribution diagram of a time-frequency resource according to an embodiment of this application;
FIG. 15 is another distribution diagram of a time-frequency resource according to an embodiment of this application;
FIG. 16 is another distribution diagram of a time-frequency resource according to an embodiment of this application;
FIG. 17 is another distribution diagram of a time-frequency resource according to an embodiment of this application;
FIG. 18 is a diagram of another communication method according to an embodiment of this application;
FIG. 19 is another distribution diagram of a time-frequency resource according to an embodiment of this application;
FIG. 20 is a diagram of another communication method according to an embodiment of this application;
FIG. 21 is a block diagram of a communication apparatus according to an embodiment of this application; and
FIG. 22 is a block diagram of another communication apparatus according to an embodiment of this application.

## DESCRIPTION OF EMBODIMENTS

The following describes the technical solutions of embodiments in this application with reference to the accompanying drawings.

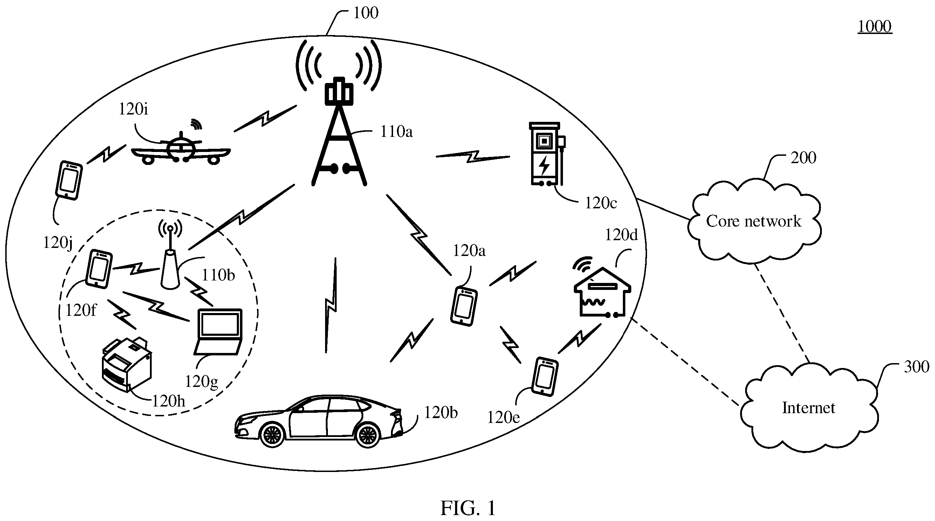

FIG. 1 is a diagram of an architecture of a communication system 1000 to which embodiments of this application are applicable. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only an example diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, remote medical, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on land, including an indoor or outdoor scenario, and a handheld or a vehicle-mounted scenario; or may be deployed on water; or may be deployed on an airplane, a balloon, and a man-made satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, a terminal 120i is a base station. However, for the base station 110a, 120i is a terminal. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a function of a base station, and 120a to 120j in FIG. 1 may be referred to as a communication apparatus having a function of a terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

The technical solutions provided in embodiments of this application may be applied to wireless communication between communication devices. The wireless communication between communication devices may include wireless communication between a network device and a terminal, wireless communication between network devices, and wireless communication between terminal devices. In embodiments of this application, the term "wireless communication" may also be briefly referred to as "communication", and the term "communication" may also be described as "data transmission", "information transmission", or "transmission".

It may be understood that, in embodiments of this application, a physical uplink shared channel (physical downlink shared channel, PDSCH), a physical downlink control channel (physical downlink control channel, PDCCH), and a physical uplink shared channel (physical uplink shared channel, PUSCH) are merely respectively used as examples of a downlink data channel, a downlink control channel, and an uplink data channel. In different systems and different scenarios, a data channel and a control channel may have different names. This is not limited in embodiments of this application.

In a communication process, the base station and the terminal may obtain channel state information (channel state information, CSI) based on a measurement signal, and then perform data receiving and sending based on the obtained channel state information. A channel measurement idea and an interference measurement idea in NR are mainly to send a reference signal (Reference signal, RS) of a known sequence to measure a channel or interference. In the NR, a downlink channel is usually measured based on a channel state information-reference signal (CSI-Reference Signal, CSI-RS), and an uplink channel is usually measured based on a channel sounding reference signal (sounding reference signal, SRS). Certainly, for a time division duplexing (time division duplexing, TDD) system, a channel state may also be obtained based on reciprocity between the uplink channel and the downlink channel. This application is mainly for downlink channel/interference measurement.

The downlink channel is usually measured based on the CSI-RS. The base station sends the CSI-RS, and after receiving the CSI-RS, the UE performs channel measurement based on the CSI-RS. There may be two methods for interference measurement: 1. The UE receives the CSI-RS sent by the base station for measurement, where a CSI-RS for interference measurement may be the same as or different from a CSI-RS for channel measurement; and 2. The UE receives a zero-power CSI-RS (ZP-CSI-RS) indicator, where a zero-power CSI-RS indicates that the base station does not send any content at a time-frequency location indicated by the reference signal, so that content received by the UE at this time-frequency location is interference and noise. The UE calculates, based on a received reference signal, an indicator that needs to be measured, for example, a rank indicator (rank indicator), a pre-coding matrix indicator (pre-coding matrix indicator, PMI), or a channel quantity indicator (channel quantity indicator, CQI), and then reports the content. A group of reported indicators are referred to as a CSI report. The base station receives the CSI report, obtains channel state information present when the base station sends a downlink signal, and sends the downlink signal to the terminal with reference to the CSI report.

For ease of understanding the solutions in embodiments of this application, related concepts are explained.

1. Channel state information report configuration (CSI-ReportConfig): The channel state information report configuration is mainly used to configure a parameter related to channel state reporting, for example, a reporting type or a reporting measurement indicator. A reporting configuration identity (reportConfigId) is an identity (identity, ID) number of the CSI-ReportConfig and is used to mark the CSI-ReportConfig. A resource for channel measurement (resourcesForChannelMeasurement) is used to configure a channel state information-reference signal (CSI-Reference Signal, CSI-RS) resource for channel measurement and is associated with a resource configuration based on a CSI-ResourceConfigId. A resource for interference measurement (CSI-IM-RessourcesForInterference) is used to configure a CSI-RS resource for interference measurement and is associated with a resource configuration based on a CSI-ResourceConfigId.

Optionally, a CSI reporting parameter may include a CSI reporting type (reportConfigType), a CSI reporting quantity (reportQuantity), and the like. The CSI reporting type may be classified into periodic (periodic) reporting, semi-persistent (semiPersistentOnPUCCH or semiPersistentOnPUSCH) reporting, and aperiodic (aperiodic) reporting. Based on different reporting quantity configurations, the network device may allow the terminal device to report different CSIs, including a CSI-RS resource indicator (CSI-RS resource indicator, CRI), a rank indicator (rank indicator, RI), a pre-coding matrix indicator (Pre-coding Matrix Indicator, PMI), a channel quality indicator (Channel Quality Indicator, CQI), and the like.

2. Channel state information resource configuration (CSI-ResourceConfig): The channel state information resource configuration is used to configure information related to a resource for CSI measurement, and may include a resource identity (CSI-ResourceConfigId), a resource set list (CSI-RS-ResourceSetList), and/or the like. The CSI-Resource-ConfigId is used to mark the csi-ResourceConfig, and the CSI-RS-ResourceSetList may include a resource set for channel measurement and a resource set for interference measurement.

3. Channel state information (channel state information, CSI): The channel state information indicates that, in a process in which a signal is transmitted from a transmit end to a receive end through a radio channel, the signal may experience scattering, reflection, and energy attenuation with distance, resulting in fading. The CSI represents a characteristic of the radio channel, and may include at least one of a CQI, a PMI, a CRI, a synchronization signal and physical broadcast channel block (synchronization signal and physical broadcast channel block, SSB) resource indicator (SSB resource indicator, SSBRI), a layer indicator (layer indicator, LI), an RI, an L1-reference signal received power (reference signal received power, RSRP), and an L1-signal to interference plus noise ratio (signal to interference plus noise ratio, SINR). The CSI may be sent by the terminal device to the network device through a physical uplink control channel (physical uplink control channel, PUCCH) or a physical uplink shared channel (physical uplink shared channel, PUSCH). For ease of description, in the following embodiments, an example in which the CSI is a PMI is used for description. The reported PMI in the following embodiment may be replaced with the CSI or any one or more parameters included in the CSI.

4. CSI report (CSI report): The CSI report is sent by the terminal to the base station, and is used by the network device to learn of a channel state present when the network device sends downlink information to the terminal device. One CSI report indicates that the terminal device feeds back one CSI. Different CSIs may correspond to different frequency ranges, different transmission assumptions, or different reporting modes.

Generally, one CSI report may be associated with one reference signal resource for channel measurement, or may be associated with one or more reference signal resources for interference measurement. One CSI report corresponds to one transmission resource, namely, a time-frequency resource used by the terminal device to send the CSI.

5. Reference signal: The reference signal is a known signal provided by a transmit end for a receive end for channel estimation or channel sounding. In this embodiment of this application, the reference signal may be used for channel measurement, interference measurement, and the like, for example, may be used to measure parameters such as reference signal received quality (reference signal received quality, RSRQ), an SINR, a CQI, and/or a PMI.

6. Reference signal resource: The reference signal resource includes at least one of a time-frequency resource, an antenna port, a power resource, scrambling code, and the like of a reference signal. The network device may send the reference signal to the terminal device based on the reference signal resource, and correspondingly, the terminal device may receive the reference signal based on the reference signal resource.

The reference signal in embodiments of this application may include one or more of the following reference signals: a channel state information-reference signal (channel state information-reference signal, CSI-RS), an SSB, or a sounding reference signal (sounding reference signal, SRS). Correspondingly, the reference signal resource may include a CSI-RS resource, an SSB resource, or an SRS resource.

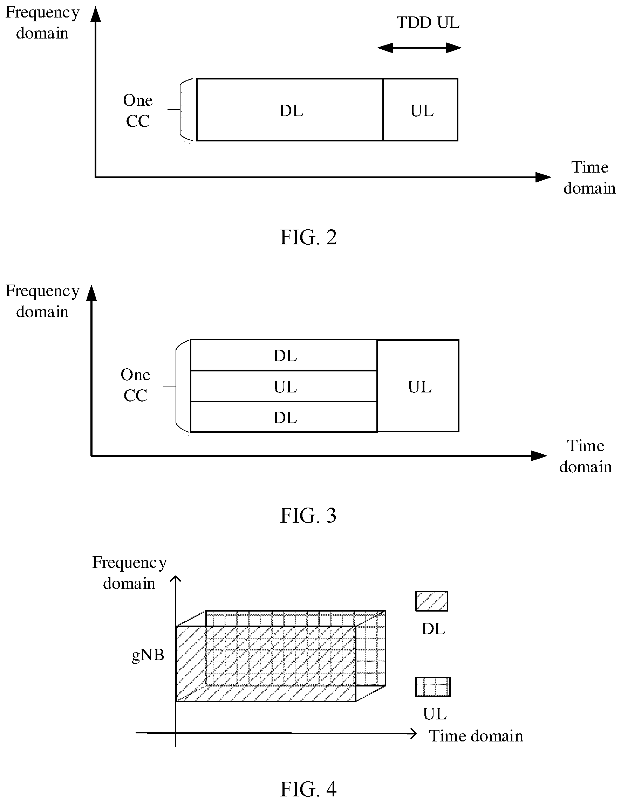

A 5G new radio (New Radio, NR) wireless communication system is deployed in medium and high frequency bands, and achieves a high data rate and low latency at a large bandwidth. In the time division duplexing (Time Division Duplexing, TDD) system, a downlink (DL, downlink) usually occupies a main time domain resource, which causes coverage imbalance between the DL and an uplink (UL, uplink). As shown in FIG. 2, a time domain resource occupied by the DL is far greater than a time domain resource occupied by the UL. The TDD system has poorer uplink coverage and higher uplink latency than a frequency division duplexing (Frequency Division Duplexing, FDD) system. To resolve problems of uplink coverage and latency of the TDD system, a subband full duplex (subband full duplex, SBFD) solution and a co-channel full duplex (single frequency full duplex, SFFD) solution are proposed in Rel-18. In the SBFD solution, one component carrier (Component Carrier, CC) is divided into a plurality of frequency domain ranges, and transmission directions of different frequency domain ranges may be different. FIG. 3 shows a typical SBFD solution. A resource in a middle frequency domain range is used for UL transmission, and resources in two uppermost and lowermost frequency domain ranges are used for DL transmission.

In the SFFD solution, sending and receiving may be performed simultaneously on one time domain unit (for example, one symbol). FIG. 4 shows a typical SFFD solution. Simultaneous receiving and sending on one symbol may be implemented on an entire CC. To be specific, in the SBFD, different frequency domain resources (frequency domain ranges) are used for uplink transmission and downlink transmission, and in the SFFD, a same frequency domain resource (frequency domain range) is used for uplink transmission and downlink transmission.

Currently, communication may be performed by using a solution of "subband full duplex on a network device side and half duplex on a terminal device side". The half duplex on a terminal device means that, in the TDD system, the terminal device can only perform receiving or sending on one time domain unit (symbol), and cannot perform receiving and sending simultaneously. In this solution, an uplink transmission resource available to the terminal device increases, so that UL coverage can be effectively improved, and UL latency can be reduced.

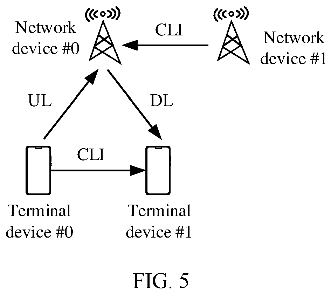

However, this solution brings a problem to channel measurement. Specifically, when the SBFD solution is used, uplink transmission and downlink transmission coexist on one symbol, causing cross-link interference (cross-link interference, CLI) between UEs, for example, interference caused by a UL link to a DL link in FIG. 5, that is, UE-UE CLI. When a distance between terminal devices is short, UE-UE CLI interference is large, affecting downlink performance. A technology such as filtering, scheduling coordination, or beam coordination may be used to reduce impact of CLI interference on performance such as an average throughput of a network. In addition, in the foregoing scenario, there is also interference of a DL signal of a network device #1 with a UL signal of a network device #0. The interference may be referred to as cell-cell CLI interference.

Currently, a basic procedure for UE CSI measurement and reporting is as follows:
The base station sends a CSI-RS reference signal based on a configuration.

UE performs CSI-RS measurement (including channel measurement and interference measurement).

The UE reports a CSI result such as an LI, a CQI, a PMI, an RI, and/or a CRI.

The base station performs scheduling-related processing based on the reported CSI result, for example, may schedule a modulation and coding scheme (modulation and coding scheme, MCS), resource block (resource block, RB) allocation, or beamforming based on channel quality.

The following describes a current CSI-RS reporting manner.

Currently, a CSI may be reported in two manners: wideband reporting and subband reporting.

The subband (subband) herein is $N_{PRB}^{SB}$ contiguous PRBs (contiguous PRBs). A maximum quantity (subband size, also referred to as a subband granularity) of PRBs that can be included in each subband may be jointly determined based on a bandwidth of bandwidth part (Bandwidth Part, BWP) and an indication of high layer signaling. For example, an optional value of $N_{PRB}^{SB}$ may be determined based on a quantity of PRBs included in the BWP (for example, in a 2nd column in the table, when the BWP includes 36 PRBs, the optional value of the subband size is 4 or 8 PRBs).

Table 1 Relationship between the subband size and the quantity of PRBs included in the BWP

| BWP (PRBs) | Subband granularity (PRBs) |
|---|---|
| 24-72 | 4, 8 |
| 73-144 | 8, 16 |
| 145-275 | 16, 32 |

A form of the high layer signaling may be subbandSize ENUMERATED {value 1, value 2}, and is used to determine which one of the two subband sizes is used. For example, if subbandSize is configured as a value 1, a 1st value in the two subband sizes is selected.

One BWP may be divided into a plurality of subbands. A division manner is as follows:

Size of a 1st subband: $N_{PRB}^{SB} - \left(N_{BWP,i}^{start} \bmod N_{PRB}^{SB}\right)$

Size of a last subband:

when $\left(N_{BWP,i}^{start} + N_{BWP,i}^{size}\right) \bmod N_{PRB}^{SB}$ is not 0, the size of the last subband is $\left(N_{BWP,i}^{start} + N_{BWP,i}^{size}\right) \bmod N_{PRB}^{SB}$; or

when a value of $\left(N_{BWP,i}^{start} + N_{BWP,i}^{size}\right) \bmod N_{PRB}^{SB}$ is 0, the size of the last subband is $N_{PRB}^{SB}$, where $N_{PRB}^{SB}$ is the subband size, $N_{BWP,i}^{start}$ is an ID of a start PRB of the BWP, and $N_{BWP,i}^{size}$ is the quantity of PRBs included in the BWP.

Sizes of other subbands: $N_{PRB}^{SB}$.

An example is as follows:
One CC includes 39 PRBs.

One BWP includes 26 PRBs, where $N_{BWP,i}^{start} = 7$ .

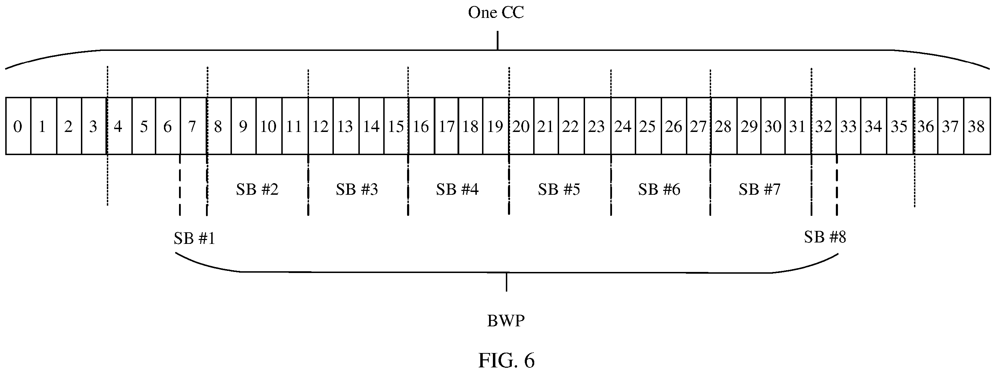

It is assumed that $N_{PRB}^{SB} = 4$ . The CC is divided at a granularity of four PRBs. Then, it may be obtained that a size of the 1st subband is one PRB, and a size of the last subband is one PRB. It is intuitively understood that a size of each subband is a quantity of PRBs that are overlapped in the BWP and PRBs divided by a dashed line, that is, an SB #1 to an SB #8 marked in FIG. 6. $N_{PRB}^{SB}$ is obtained based on the quantity of PRBs included in the BWP and a high layer configuration.

The measurement resource (for example, the BWP or a plurality of subbands) may be configured and reported by using the high layer signaling.

An example of the high layer signaling is as follows:

```
        reportFreqConfiguration                          SEQUENCE {
                cqi-FormatIndicator     ENUMERATED {widebandCQI, subbandCQI}
OPTIONAL, -- Need R
                pmi-FormatIndicator    ENUMERATED { widebandPMI, subbandPMI }
OPTIONAL, -- Need R
                csi-ReportingBand                           CHOICE {
```

| | |
|---|---|
| subbands3 | BIT STRING(SIZE(3)), |
| subbands4 | BIT STRING(SIZE(4)), |
| subbands5 | BIT STRING(SIZE(5)), |
| subbands6 | BIT STRING(SIZE(6)), |
| subbands7 | BIT STRING(SIZE(7)), |
| subbands8 | BIT STRING(SIZE(8)), |
| subbands9 | BIT STRING(SIZE(9)), |
| subbands10 | BIT STRING(SIZE(10)), |
| subbands11 | BIT STRING(SIZE(11)), |
| subbands12 | BIT STRING(SIZE(12)), |
| subbands13 | BIT STRING(SIZE(13)), |
| subbands14 | BIT STRING(SIZE(14)), |
| subbands15 | BIT STRING(SIZE(15)), |
| subbands16 | BIT STRING(SIZE(16)), |
| subbands17 | BIT STRING(SIZE(17)), |
| subbands18 | BIT STRING(SIZE(18)), |
| ..., | |
| subbands19-v1530 | BIT STRING(SIZE(19)) |

    }     OPTIONAL      -- Need S

      }

It can be learned that CQI reporting may be configured as one of a wideband CQI and a subband CQI that respectively correspond to wideband CQI reporting and subband CQI reporting. PMI reporting may be configured as one of a wideband PMI and a subband PMI that respectively correspond to wideband PMI reporting and subband PMI reporting. It is assumed that a plurality of subbands (SB) obtained by dividing the BWP constitute a set that may be referred to as an SB set. A specific frequency domain resource that needs to be reported is determined based on a parameter csi-Reporting-Band, and the parameter indicates consecutive or inconsecutive subbands. The consecutive or inconsecutive subbands are a subset of the SB set, and may be referred to as an SB subset. csi-ReportingBand may be a bitmap (bitmap). For example, the BWP includes seven subbands, that is, the SB set includes seven SBs and the SB set is {SB #1, SB #2, SB #3, SB #4, SB #5, SB #6, SB #7}. In this case, csi-ReportingBand includes seven bits, for example, 1110111. The SB #1, the SB #2, the SB #3, the SB #5, the SB #6, and the SB #7 are indicated to perform reporting, that is, a reported SB subset is {SB #1, SB #2, SB #3, SB #5, SB #6, SB #7}.

A difference between wideband reporting and subband reporting lies in that, for wideband CQI reporting and wideband PMI reporting, one CQI and one PMI are reported for a bandwidth corresponding to all SBs in an SB subset; and for subband CQI reporting and subband PMI reporting, one CQI and one PMI are reported for a bandwidth corresponding to each SB in an SB subset.

For wideband CQI reporting, the CQI has several default reporting configuration tables, and a specific reporting configuration used by the UE may be configured by using the high layer signaling. A reporting configuration table is as follows:

Table 2 CQI reporting configuration

| CQI index (index) | Modulation (modulation) | Code rate (code rate×1024) | Power (efficiency) |
|---|---|---|---|
| 0 | Out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

For example, a manner in which the high layer signaling indicates a reporting configuration used by the UE is indicating the reporting configuration by using a cqi-Table ENUMERATED {table 1, table 2, table 3, table 4-r17} field. For example, if a value of cqi-Table is a table 1, it indicates the UE uses a 1st table (or a reporting configuration represented by the 1st table). The UE calculates a wideband CQI index (wideband CQI index) that needs to be reported, where the CQI index is 4 bits, and indicates a row in the 16-row table.

For subband CQI reporting, the UE calculates a subband CQI index (subband CQI index) that needs to be reported, and the CQI index is also 4 bits. An offset level (offset level) of the subband CQI index and the wideband CQI index is obtained through calculation: offset level=subband CQI index-wideband CQI index. Then a sub-band differential CQI value is obtained based on the value of the offset level and Table 3, and the value of the sub-band differential CQI value is reported.

Table 3 Correspondence between the offset level and an offset representation value

| Offset representation value (Sub-band differential CQI value) | Offset level (Offset level) |
|---|---|
| 0 | 0 |
| 1 | 1 |
| 2 | ≥2 |
| 3 | ≤-1 |

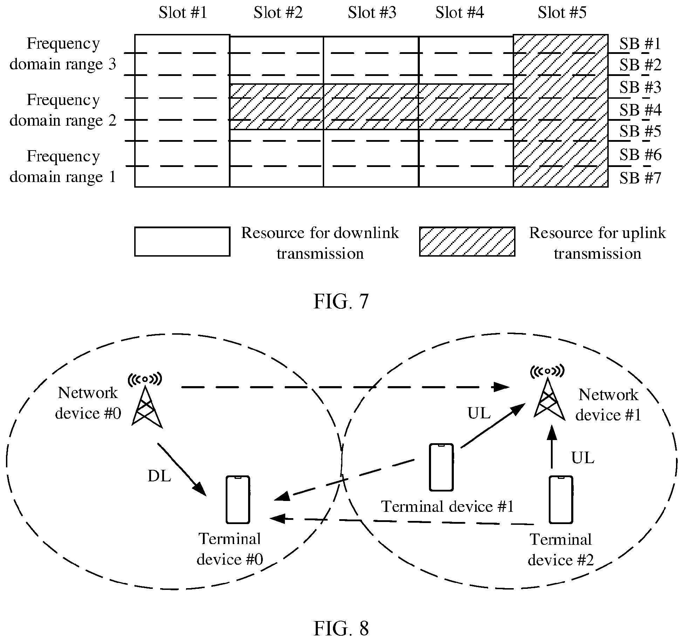

In the foregoing solution, some SBs are overlapped in both an SBFD slot and a non-DL frequency domain range (a UL frequency domain range, or a guardband (guardband, GB) between a DL frequency domain range and a UL frequency domain range). For frequency domain resources included in an SB #3 and an SB #5 in FIG. 7, a part is used for uplink transmission, and a part is used for downlink transmission. When an SB subset for CQI reporting or PMI reporting includes the SB #3 and the SB #5, for example, when csi-ReportingBand is configured as 1110111, values of wideband CQI and wideband PMI are inaccurate. For example, values of narrowband CQI or narrowband PMI in the SB #3 and the SB #5 are inaccurate. This is because some frequency domain resources (for example, resources overlapped between an SB and the non-DL frequency domain range) have no CSI-RS signal during calculation of the CQI and the PMI, resulting in inaccurate calculation. For ease of description, the UL frequency domain range is used to represent the non-DL frequency domain range below. However, the non-DL frequency domain range is not limited in this application. For example, the non-DL frequency domain range may be the UL frequency domain range, or may be the UL frequency domain range and a guardband between the DL frequency domain range and the UL frequency domain range.

In a different slot ratio or a dynamic-TDD (Dynamic-TDD) technology, when network devices are configured in different slot formats, transmission directions of two network devices in one slot are also different. For example, slot formats of the network device #0 and the network device #1 are respectively configured as DDDSU and DSUUU (slot numbers are a slot #0 to a slot #4). In the slot #2 and the slot #3, the network device #0 sends a downlink signal and the network device #1 receives an uplink signal. In this case, UE-UE CLI and BS-BS CLI also exist, for example, UE #1-UE #0 CLI, UE #2-UE #0 CLI, and BS #0-BS #1 CLI in the figure. In Rel-16, UE-UE CLI measurement and reporting are specified, but there is currently no corresponding solution for BS-BS CLI measurement and reporting.

An implementation of UE-UE CLI measurement and reporting is as follows: In NR Rel-16, UE-UE CLI measurement may be classified into SRS-RSRP measurement and CLI-RSSI measurement. Details are as follows:

SRS-RSRP measurement:

The network device #1 may configure one or more SRS resources for each terminal device. The terminal device sends an SRS signal on the time-frequency resource (that is, an UL signal in FIG. 8 is an SRS signal in this time). The signal may be used by a terminal device of the network device #0 to perform RSRP measurement on UE-UE CLI.

The network device #0 may configure a time-frequency resource for each terminal device to receive an SRS sent by a terminal device of the network device #1, and measure RSRP of UE-UE CLI (that is, a terminal device #0 does not receive the downlink signal of the network device #0 on the time-frequency resource, but receives SRS signals of the terminal device #1 and a terminal device #2).

When the network device #1 configures different SRS resources for each terminal device, for example, the terminal device #1 sends an SRS signal on an SRS resource #1, and the terminal device #1 sends an SRS signal on an SRS resource #2, the terminal device #0 of the network device #0 may separately perform measurement on time-frequency resources corresponding to the SRS resource #1 and the SRS resource #2, to obtain RSRP of terminal device #1-terminal device #0 CLI and RSRP of terminal device #2-terminal device #0 CLI. The foregoing manner may be referred to as SRS-RSRP measurement.

CLI-RSSI measurement:

The network device #0 may also configure a time-frequency resource #n for the terminal device #0 to perform RSSI measurement on CLI caused by the terminal device of the network device #1. The terminal device #0 may measure an RSSI of CLI on the time-frequency resource #n.

The network device #1 does not specify an uplink signal of the terminal device of the network device #1 on the time-frequency resource #n. Therefore, the terminal device #0 cannot obtain RSSIs of terminal device-terminal device CLI caused by different terminal devices in the network device #1, that is, cannot separately obtain RSSIs of terminal device #1-terminal device #0 CLI and terminal device #2-terminal device #0 CLI. The foregoing manner may be referred to as CLI-RSSI measurement.

After UE-UE CLI measurement is performed on a given resource, the UE reports an SRS-RSRP or a CLI-RSSI measured on the resource.

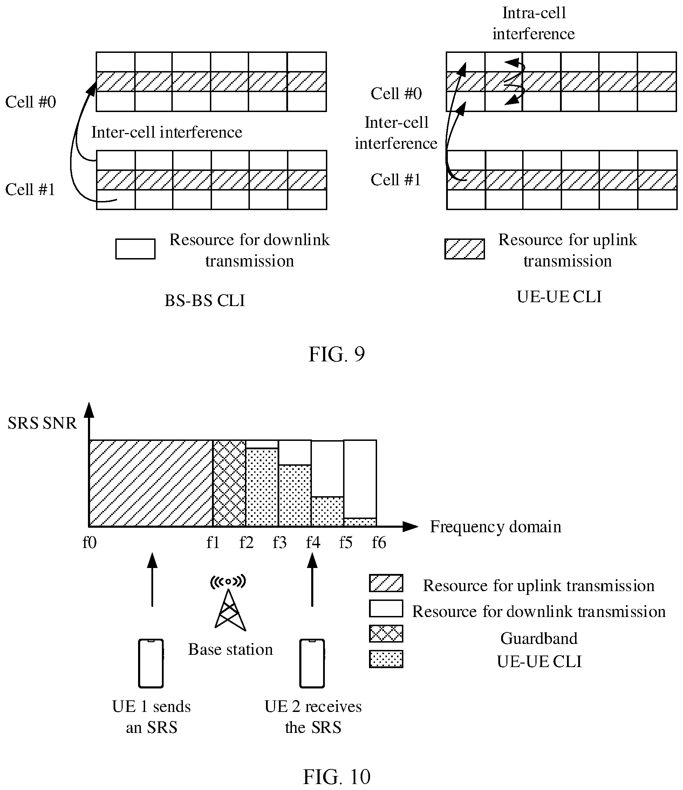

Currently, UE-UE CLI measurement and reporting are wideband measurement results. In a DTDD scenario in Rel-16, UE-UE CLI interference is co-channel interference (that is, an interference signal and a wanted signal are on a same frequency), and strength of CLI interference is close on different frequencies. Therefore, wideband measurement and reporting are appropriate. However, in an SBFD cell in Rel-18, UE-UE CLI is CLI interference between different subbands (co-channel inter-subband UE-UE CLI), and strength of CLI interference varies greatly at different frequencies. Therefore, wideband reporting cannot accurately reflect interference in different frequency domain ranges. Co-channel inter-subband UE-UE CLI is specifically understood as follows: As shown in FIG. 9, inter-cell inter-subband UE-UE CL interference is interference of a signal on a UL subband of a cell #1 to a signal on a DL subband of a cell #0, and intra-cell inter-subband (intra-cell inter-subband UE-UE CL) interference is interference of a signal on a UL subband of the cell #0 to a signal on the DL subband of the cell #0. That is, the interference signal and the wanted signal are located on different frequency resources. As shown in FIG. 10, in inter-subband UE-UE CLI, in a DL subband, inter-subband UE-UE CLI interference is large on a resource close to a UL subband, and CLI interference is small on a resource far away from a UL subband. Therefore, wideband reporting cannot reflect a stepwise change state of interference strength of inter-subband UE-UE CLI in the DL subband.

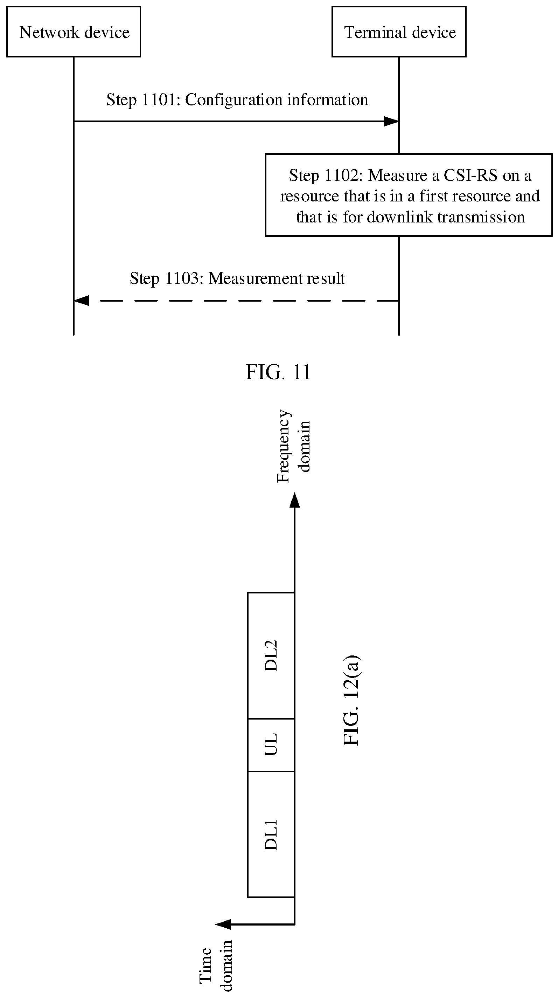

To resolve the foregoing problem, this application provides a communication method. According to the method, an uplink resource in an SBFD slot and an actual CSI-RS measurement resource may not overlap, to improve accuracy of channel measurement. It should be understood that, in this embodiment, an example in which a network device and a terminal device are used as two parties during interaction is used to describe a solution, but this is not limited thereto. As shown in FIG. 11, the method may include the following steps.

Step 1101: A network device sends configuration information to a terminal device, and correspondingly, the terminal device receives the configuration information.

The configuration information indicates a first resource for CSI-RS measurement. The first resource includes a second resource and a third resource, the second resource is used for downlink transmission, and the third resource is used for uplink transmission. The second resource and the third resource are different frequency domain resources on a same time domain resource. In other words, the second resource and the third resource are a same resource in time domain and are different resources in frequency domain.

It should be understood that the second resource being used for downlink transmission may be understood as the second resource being used for downlink transmission in time domain and in frequency domain. The second resource may include resources in different frequency domain ranges in frequency domain, and is also referred to as a resource set (or referred to as a subband, SB). This is not limited in embodiments of this application. Similarly, the third resource being used for uplink transmission may be understood as the third resource being used for uplink transmission in time domain and in frequency domain. The third resource may also include resources in different frequency domain ranges in frequency domain.

For the first resource configured based on the configuration information, there may be the following several cases:

Case 1: The second resource may include N resource sets (the resource set may also be referred to as a subband, that is, the resource set may include $N_{PRB}^{SB}$ PRBs), where N is a positive integer. One resource set may be a set of frequency domain resources in a frequency domain range. For example, one resource set may include at least one PRB. The N resource sets do not overlap each other. In other words, PRBs included in each of the N resource sets are not repeated.

Specifically, the second resource and the third resource may be configured in the following several possibilities:

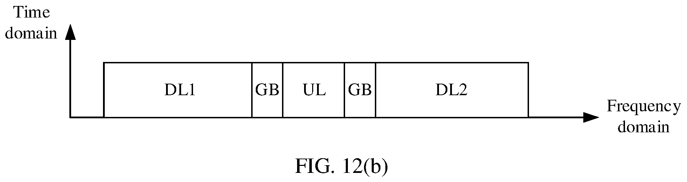

Possibility (1): The second resource includes resources in two different partial frequency domain ranges, and the resources in the two different partial frequency domain ranges are separated by the third resource in frequency domain. The two partial frequency domain ranges include a first partial frequency domain range and a second partial frequency domain range. For example, as shown in FIG. 12(a), a DL1 is the first partial frequency domain range, a DL2 is the second partial frequency domain range, and a UL is the third resource. For another example, as shown in FIG. 12(b), a DL1 is the first partial frequency domain range, a DL2 is the second partial frequency domain range, a UL is the third resource, and there are a guardband between the DL1 and the UL and a guardband between the UL and the DL2.

Manner A: PRBs in any resource set that includes more than one PRB and that is in the second resource are consecutive.

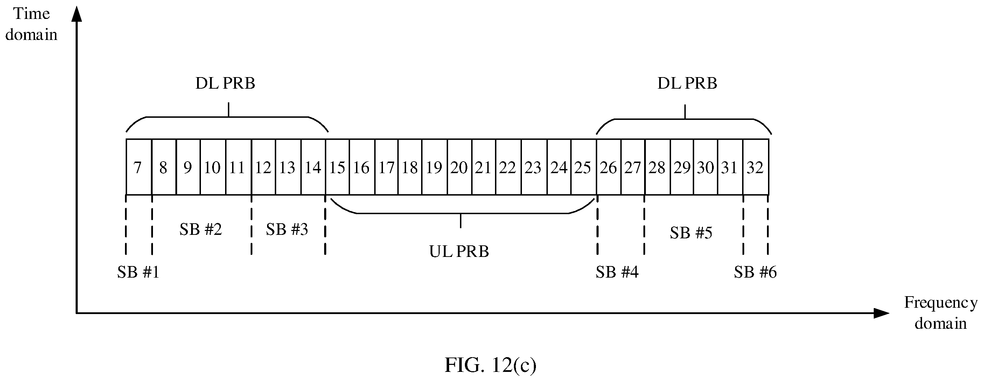

As shown in FIG. 12(c), the second resource includes six resource sets (that is, N is 6): an SB #1, an SB #2, an SB #3, an SB #4, an SB #5, and an SB #6. The first partial frequency domain range includes three resource sets: the SB #1, the SB #2, and the SB #3. The second partial frequency domain range includes three resource sets: the SB #4, the SB #5, and the SB #6.

The PRBs in any resource set that includes more than one PRB are consecutive. For example, the SB #2 includes four PRBs: a PRB #8, a PRB #9, a PRB #10, and a PRB #11, and the four PRBs are consecutive. For another example, the SB #4 includes two PRBs: a PRB #26 and a PRB #27, and the two PRBs are also consecutive.

In this manner, a quantity of resources included in each resource set, for example, a quantity of PRBs, may be determined based on a parameter #A. The parameter #A may include at least one of the following: a maximum quantity of PRBs included in any one of the N resource sets, an ID of a start PRB occupied by resources in the first partial frequency domain range, an ID of a start PRB occupied by resources in the second partial frequency domain range, and a total quantity of PRBs included in the resources in the first partial frequency domain range and the resources in the second partial frequency domain range.

For example, a possible calculation manner is as follows:

$$Q1 = N_{PRB}^{SB} - (N_1^{start} \bmod N_{PRB}^{SB});$$

$$Q2 = \left(N_1^{start} + N_1^{size}\right) \bmod N_{PRB}^{SB} \text{ and } \left(N_1^{start} + N_1^{size}\right) \bmod N_{PRB}^{SB} \text{ is not } 0,$$

or

$$Q2 = N_{PRB}^{SB} \text{ and } \left(N_1^{start} + N_1^{size}\right) \bmod N_{PRB}^{SB} \text{ is } 0;$$

$$Q3 = N_{PRB}^{SB};$$

$$Q4 = N_{PRB}^{SB} - (N_2^{start} \bmod N_{PRB}^{SB});$$

and

$$Q5 = \left(N_2^{start} + N_2^{size}\right) \bmod N_{PRB}^{SB} \text{ and } \left(N_2^{start} + N_2^{size}\right) \bmod N_{PRB}^{SB} \text{ is not } 0,$$

or

$$Q5 = N_{PRB}^{SB} \text{ and } \left(N_2^{start} + N_2^{size}\right) \bmod N_{PRB}^{SB} \text{ is } 0,$$

where

$N_{PRB}^{SB}$ is the maximum quantity of PRBs included in any one of the N resource sets;

$N_1^{start}$ and $N_2^{start}$ are an ID of a start PRB occupied by the first partial frequency domain range and an ID of a start PRB occupied by the second partial frequency domain range respectively;

$N_1^{size}$ and $N_2^{size}$ are a total quantity of PRBs included in the first partial frequency domain range and a total quantity of PRBs included in the second partial frequency domain range respectively, where
the first partial frequency domain range includes N1 resource sets, the second partial frequency domain range includes N2 resource sets, and a sum of N1 and N2 is N;
Q1 is a quantity of PRBs included in a resource set (a resource set X1) ranked first in the N1 resource sets, and the N1 resource sets are resource sets included in the first partial frequency domain range;
Q2 is a quantity of PRBs included in a resource set (a resource set X2) ranked last in the N1 resource sets;
Q4 is a quantity of PRBs included in a resource set (a resource set X3) ranked first in the N2 resource sets;
Q5 is a quantity of PRBs included in a resource set (a resource set X4) ranked last in the N2 resource sets;
Q3 is a quantity of PRBs included in another resource set (different from the resource set X1, the resource set X2, the resource set X3, and the resource set X4) in the (N1+N2) resource sets.

The resource set ranked first in the N1 or N2 resource sets may be a resource set whose start PRB has a smallest identity (for example, an ID), and the start PRB may be understood as a PRB with a lowest frequency in a resource set. For example, in FIG. 12(c), the PRB #8 is a start PRB of the SB #2, and a PRB #28 is a start PRB of the SB #5. In the six resource sets shown in FIG. 12(c), a resource set ranked first is the SB #1. The SB #1 includes only one PRB, and the PRB may be considered as a start PRB of the SB #1. An ID of the PRB is 7, is the smallest ID in IDs of all PRBs included in the first resource, and is also the smallest ID in IDs of all PRBs included in the N1 resource sets. Similarly, a resource set ranked first in the N2 resource sets is the SB #4.

The resource set ranked last in the N1 or N2 resource sets may be a resource set whose start PRB has a largest identity (for example, an ID), and the start PRB may be understood as a PRB with a highest frequency in a resource set. For example, in FIG. 12(c), the PRB #8 is a start PRB of the SB #2, and a PRB #28 is a start PRB of the SB #5. In the six resource sets shown in FIG. 12(c), a resource set ranked last is the SB #8. The SB #1 includes only one PRB, and the PRB may be considered as a start PRB of the SB #8. An ID of the PRB is 32, is the largest ID in IDs of all the PRBs included in the first resource, and is also the largest ID in IDs of all PRBs included in the N2 resource sets. Similarly, a resource set ranked last in the N1 resource sets is the SB #3.

It should be understood that, because all the PRBs included in the first resource are arranged in ascending order of frequencies, a resource set ranked first or ranked last may be further determined based on an end PRB included in the resource set. This embodiment of this application is not limited thereto. For example, a resource set ranked first or ranked last may be alternatively determined based on an identity of a PRB at a predefined location. $N_{PRB}^{SB}$ may also be understood as a granularity of a resource set. For example, the first resource is divided into P resource sets at the granularity of the resource set. For example, in FIG. 12(c), the granularity of the resource set is four PRBs, that is, the resource set is obtained through division by using four PRBs as a granularity. To be specific, $N_{PRB}^{SB}$ in the foregoing calculation formula is 4. The granularity of the resource set may also be expressed as a maximum quantity of PRBs included in the resource set of the first resource. For example, in FIG. 12(c), each resource set includes a maximum of four PRBs. A value of $N_{PRB}^{SB}$ may be configured, may be indicated, or may be predefined. This is not limited in embodiments of this application.

In this manner, the actual CSI-RS measurement resource configured by the network device for the terminal device includes only a resource for downlink transmission, and does not include a resource for uplink transmission, so that the actual CSI-RS measurement resource and the resource for uplink transmission do not overlap.

Manner B: PRBs included in at least one resource set in the second resource are inconsecutive.

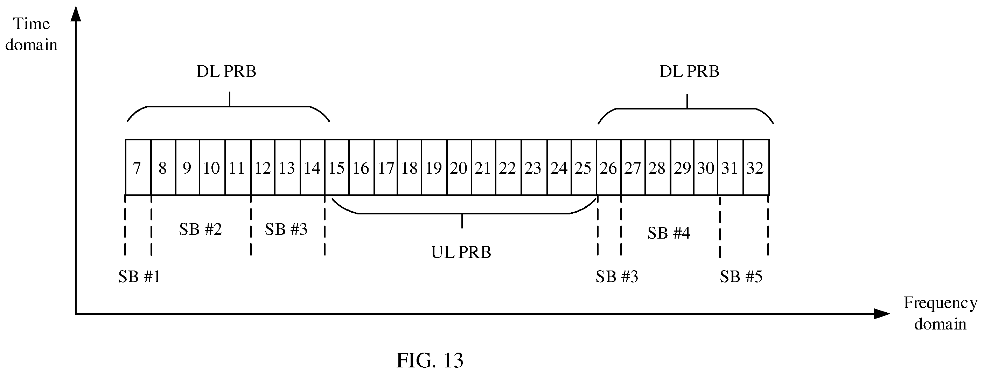

As shown in FIG. 13, the second resource includes five resource sets (that is, N is 5): an SB #1, an SB #2, an SB #3, an SB #4, and an SB #5. PRBs included in a resource set, namely, the SB #3, are inconsecutive. The SB #3 includes a PRB #12, a PRB #13, a PRB #14, and a PRB #26.

In this manner, a quantity of resources included in each resource set, for example, a quantity of PRBs, may be determined based on a parameter #B. The parameter # B may include at least one of the following: a maximum quantity of PRBs included in any one of the N resource sets, an ID of a start PRB occupied by resources in the first partial frequency domain range, an ID of a start PRB occupied by resources in the second partial frequency domain range, and a total quantity of PRBs included in the resources in the first partial frequency domain range and the resources in the second partial frequency domain range. The ID of the start PRB in the first partial frequency domain range is smaller than the ID of the start PRB in the second partial frequency domain range.

For example, a possible calculation manner is as follows:

$$Q1 = N_{PRB}^{SB} - (N_1^{start} \bmod N_{PRB}^{SB});$$

$$Q2 = \left(N_1^{start} + N_{1+2}^{size}\right) \bmod N_{PRB}^{SB} \text{ and } \left(N_1^{start} + N_{1+2}^{size}\right) \bmod N_{PRB}^{SB} \text{ is not } 0,$$

or

$$Q2 = N_{PRB}^{SB} \text{ and } \left(N_1^{start} + N_{1+2}^{size}\right) \bmod N_{PRB}^{SB} \text{ is } 0;$$

and

$$Q3 = N_{PRB}^{SB},$$

where

Q1 is a quantity of PRBs included in a resource set (a resource set Y1) ranked first in the N resource sets;

Q2 is a quantity of PRBs included in a resource set (a resource set Y2) ranked last in the N resource sets;

Q3 is a quantity of PRBs included in another resource set (different from the resource set Y1 and the resource set Y2) in the N resource sets;

$N_{PRB}^{SB}$ is the maximum quantity of PRBs included in any one of the N resource sets, where

specifically, for the resource set ranked first, the resource set ranked last, and $N_{PRB}^{SB}$, refer to related descriptions in the manner A, and details are not described herein again;

$N_1^{start}$ is the ID of the start PRB occupied by the resources in the first partial frequency domain range; and

$N_{1+2}^{size}$ is the total quantity of PRBs included in the resources in the first partial frequency domain range and the resources in the second partial frequency domain range.

In this manner, inconsecutive PRBs may be included in a same resource set, so that a quantity of PRBs included in the resource set can meet $N_{PRB}^{SB}$. This manner provides diversified selections for resource configuration. When a quantity of the resources in the first partial frequency domain range and a quantity of the resources in the second partial frequency domain range are the same, compared with the manner A, this manner can reduce a quantity of resource sets and reduce reporting overheads.

Manner C: A boundary of a resource set that is in the second resource and that is adjacent to the third resource is the same as a boundary of the third resource, and a quantity of RBs included in the resource set is a subband granularity.

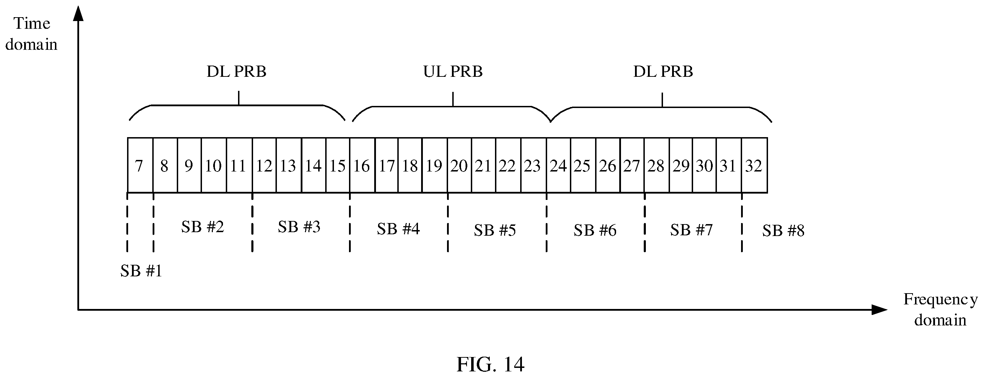

As shown in FIG. 14, the second resource includes six resource sets: an SB #1, an SB #2, an SB #3, an SB #6, an SB #7, and an SB #8. The third resource includes two resource sets: an SB #4 and an SB #5. A boundary of the SB #3 is consistent with a boundary of the SB #4, and the boundary of the SB #4 is consistent with a boundary of the SB #6. In other words, in this manner, it can be ensured that a boundary of a resource for uplink transmission is consistent with a boundary of a resource for downlink transmission, so that the actual CSI-RS measurement resource and the resource for uplink transmission do not overlap during resource configuration.

Specifically, a UL frequency domain resource bandwidth (or a UL frequency domain resource bandwidth and a GB bandwidth) in the SBFD slot may be limited to an integer multiple of four PRBs, eight PRBs, 16 PRBs, or 32 PRBs, and is not less than a subband granularity configured for any UE. An ID of a start PRB of the UL frequency domain resource bandwidth (or the UL frequency domain resource bandwidth and the GB bandwidth) may be limited to be an integer multiple of a largest value in subband granularities configured for all UEs.

Possibility (2): The second resource includes a resource in a partial frequency domain range, and the third resource includes a resource in a remaining partial frequency domain range. Frequency domain resources included in the second resource are consecutive, and frequency domain resources included in the third resource are also consecutive.

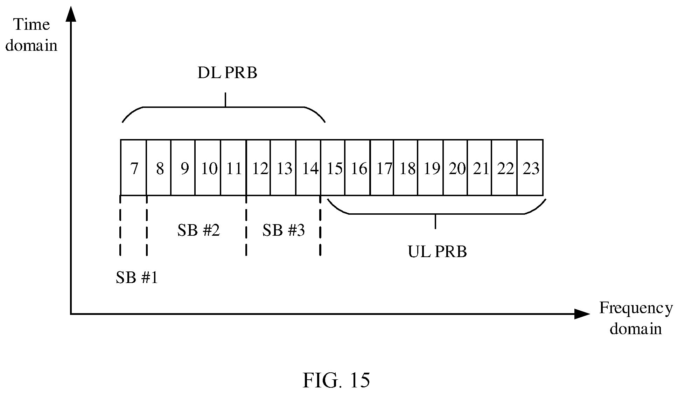

Manner D: As shown in FIG. 15, the second resource includes a partial frequency domain range, and the partial frequency domain range includes three resource sets (that is, N is 3): an SB #1, an SB #2, and an SB #3. The third resource includes a remaining frequency domain resource. For PRBs included in the second resource and the third resource, the second resource includes a PRB #7 to a PRB #14, the third resource includes a PRB #15 to a PRB #23, and the PRBs included in the second resource and the third resource are consecutive.

In this manner, a quantity of resources included in each resource set, for example, a quantity of PRBs, may be determined based on a parameter #D. The parameter #D may include at least one of the following: a maximum quantity of PRBs included in any one of the N resource sets, an ID of a start PRB occupied by resources in a first partial frequency domain range, and a total quantity of PRBs included in the resources in the first partial frequency domain range.

For example, a possible calculation manner is as follows:

$$Q1 = N_{PRB}^{SB} - (N_1^{start} \bmod N_{PRB}^{SB});$$

$$Q2 = \left(N_1^{start} + N_1^{size}\right) \bmod N_{PRB}^{SB} \text{ and } \left(N_1^{start} + N_1^{size}\right) \bmod N_{PRB}^{SB} \text{ is not } 0,$$

or

$$Q2 = N_{PRB}^{SB} \text{ and } \left(N_1^{start} + N_1^{size}\right) \bmod N_{PRB}^{SB} \text{ is } 0;$$

and

$$Q3 = N_{PRB}^{SB},$$

where

Q1 is a quantity of PRBs included in a resource set (a resource set Z1) ranked first in the N resource sets;
Q2 is a quantity of PRBs included in a resource set (a resource set Z5) ranked last in the N resource sets;
Q3 is a quantity of PRBs included in another resource set (different from the resource set Z1 and the resource set Z5) in the N resource sets;

$N_{PRB}^{SB}$ is the maximum quantity of PRBs included in any one of the N resource sets, where

specifically, for the resource set ranked first, the resource set ranked last, and $N_{PRB}^{SB}$, refer to related descriptions in the manner A, and details are not described herein again;

$N_1^{start}$ is an ID of a start PRB occupied by the second resource; and

$N_1^{size}$ is a total quantity of PRBs included in the second resource.

Possibility (3): The third resource may include resources in two different partial frequency domain ranges, the resources in the two different partial frequency domain ranges are separated by the second resource (the second resource includes a partial frequency domain range) in frequency domain, and the two partial frequency domain ranges include a third partial frequency domain range and a fourth partial frequency domain range. For specific resource distribution (for example, a quantity of PRBs included in each resource set), refer to the foregoing descriptions. For example, in a process of calculating the quantity of PRBs included in each resource set in the foregoing manner D, the second resource is replaced with the third resource. Details are not described herein again.

In this manner, a corresponding resource set configuration manner is provided for different resource configuration, so that flexibility of resource set configuration can be improved.

Case 2: The first resource configured based on the configuration information is generally divided into a plurality of resource sets.

In a possible implementation, the first resource includes P resource sets, where P is a positive integer. The P resource sets do not overlap each other, and each of the P resource sets includes at least one PRB. The P resource sets include a first resource set. The first resource set includes a first PRB and a second PRB. The first PRB is used for downlink transmission, and the second PRB is used for uplink transmission.

In other words, the first resource is generally divided into the P resource sets, and resources in at least one resource set of the P resource sets include a resource for uplink transmission and a resource for downlink transmission.

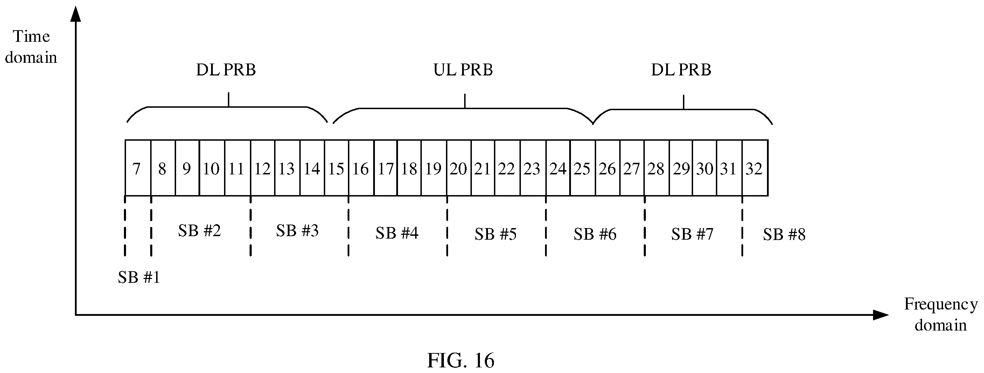

For example, as shown in FIG. 16, the first resource includes eight resource sets: an SB #1 to an SB #8. The SB #3 includes four PRBs: a PRB #12, a PRB #13, a PRB #14, and a PRB #15. The PRB #12, the PRB #13, and the PRB #14 are used for downlink transmission, and the PRB #15 is used for uplink transmission. The SB #6 includes four PRBs: a PRB #24, a PRB #25, a PRB #26, and a PRB #27. The PRB #26 and the PRB #27 are used for downlink transmission, and the PRB #24 and the PRB #25 are used for uplink transmission.

In this case, a quantity of PRBs included in each of the resource sets included in the first resource may be determined based on a first parameter. The first parameter includes at least one of the following: a maximum quantity of PRBs (subband size) included in any resource set of the first resource, an ID of a start PRB occupied by the first resource, and a total quantity of PRBs included in the first resource.

A possible determining manner is as follows:

$$Q1 = N_{PRB}^{SB} - \left(N_{BWP,i}^{start} \bmod N_{PRB}^{SB}\right);$$

$$Q2 = \left(N_{BWP,i}^{start} + N_{BWP,i}^{size}\right) \bmod N_{PRB}^{SB} \ \text{ and } \ \left(N_{BWP,i}^{start} + N_{BWP,i}^{size}\right) \bmod N_{PRB}^{SB} \ \text{ is not } 0,$$

or

$$Q2 = N_{PRB}^{SB} \ \text{ and } \ \left(N_{BWP,i}^{start} + N_{BWP,i}^{size}\right) \bmod N_{PRB}^{SB} \ \text{ is } 0;$$

and

$$Q3 = N_{PRB}^{SB}, \ ^`$$

where

Q1 is a quantity of PRBs included in a resource set ranked first in the P resource sets, Q2 is a quantity of PRBs included in a resource set ranked last in the P resource sets, Q3 is a quantity of PRBs included in another resource set in the P resource sets, $N_{PRB}^{SB}$ is the maximum quantity of PRBs included in any one of the P resource sets, $N_{BWP,i}^{start}$ is the ID of the start PRB occupied by the first resource, $N_{BWP,i}^{size}$ is the total quantity of PRBs included in the P resource sets.

The resource set ranked first in the P resource sets may be a resource set whose start PRB has a smallest identity (for example, an ID), and the start PRB may be understood as a PRB with a lowest frequency in a resource set. For example, in FIG. 16, the PRB #8 is a start PRB of the SB #2, and the PRB #28 is a start PRB of the SB #7. In the eight resource sets shown in FIG. 16, a resource set ranked first is the SB #1. The SB #1 includes only one PRB, and the PRB may be considered as a start PRB of the SB #1. An ID of the PRB is 7, and is the smallest ID in IDs of all PRBs included in the first resource.

The resource set ranked first in the P resource sets may be a resource set whose start PRB has a largest identity (for example, an ID), and the start PRB may be understood as a PRB with a highest frequency in a resource set. For example, in FIG. 16, the PRB #8 is a start PRB of the SB #2, and the PRB #28 is a start PRB of the SB #7. In the eight resource sets shown in FIG. 16, a resource set ranked last is the SB #8. The SB #1 includes only one PRB, and the PRB may be considered as a start PRB of the SB #8. An ID of the PRB is 32, and is the largest ID in IDs of all the PRBs included in the first resource.

It should be understood that, because all the PRBs included in the first resource are arranged in ascending order of frequencies, a resource set ranked first or ranked last may be further determined based on an end PRB included in the resource set. This embodiment of this application is not limited thereto. For example, a resource set ranked first or ranked last may be alternatively determined based on an identity of a PRB at a predefined location. $N_{PRB}^{SB}$ may also be understood as a granularity of a resource set. For example, the first resource is divided into the P resource sets at the granularity of the resource set. For example, in FIG. 16, the granularity of the resource set is four PRBs, that is, the resource set is obtained through division by using four PRBs as a granularity. To be specific, $N_{PRB}^{SB}$ in the foregoing calculation formula is 4. The granularity of the resource set may also be expressed as a maximum quantity of PRBs included in the resource set of the first resource. For example, in FIG. 16, each resource set includes a maximum of four PRBs.

Optionally, the foregoing solution may also be applied to the possibility (1) and the possibility (2).

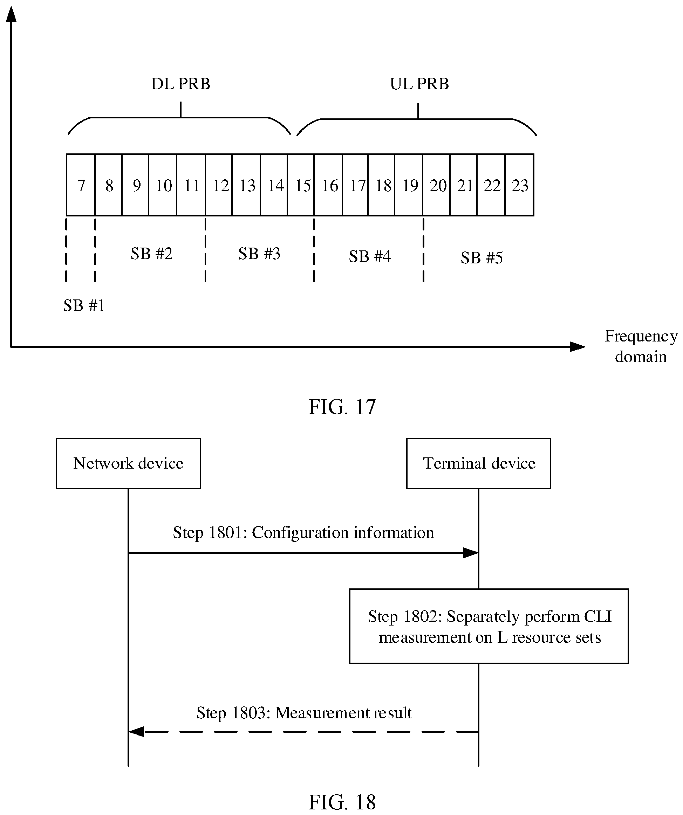

In this case, distribution of SBs may be further shown in FIG. 17. A resource for uplink transmission and a resource for downlink transmission each occupy a partial frequency domain range. In a possible manner, respective frequency domain ranges may be configured by the network device. Specifically, for a manner of determining a quantity of PRBs included in each resource set, refer to related descriptions of FIG. 16. Details are not described herein again.

Optionally, the third resource may include resources in two different partial frequency domain ranges, the resources in the two different partial frequency domain ranges are separated by the second resource (the second resource includes a partial frequency domain range) in frequency domain, and the two partial frequency domain ranges include a third partial frequency domain range and a fourth partial frequency domain range. For specific resource distribution (for example, a quantity of PRBs included in each resource set), refer to the foregoing descriptions. For example, in the solution shown in FIG. 16, the second resource is replaced with the third resource. Details are not described herein again.

It should be understood that names of the parameters such as Q1 and Q2 are not limited thereto, and are merely used as examples. For example, Q1 may also be referred to as QA, Qi, Qj, or the like.

Step 1102: The terminal device measures a CSI-RS on a resource that is in the first resource and that is for downlink transmission.

In a possible implementation A that corresponds to the case 1 in step 1101, the terminal device may separately measure the CSI-RS on M resource sets of the N resource sets, where M is less than or equal to N, and M and N are positive integers. In other words, the terminal device may measure the CSI-RS on the resource for downlink transmission (namely, the second resource) configured based on the configuration information, or on a part of the resource for downlink transmission (namely, a part of the second resource or a subset of the second resource) configured based on the configuration information.

Optionally, an N-bit bitmap may be high layer configured to indicate the M resource sets that are in the N resource sets and that are for measurement, where one bit corresponds to one resource set, and when an $n^{th}$ bit is 1, it indicates that measurement is performed on an $n^{th}$ resource set. For example, an N-bit bitmap in a high layer configuration parameter csi-ReportingBand indicates the M resource sets that are in the N resource sets and that are for measurement.

Optionally, the terminal device may perform resource set-level measurement. For example, the terminal device performs measurement at a granularity of a resource set. For example, in FIG. 12(c), the terminal device separately measures the SB #1, the SB #2, the SB #3, the SB #4, the SB #5, and the SB #6.

In this implementation, the terminal device measures the CSI-RS on the resource for downlink transmission that is configured by the network device, so that measurement accuracy can be improved.

In another possible implementation B that corresponds to the case 2 in step 1101, the terminal device measures the CSI-RS on the resource that is in the first resource and that is for downlink transmission, rather than a resource that is in the first resource and that is for uplink transmission. For example, in FIG. 16, the terminal device measures only the PRB #1 to the PRB #14 and the PRB #26 to the PRB #32. Optionally, an N-bit bitmap may be high layer configured to indicate the M resource sets that are in the N resource sets and that are for measurement, where one bit corresponds to one resource set, and when an $n^{th}$ bit is 1, it indicates that measurement is performed on an $n^{th}$ resource set. For example, an N-bit bitmap in a high layer configuration parameter csi-ReportingBand indicates the M resource sets that are in the N resource sets and that are for measurement. The SB #4 and the SB #5 in FIG. 16 do not need to be measured, and a corresponding bit value in a bitmap in csi-ReportingBand is 0. The terminal device does not perform measurement on the SB #4 and the SB #5 based on the high layer configuration parameter.

In this implementation, although some resource sets configured by the network device include both a resource for uplink transmission and a resource for downlink transmission, the terminal device performs CSI-RS measurement only on the resource for downlink transmission, so that accuracy of channel measurement is improved.

Optionally, the method may further include the following steps.

Step 1103: The terminal device sends a measurement result, and correspondingly, the network device receives the measurement result.

The following describes the solution by using a PMI as an example of the measurement result.

The PMI reported by the terminal device may be configured by the network device. For example, the network device configures, by using a numberOfPMI-SubbandsPerCQI-Subband field, a quantity of PMIs reported by the terminal device. For example, when the numberOfPMI-SubbandsPerCQI-Subband is 2, it indicates that two PMIs need to be reported for one resource set (SB). It should be understood that a quantity of PMIs to be reported for one SB may be predefined, or may be indicated by other information. This is not limited in embodiments of this application.

Possibility (1): The second resource includes resources in two different partial frequency domain ranges, and the resources in the two different partial frequency domain ranges are separated by the third resource in frequency domain.

Specifically, the terminal device may report the PMI in the following manners:

Manner a (corresponding to the manner A in step 1101):

It is assumed that a maximum quantity of PRBs included in each resource set is K0 (that is, a value of $N_{PRB}^{SB}$ is K0), where K0 is an even number greater than 0. The first partial frequency domain range includes the N1 resource sets, and the second partial frequency domain range includes the N2 resource sets.

The resource set X1 is a start resource set in the first partial frequency domain range, and the resource set X1 is a resource set whose start PRB has a smallest ID in the N1 resource sets (for example, the SB #1 in FIG. 12(c)).

The resource set X2 is an end resource set in the first partial frequency domain range, and the resource set X2 is a resource set whose start PRB has a largest ID in the N1 resource sets (for example, the SB #3 in FIG. 12(c)).

The resource set X3 is a start resource set in the second partial frequency domain range, and the resource set X3 is a resource set whose start PRB has a smallest ID in the N2 resource sets (for example, the SB #4 in FIG. 12(c)).

The resource set X4 is an end resource set in the second partial frequency domain range, and the resource set X4 is a resource set whose start PRB has a largest ID in the N2 resource sets (for example, the SB #6 in FIG. 12(c)).

A resource set X5 is a resource set other than the resource set X1, the resource set X2, the resource set X3, and the resource set X4 in the N1 resource sets and the N2 resource sets. The terminal device separately performs measurement on first (K0/2) PRBs in each of the resource sets X5, and reports a 1st PMI for the (K0/2) PRBs. The terminal device separately performs measurement on last (K0/2) PRBs in each of the resource sets X5, and reports a 2nd PMI for the (K0/2) PRBs. It should be understood that a resource set other than the resource set X1, the resource set X2, the resource set X3, and the resource set X4 may be one or more resource sets X5.

In a case in which a quantity of RBs included in the resource set X1 and a quantity of RBs included in the resource set X3 are S1 and S3 respectively,

if S1 is less than or equal to K0/2, the terminal device performs measurement on the PRB in the resource set X1 and reports one PMI for the resource set; or if S1 is greater than K0/2, the terminal device performs measurement on first (S1-(K0/2)) PRBs in the resource set X1 and reports a 1st PMI for the (S1-(K0/2)) PRBs, and the terminal device performs measurement on last (K0/2) PRBs in the resource set X1 and reports a 2nd PMI for the K0/2 PRBs; and if S3 is less than or equal to K0/2, the terminal device performs measurement on the PRB in the resource set X3 and reports one PMI for the resource set; or if S3 is greater than K0/2, the terminal device performs measurement on first (S3-(K0/2)) PRBs in the resource set X3 and reports a 1st PMI for the (S3-(K0/2)) PRBs, and the terminal device performs measurement on last (K0/2) PRBs in the resource set X3 and reports a 2nd PMI for the K0/2 PRBs.

In a case in which a quantity of PRBs included in the resource set X2 and a quantity of PRBs included in the resource set X4 are S2 and S4 respectively,

if S2 is less than or equal to K0/2, the terminal device performs measurement on the PRB in the resource set X2 and reports one PMI for the resource set; or if S2 is greater than K0/2, the terminal device performs measurement on first (K0/2) PRBs in the resource set X2 and reports a 1st PMI for the (K0/2) PRBs, and the terminal device performs measurement on last (S2-(K0/2)) PRBs in the resource set X2 and reports a 2nd PMI for the (S2-(K0/2)) PRBs; and if S4 is less than or equal to K0/2, the terminal device performs measurement on the PRB in the resource set X4 and reports one PMI for the resource set; or if S4 is greater than K0/2, the terminal device performs measurement on first (K0/2) PRBs in the resource set X4 and reports a 1st PMI for the (K0/2) PRBs, and the terminal device performs measurement on last (S4-(K0/2)) PRBs in the resource set X4 and reports a 2nd PMI for the (S4-(K0/2)) PRBs.

Specially, when N1=1, for measurement and reporting manners of a resource set in the first partial frequency domain range, refer to measurement and reporting manners of the resource set X1 or the resource set X2; or when N2=1, for measurement and reporting manners of a resource set in the second partial frequency domain range, refer to measurement and reporting manners of the resource set X3 or the resource set X4.

The foregoing solution may still be used when K0/2 is replaced with X, where X is a positive integer less than or equal to K0/2.

For example, in FIG. 12(c), K0 is 4.

The SB #1 includes one PRB. In this case, the terminal device performs measurement on the SB #1 and reports one PMI for the SB #1.

The SB #2 includes four PRBs. In this case, the terminal device performs measurement on the first two start PRBs (namely, the PRB #8 and the PRB #9) and reports a 1st PMI for the PRB #8 and the PRB #9, and the terminal device performs measurement on the last two PRBs (namely, the PRB #10 and the PRB #11) and reports a 2nd PMI for the PRB #10 and the PRB #11.

The SB #3 includes three PRBs. In this case, the terminal device performs measurement on a first PRB (namely, the PRB #12) and reports a 1st PMI for the PRB #12, and the terminal device performs measurement on last two PRBs (namely, the PRB #13 and the PRB #14) and reports a 2nd PMI for the PRB #13 and the PRB #14.

The SB #4 includes two PRBs. In this case, the terminal device performs measurement on the two PRBs (namely, the PRB #26 and the PRB #27) and reports one PMI for the PRB #26 and the PRB #27.

The SB #5 includes four PRBs. In this case, the terminal device performs measurement on the first two PRBs (namely, the PRB #28 and the PRB #29) and reports a 1st PMI for the PRB #28 and the PRB #29, and the terminal device performs measurement on the last two PRBs (namely, the PRB #30 and the PRB #31) and reports a 2nd PMI for the PRB #30 and the PRB #31.

The SB #6 includes one PRB. In this case, the terminal device performs measurement on the SB #6 and reports one PMI for the SB #6.

Manner b (corresponding to the manner B in step 1101): In the manner B, it is assumed that a maximum quantity of PRBs included in each resource set is K0 (that is, a value of $N_{PRB}^{SB}$ is K0), where K0 is an even number greater than 0. The first partial frequency domain range and the second partial frequency domain range include the N resource sets in total. For measurement and reporting manners of a 1st resource set, refer to the measurement and reporting manners of the resource set X1 in the manner a. For measurement and reporting manners of a last resource set, refer to the measurement and reporting manners of the resource set X2 in the manner a. For measurement and reporting manners of a middle resource set, refer to the measurement and reporting manners of the resource set X5 in the manner a. In the manner B, there may be a resource set that includes inconsecutive PRBs, and these PRBs are separated by the third resource. For measurement and reporting manners of the resource set, when the resource set is a 1st resource set, a last resource set, or a middle resource set, refer to the measurement and reporting manners of the resource set X1, the resource set X2, and the resource set X5 in the manner a respectively.

Specially, when N=1, for measurement and reporting manners of a resource set included in the first partial frequency domain range and the second partial frequency domain range, refer to measurement and reporting manners of the resource set X1 or the resource set X2 in the manner a.

For example, in FIG. 13, the SB #3 is the middle resource set and includes four PRBs, and a quantity of PRBs included in the SB #3 is equal to $N_{PRB}^{SB}$. The four PRBs are the PRB #12, the PRB #13, the PRB #14, and the PRB #26. In this case, the terminal device performs measurement on the PRB #12 and the PRB #13 and reports a 1st PMI for the PRB #12 and the PRB #13, and the terminal device performs measurement on the last two PRBs (namely, the PRB #14 and the PRB #26) and reports a 2nd PMI for the PRB #14 and the PRB #26.

Manner c (corresponding to the manner C in step 1101): For measurement and reporting manners of a resource set in this manner, when the resource set is a 1st resource set, a last resource set, or a middle resource set, refer to the measurement and reporting manners of the resource set X1, the resource set X2, and the resource set X5 respectively. Details are not described herein again. For an uplink resource set, the terminal device does not perform measurement and reporting. Specifically, in high layer configured csi-ReportingBand, a bit indicating a resource set in an uplink transmission direction may be configured as 0. Alternatively, when the terminal device determines that a resource set (or a PRB) does not carry a reference signal, for example, a CSI-RS, the terminal device does not perform measurement. This is not limited in this application. For example, in FIG. 14, the terminal device performs measurement and reporting on the SB #1, the SB #2, the SB #3, the SB #6, the SB #7, and the SB #8, and does not perform measurement on the SB #4 and the SB #5.

Possibility (2): The second resource includes a resource in a partial frequency domain range, and the third resource includes a resource in a remaining partial frequency domain range. Frequency domain resources included in the second resource are consecutive, and frequency domain resources included in the third resource are also consecutive.

Manner d (corresponding to the manner D in step 1101): For measurement and reporting manners of a resource set in this manner, when the resource set is a 1st resource set, a last resource set, or a middle resource set, refer to the measurement and reporting manners of the resource set X1, the resource set X2, and the resource set X5 respectively. Details are not described herein again.

For example, in FIG. 15, the terminal device separately performs measurement and reporting on the SB #1, the SB #2, and the SB #3, and does not perform measurement on the PRB #15 to the PRB #23.

Optionally, correspondingly to the possibility (3), the third resource may include resources in two different partial frequency domain ranges, the resources in the two different partial frequency domain ranges are separated by the second resource (the second resource includes a partial frequency domain range) in frequency domain, and the two partial frequency domain ranges include a third partial frequency domain range and a fourth partial frequency domain range. For reporting of a measurement result of each resource set, refer to descriptions of the manner d. For example, in the foregoing solution, the second resource is replaced with the third resource. Details are not described herein again.

Case 2: Corresponding to the case 2 in step 1101.

Possibility (1): The second resource includes resources in two different partial frequency domain ranges, and the resources in the two different partial frequency domain ranges are separated by the third resource in frequency domain. The two partial frequency domain ranges include a first partial frequency domain range and a second partial frequency domain range. The ID of the start PRB in the first partial frequency domain range is smaller than the ID of the start PRB in the second partial frequency domain range.

Manner e-1: It is assumed that a maximum quantity of PRBs included in each resource set is K1 (that is, a value of $N_{PRB}^{SB}$ is K1), where K1 is an even number greater than 0. The first partial frequency domain range includes the N1 resource sets, and the second partial frequency domain range includes the N2 resource sets. The first partial frequency domain range including the N1 resource sets may be understood as the first partial frequency domain range overlapping the N1 resource sets in frequency domain. The second partial frequency domain range including the N1 resource sets may be understood as the second partial frequency domain range overlapping the N2 resource sets in frequency domain. Details are not described subsequently.

A resource set Z1 is a start resource set in the first partial frequency domain range, and the resource set Z1 is a resource set whose start PRB has a smallest ID in the N1 resource sets (for example, the SB #1 in FIG. 16).

A resource set Z2 is an end resource set in the first partial frequency domain range, and the resource set Z2 is a resource set whose start PRB has a largest ID in the N1 resource sets (for example, the SB #3 in FIG. 16). A (Z2-2)$^{th}$ resource set includes a PRB that is overlapped between the first partial frequency domain range and the resource set Z2 (for example, the PRB #12, the PRB #13, and the PRB #14 in FIG. 16).

A resource set Z3 is a start resource set in the second partial frequency domain range, and the resource set Z3 is a resource set whose start PRB has a smallest ID in the N2 resource sets (for example, the SB #6 in FIG. 16). A (Z3-2)$^{th}$ resource set includes a PRB that is overlapped between the second partial frequency domain range and the resource set Z3 (for example, the PRB #26 and the PRB #27 in FIG. 16).

A resource set Z4 is an end resource set in the second partial frequency domain range, and the resource set Z4 is a resource set whose start PRB has a largest ID in the N2 resource sets (for example, the SB #8 in FIG. 16).

A resource set Z5 is a resource set other than the resource set Z1, the resource set Z2, the resource set Z3, and the resource set Z4 in the N1 resource sets and the N2 resource sets. It should be understood that a resource set other than the resource set Z1, the resource set Z2, the resource set Z3, and the resource set Z4 may be one or more resource sets Z5.

In each of the resource sets Z5, the terminal device performs measurement on first (K1/2) PRBs in each resource set and reports a 1$^{st}$ PMI for the (K1/2) PRBs; and the terminal device performs measurement on last (K1/2) PRBs in each resource set and reports a 2$^{nd}$ PMI for the (K1/2) PRBs.

When a quantity of PRBs included in the resource set Z1 and a quantity of PRBs included in the (Z3-2)$^{th}$ resource set is E1 and E3 respectively,

if E1 is less than or equal to K1/2, the terminal device performs measurement on the PRB in the resource set Z1 and reports one PMI for the resource set; or if E1 is greater than K1/2, the terminal device performs measurement on first (E1-(K1/2)) PRBs in the resource set Z1 and reports a 1$^{st}$ PMI for the (E1-(K1/2)) PRBs, and the terminal device performs measurement on last (K1/2) PRBs in the resource set Z1 and reports a 2$^{nd}$ PMI for the (K0/2) PRBs; and if E3 is less than or equal to K1/2, the terminal device performs measurement on the PRB in the (Z3-2)$^{th}$ resource set and reports one PMI for the resource set; or if E3 is greater than K1/2, the terminal device performs measurement on first (E3-(K1/2)) PRBs in the (Z3-2)$^{th}$ resource set and reports a 1$^{st}$ PMI for the (E3-(K1/2)) PRBs, and the terminal device performs measurement on last (K1/2) PRBs in the (E3-2)$^{th}$ resource set and reports a 2$^{nd}$ PMI for the (K0/2) PRBs.

When a quantity of PRBs included in the (Z2-2)$^{th}$ resource set and a quantity of PRBs included in the resource set Z4 are E2 and E4 respectively,

if E2 is less than or equal to K1/2, the terminal device performs measurement on the PRB in the (Z2-2)$^{th}$ resource set and reports one PMI for the resource set; or if E2 is greater than K1/2, the terminal device performs measurement on first (K1/2) PRBs in the (Z2-2)$^{th}$ resource set and reports a 1$^{st}$ PMI for the (K1/2) PRBs, and the terminal device performs measurement on last (E2-(K1/2)) PRBs in the (Z2-2)$^{th}$ resource set and reports a 2$^{nd}$ PMI for the (E2-(K1/2)) PRBs; and
if E4 is less than or equal to K1/2, the terminal device performs measurement on the PRB in the resource set Z4 and reports one PMI for the resource set; or if E4 is greater than K1/2, the terminal device performs measurement on first (K1/2) PRBs in the resource set Z4 and reports a $1^{st}$ PMI for the (K1/2) PRBs, and the terminal device performs measurement on last (E4-(K1/2)) PRBs in the resource set Z4 and reports a $2^{nd}$ PMI for the (E4-(K1/2)) PRBs.

Specially, when N1=1, for measurement and reporting manners of a resource set in the first partial frequency domain range, refer to measurement and reporting manners of the resource set Z1 or the $(Z2-2)^{th}$ resource set; or when N2=1, for measurement and reporting manners of a resource set in the second partial frequency domain range, refer to measurement and reporting manners of the $(Z3-2)^{th}$ resource set or the resource set Z4.

The foregoing solution may still be used when K1/2 is replaced with X, where X is a positive integer less than or equal to K1/2.

For example, in FIG. 16, K1 is 4.

The SB #1 includes one PRB. In this case, the terminal device performs measurement on the SB #1 and reports one PMI for the SB #1.

The SB #2 includes four PRBs. In this case, the terminal device performs measurement on the first two start PRBs (namely, the PRB #8 and the PRB #9) and reports a $1^{st}$ PMI for the PRB #8 and the PRB #9, and the terminal device performs measurement on the last two PRBs (namely, the PRB #10 and the PRB #11) and reports a $2^{nd}$ PMI for the PRB #10 and the PRB #11.

The SB #3 includes four PRBs, and PRBs that are overlapped between the SB #3 and the first partial frequency domain range are the PRB #12, the PRB #13, and the PRB #14. In this case, the terminal device performs measurement on the first two PRBs (namely, the PRB #12 and the PRB #13) and reports a $1^{st}$ PMI for the PRB #12 and the PRB #13, and the terminal device performs measurement on the last PRB (namely, the PRB #14) and reports a $2^{nd}$ PMI for the PRB #14.

The SB #6 includes four PRBs, and PRBs that are overlapped between the SB #6 and the second partial frequency domain range are the PRB #26 and the PRB #27. In this case, the terminal device performs measurement on two PRBs (namely, the PRB #26 and the PRB #27) and reports one PMI for the PRB #26 and the PRB #27.

The SB #7 includes four PRBs. In this case, the terminal device performs measurement on the first two PRBs (namely, the PRB #28 and the PRB #29) and reports a $1^{st}$ PMI for the PRB #28 and the PRB #29, and the terminal device performs measurement on the last two PRBs (namely, the PRB #30 and the PRB #31) and reports a $2^{nd}$ PMI for the PRB #30 and the PRB #31.

The SB #8 includes one PRB. In this case, the terminal device performs measurement on the SB #8 and reports one PMI for the SB #8.

Possibility (2): The second resource includes a resource in a partial frequency domain range, and the third resource includes a resource in a remaining partial frequency domain range. Frequency domain resources included in the second resource are consecutive, and frequency domain resources included in the third resource are also consecutive.

Possibility (2)-1: An ID of a start PRB of the second resource is smaller than an ID of a start PRB of the third resource.

For measurement and reporting manners of a resource set included in the second resource in this manner, when the resource set is a $1^{st}$ resource set, a last resource set, or a middle resource set, refer to the measurement and reporting manners of the resource set Z1, the resource set Z2, and the resource set Z5 in the manner e-1 respectively. Details are not described herein again.

Specially, when the second resource includes one resource set, for measurement and reporting manners of the resource set, refer to the measurement and reporting manners of the resource set Z1 or the $(Z2-2)^{th}$ resource set.

For another example, in FIG. 17, the SB #1 includes one PRB. In this case, the terminal device performs measurement on the SB #1 and reports one PMI for the SB #1.

The SB #2 includes four PRBs. In this case, the terminal device performs measurement on the first two start PRBs (namely, the PRB #8 and the PRB #9) and reports a $1^{st}$ PMI for the PRB #8 and the PRB #9, and the terminal device performs measurement on the last two PRBs (namely, the PRB #10 and the PRB #11) and reports a $2^{nd}$ PMI for the PRB #10 and the PRB #11.

The SB #3 includes four PRBs, and PRBs that are overlapped between the SB #3 and the first partial frequency domain range are the PRB #12, the PRB #13, and the PRB #14. In this case, the terminal device performs measurement on the first two PRBs (namely, the PRB #12 and the PRB #13) and reports a $1^{st}$ PMI for the PRB #12 and the PRB #13, and the terminal device performs measurement on the last PRB (namely, the PRB #14) and reports a $2^{nd}$ PMI for the PRB #14. It may be understood that the SB #3 may be considered as the last resource set of the second resource. For measurement and reporting manners of the SB #3, refer to the measurement and reporting manners of the resource set in the manner e-1 Z2.

The terminal device does not perform measurement or reporting on the PRB #15 to the PRB #23.

Possibility (2)-2: An ID of a start PRB of the second resource is larger than an ID of a start PRB of the third resource.

For measurement and reporting manners of a resource set included in the second resource in this manner, when the resource set is a $1^{st}$ resource set, a last resource set, or a middle resource set, refer to the measurement and reporting manners of the resource set Z3, the resource set Z4, and the resource set Z5 in the manner e-1 respectively. Details are not described herein again.

Specially, when the second resource includes one resource set, for measurement and reporting manners of the resource set, refer to the measurement and reporting manners of the $(Z3-2)^{th}$ resource set or the resource set Z4.

Possibility (3): The third resource includes resources in two different partial frequency domain ranges, and the resources in the two different partial frequency domain ranges are separated by the second resource in frequency domain.

For measurement and reporting manners of a resource set included in the second resource in this manner, when the resource set is a $1^{st}$ resource set, a last resource set, or a middle resource set, refer to the measurement and reporting manners of the resource set Z3, the resource set Z2, and the resource set Z5 in the manner e-1 respectively. Details are not described herein again.

Specially, when the second resource includes one resource set, for measurement and reporting manners of the resource set, refer to the measurement and reporting manners of the $(Z3-2)^{th}$ resource set or the resource set Z2.

It should be understood that the measurement and reporting manners may be configured, may be predefined, or may be indicated. This is not limited in embodiments of this application.

It should be further understood that X1, X2, Z1, Z2, and the like are merely used as an example of a set name. This application is not limited thereto. For example, the set name may be represented by a number, for example, a first resource set or a second resource set.

In the foregoing manner, resource set-level measurement and reporting manners are provided for different resource states, so that only a resource for downlink transmission can be measured and reported. This improves accuracy of channel measurement.

The terminal device measures only the resource for downlink transmission, so that impact of some uplink resources on a channel measurement result is avoided, accuracy of channel measurement is improved, and communication performance can be improved.

The foregoing manner is an example in which the PMI is used as a measurement result. When the CQI is used as a measurement result, measurement is performed according to step 1102, so that accuracy of a wideband CQI measurement result and a subband CQI measurement result can be ensured. In addition, the terminal device may send the measurement result (CQI) according to a feedback manner of a wideband CQI and a subband CQI in an existing protocol such as 3GPP 38.214. Correspondingly, the network device receives the measurement result.

The foregoing method is related description of CSI-RS measurement. The following describes a UE-UE CLI measurement solution in detail.

This application provides another embodiment. A communication method in this embodiment may be applied to CLI measurement between UEs, so that accuracy of CLI measurement can be improved. As shown in FIG. 18, the method may include the following steps.

Step 1801: A network device sends configuration information to a terminal device, and correspondingly, the terminal device receives the configuration information.

The configuration information indicates a CLI resource (namely, a fourth resource). The fourth resource is used for downlink transmission. The fourth resource includes L resource sets, each of the L resource sets includes at least one PRB, and the L resource sets do not overlap each other.

Optionally, a quantity of PRBs included in each of the L resource sets may be determined in the following manners:

Manner (1): The quantity of PRBs is determined based on a BWP bandwidth, a configuration table (namely, Table 1), and indication information. Specifically, refer to related content in the foregoing part "subband reporting". Details are not described herein again.

Manner (2): The quantity of PRBs is determined based on a BWP bandwidth or a bandwidth of the fourth resource, a CLI resource configuration table, and indication information. The configuration table herein is different from Table 1. Specifically, there may be the following implementations:

Implementation 1: A maximum quantity of PRBs that can be included in the resource set is jointly determined based on a quantity of PRBs (PRBs) included in a BWP and high layer configuration information.

Example 1: In an interval of the quantity of PRBs included in the BWP, there are two optional values of the maximum quantity of PRBs that can be included in the resource set, as shown in Table 4.

Table 4 Relationship between the quantity of PRBs included in the BWP and the maximum quantity of PRBs that can be included in the resource set

| Quantity of PRBs (PRBs) included in the BWP | Maximum quantity of PRBs (PRBs) that can be included in the resource set |
| --- | --- |
| 24-72 | 2, 4 |
| 73-144 | 4, 8 |
| 145-275 | 8, 16 |

It can be learned from Table 4 that when the quantity of PRBs included in the BWP ranges from 24 to 72, the value of the maximum quantity of PRBs that can be included in the resource set may be 2 or 4; or when the quantity of PRBs included in the BWP ranges from 73 to 144, the value of the maximum quantity of PRBs that can be included in the resource set may be 4 or 8; or when the quantity of PRBs included in the BWP ranges from 145 to 275, the value of the maximum quantity of PRBs that can be included in the resource set may be 8 or 16.

Example 2: In an interval of the quantity of PRBs included in the BWP, there is one or more than two optional values of the maximum quantity of PRBs that can be included in the resource set, as shown in Table 5-1.

Table 5-1 Relationship between the quantity of PRBs included in the BWP and the maximum quantity of PRBs that can be included in the resource set

| Quantity of PRBs (PRBs) included in the BWP | Maximum quantity of PRBs (PRBs) that can be included in the resource set |
| --- | --- |
| 24-72 | 2, 4, 8 |
| 73-144 | 4, 8, 16 |
| 145-275 | 8, 16, 32 |

It can be learned from Table 5-1 that when the quantity of PRBs included in the BWP ranges from 24 to 72, the value of the maximum quantity of PRBs that can be included in the resource set may be 2, 4, or 8; or when the quantity of PRBs included in the BWP ranges from 73 to 144, the value of the maximum quantity of PRBs that can be included in the resource set may be 4, 8, or 16; or when the quantity of PRBs included in the BWP ranges from 145 to 275, the value of the maximum quantity of PRBs that can be included in the resource set may be 8, 16, or 32.

Table 5-2 Relationship between the quantity of PRBs included in the BWP and the maximum quantity of PRBs that can be included in the resource set

| Quantity of PRBs (PRBs) included in the BWP | Maximum quantity of PRBs (PRBs) that can be included in the resource set |
| --- | --- |
| 24-72 | 4 |
| 73-144 | 8 |
| 145-275 | 16 |

It can be learned from Table 5 that when the quantity of PRBs included in the BWP ranges from 24 to 72, the value of the maximum quantity of PRBs that can be included in the resource set is 4; or when the quantity of PRBs included in the BWP ranges from 73 to 144, the value of the maximum quantity of PRBs that can be included in the resource set is 8; or when the quantity of PRBs included in the BWP ranges from 145 to 275, the value of the maximum quantity of PRBs that can be included in the resource set is 16.

Implementation 2: A maximum quantity of PRBs that can be included in the resource set is jointly determined based on a quantity of PRBs included in the fourth resource and a high layer configuration.

Example 1: In an interval of the quantity of PRBs included in the fourth resource, there are two optional values of the maximum quantity of PRBs that can be included in the resource set, as shown in Table 6.

Table 6 Relationship between the quantity of PRBs included in the fourth resource and the maximum quantity of PRBs that can be included in the resource set

| Quantity of PRBs (PRBs) included in the fourth resource | Maximum quantity of PRBs (PRBs) that can be included in the resource set |
| --- | --- |
| 24-72 | 4, 8 |
| 73-144 | 8, 16 |
| 145-275 | 16, 32 |

It can be learned from Table 6 that when the quantity of PRBs included in the fourth resource ranges from 24 to 72, the value of the maximum quantity of PRBs that can be included in the resource set may be 4 or 8; or when the quantity of PRBs included in the BWP ranges from 73 to 144, the value of the maximum quantity of PRBs that can be included in the resource set may be 8 or 16; or when the quantity of PRBs included in the BWP ranges from 145 to 275, the value of the maximum quantity of PRBs that can be included in the resource set may be 16 or 32.

Example 2: In an interval of the quantity of PRBs included in the fourth resource, there is one or more than two optional values of the maximum quantity of PRBs that can be included in the resource set, as shown in Table 7-1.

Table 7-1 Relationship between the quantity of PRBs included in the fourth resource and the maximum quantity of PRBs that can be included in the resource set

| Quantity of PRBs (PRBs) included in the fourth resource | Maximum quantity of PRBs (PRBs) that can be included in the resource set |
| --- | --- |
| 24-72 | 2, 4, 8 |
| 73-144 | 4, 8, 16 |
| 145-275 | 8, 16, 32 |

It can be learned from Table 7-1 that when the quantity of PRBs included in the fourth resource ranges from 24 to 72, the value of the maximum quantity of PRBs that can be included in the resource set may be 2, 4, or 8; or when the quantity of PRBs included in the fourth resource ranges from 73 to 144, the value of the maximum quantity of PRBs that can be included in the resource set may be 4, 8, or 16; or when the quantity of PRBs included in the fourth resource ranges from 145 to 275, the value of the maximum quantity of PRBs that can be included in the resource set may be 8, 16, or 32.

See Table 7-2.

Table 7-2 Relationship between the quantity of PRBs included in the BWP and the maximum quantity of PRBs that can be included in the resource set

| Quantity of PRBs (PRBs) included in the fourth resource | Maximum quantity of PRBs (PRBs) that can be included in the resource set |
| --- | --- |
| 24-72 | 4 |
| 73-144 | 8 |
| 145-275 | 16 |

It can be learned from Table 7-2 that when the quantity of PRBs included in the BWP ranges from 24 to 72, the value of the maximum quantity of PRBs that can be included in the resource set is 4; or when the quantity of PRBs included in the BWP ranges from 73 to 144, the value of the maximum quantity of PRBs that can be included in the resource set is 8; or when the quantity of PRBs included in the BWP ranges from 145 to 275, the value of the maximum quantity of PRBs that can be included in the resource set is 16.

In the manner (1) and the manner (2), for resource distribution in the L resource sets, refer to related descriptions in the case 1 and the case 2 in step 1101. Quantities of PRBs included in each resource set may be different. Other aspects are similar, and details are not described again.

Manner (3): The quantity of PRBs is determined based on a fact that different resource sets may include different quantities of PRBs.

In other words, non-uniform division of the resource set is supported in this manner. For example, the terminal device may determine a quantity of PRBs in each resource set based on indication information and a division rule. An example of the division rule is as follows: A maximum quantity of PRBs that can be included in a resource set corresponding to a resource set close to an edge part of a UL frequency domain range is the smallest.

Example 1: There is one optional value of a maximum quantity of PRBs that can be included in each resource set, as shown in Table 8-1.

Table 8-1 Relationship between the resource set and the maximum quantity of PRBs that can be included in the resource set

| Resource set (SB) | Maximum quantity of PRBs (PRBs) that can be included in the resource set |
|---|---|
| SB #1 | 2 |
| SB #2 | 4 |
| SB #3 | 8 |
| SB #4 | 16 |

It can be learned from Table 8-1 that the SB #1 may include a maximum of two PRBs, the SB #2 may include a maximum of four PRBs, the SB #3 may include a maximum of eight PRBs, the SB #4 may include a maximum of 16 PRBs, and an $n^{th}$ SB may include a maximum of 16 PRBs, where n is greater than 4.

Example 2: There are two or more than two optional values of a maximum quantity of PRBs that can be included in each resource set, as shown in Table 8-2.

Table 8-2 Relationship between the resource set and the maximum quantity of PRBs that can be included in the resource set

| SB | Maximum quantity of PRBs (PRBs) that can be included in the resource set |
|---|---|
| SB #1 | 2, 4 |
| SB #2 | 4, 8 |
| SB #3 | 8, 16 |
| SB #4 | 16, 32 |

It can be learned from Table 8-2 that a value of a maximum quantity of PRBs that can be included in the SB #1 may be 2 or 4; a value of a maximum quantity of PRBs that can be included in the SB #2 may be 4 or 8; a value of a maximum quantity of PRBs that can be included in the SB #3 may be 8 or 16; and a value of a maximum quantity of PRBs that can be included in the SB #4 may be 16 or 32. Specifically, one of two values may be specifically used based on an indication of a high layer configuration parameter.

For example, the high layer configuration parameter subbandsize={2, 4, 8, 16} indicates that the value of the maximum quantity of PRBs that can be included in the SB #1 is 2, the value of the maximum quantity of PRBs that can be included in the SB #2 is 4, the value of the maximum quantity of PRBs that can be included in the SB #3 is 8, the value of the maximum quantity of PRBs that can be included in the SB #4 is 16, and the $n^{th}$ SB may include a maximum of 16 PRBs, where n is greater than 4.

For example, the high layer configuration parameter subbandsize= {value 1} indicates that the value of the maximum quantity of PRBs that can be included in the SB #1 is 2, the value of the maximum quantity of PRBs that can be included in the SB #2 is 4, the value of the maximum quantity of PRBs that can be included in the SB #3 is 8, and the value of the maximum quantity of PRBs that can be included in the SB #4 is 16. The high layer configuration parameter subbandsize={value 2} indicates that the value of the maximum quantity of PRBs that can be included in the SB #1 is 4, the value of the maximum quantity of PRBs that can be included in the SB #2 is 8, the value of the maximum quantity of PRBs that can be included in the SB #3 is 16, the value of the maximum quantity of PRBs that can be included in the SB #4 is 32, and the $n^{th}$ SB may include a maximum of 32 PRBs, where n is greater than 4.

Optionally, a maximum quantity of PRBs that can be included in a resource set may be explicitly indicated or implicitly indicated. This is not limited in this application.

It should be understood that tables in this application are merely used as examples instead of limitations, and numbers in the foregoing examples are also merely used as examples instead of limitations.

In the manner (3), a PRB adjacent to a UL resource may be used as a start point, and division is sequentially performed based on an optional value of the maximum quantity of PRBs that can be included in the resource set.

For example, a quantity of resources included in each resource set, for example, a quantity of PRBs, may be determined based on a parameter #E. The fourth resource includes G resource sets, and may be divided into two partial frequency domain ranges. The parameter # E may include at least one of the following: a maximum quantity of PRBs included in any one of the G resource sets, an ID of a start PRB occupied by resources in a first partial frequency domain range, an ID of a start PRB occupied by resources in a second partial frequency domain range, and a total quantity of PRBs included in the resources in the first partial frequency domain range and the resources in the second partial frequency domain range. The maximum quantity of PRBs included in any resource set may be determined according to Table 8-1. This is not limited herein.

Possibility (1): The fourth resource includes resources in two different partial frequency domain ranges, and the resources in the two different partial frequency domain ranges are separated by the fifth resource in frequency domain.

The two partial frequency domain ranges include a partial frequency domain range A and a partial frequency domain range B. An ID of an end PRB of the partial frequency domain range A is smaller than an ID of a start PRB of a first resource, and an ID of a start PRB of the partial frequency domain range B is larger than an ID of an end PRB of the first resource. The partial frequency domain range A includes N1 resource sets, the partial frequency domain range B includes N2 resource sets, and the fourth resource includes N resource sets, where N=N1+N2.

For example, a possible calculation manner is as follows:

$$Q_1 = min\{N_1^{size}, N_{PRB}^{SB,1}\};$$

$$Q_2 = min\{N_1^{size} - Q_1, N_{PRB}^{SB,2}\};$$

$$Q_{n1} = min\{N_1^{size} - \sum_{n=1}^{n1-1} Q_n, N_{PRB}^{SB,n1}\};$$

$$Q_{N1} = min\{N_1^{size} - \sum_{n=1}^{N1-1} Q_n, N_{PRB}^{SB,N1}\};$$

$$Q_1' = min\{N_2^{size}, N_{PRB}^{SB,1}\};$$

$$Q_2' = min\{N_2^{size} - Q_1', N_{PRB}^{SB,2}\};$$

$$Q_{n2}' = min\{N_2^{size} - \sum_{n=1}^{n2-1} Q_n, N_{PRB}^{SB,n2}\};$$

and

$$Q_{N2}' = min\{N_1^{size} - \sum_{n=1}^{N2-1} Q_n, N_{PRB}^{SB,N2}\},$$

where

$Q_1$ is a quantity of PRBs included in a resource set ranked last in the N1 resource sets;
$Q_{N1}$ is a quantity of PRBs included in a resource set ranked first in the N1 resource sets;
$Q_{n1}$ is a quantity of PRBs included in a resource set n1 of the N1 resource sets;

$Q_1'$ is a quantity of PRBs included in a resource set ranked first in the N2 resource sets;

$Q_{N2}'$ is a quantity of PRBs included in a resource set ranked last in the N2 resource sets;

$Q_{n2}'$ is a quantity of PRBs included in a resource set n2 of the N2 resource sets;

$N_{PRB}^{SB,n1}$ is a maximum quantity of RBs in the resource set n1 of the resource sets; and

$N_1^{size}$ and $N_2^{size}$ are a total quantity of PRBs included in the partial frequency domain range A and a total quantity of PRBs included in the partial frequency domain range B respectively.

For explanations of the resource set ranked last and the resource set ranked first, refer to related descriptions in step 1101. Details are not described herein again.

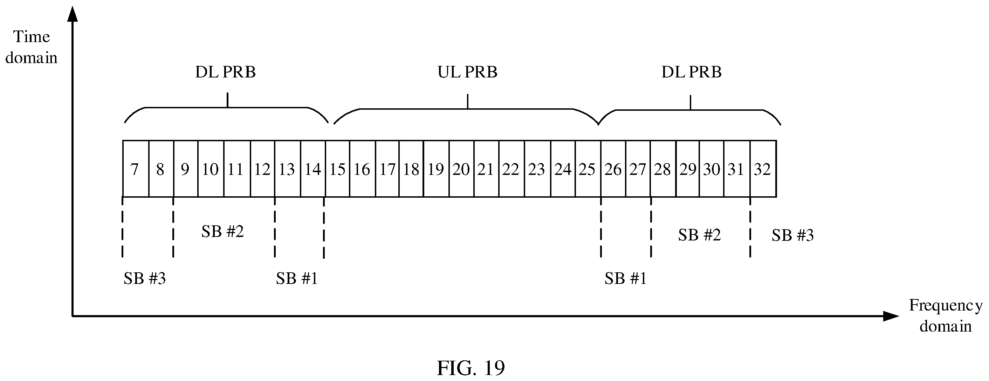

For example, as shown in FIG. 19, in the partial frequency domain range B, a PRB #26 and a PRB #27 constitute an SB #1, a PRB #28 to a PRB #31 constitute an SB #2, and an RRB #32 constitutes an SB #3 (when a quantity of PRBs is less than 8, calculation is performed based on remaining PRBs). In the partial frequency domain range A, a PRB #13 and a PRB #14 constitute an SB #1, a PRB #9 to a PRB #12 constitute an SB #2, and a PRB #7 and a PRB #8 constitute an SB #3 (when a quantity of PRBs is less than 8, calculation is performed based on remaining PRBs).

In the example in FIG. 19, an SB with a same index (an index of the SB #1 is 1) exists in the partial frequency domain range A and the partial frequency domain range B. Embodiments of this application are not limited thereto. For example, an index of a start SB in the partial frequency domain range B may alternatively be N1+1.

It should be understood that, because all the PRBs included in the first resource are arranged in ascending order of frequencies, a resource set ranked first or ranked last may be further determined based on an end PRB included in the resource set. Embodiments of this application are not limited thereto.

It should be understood that, in the embodiment, in the partial frequency domain range A, a $1^{st}$ resource set is a resource set with a largest start PRB, an $N1^{th}$ set is a resource set with a smallest start PRB, and the $n1^{th}$ resource set and an $(n1+1)^{th}$ resource set need to meet the following relationship: an ID of a start PRB of the $n1^{th}$ resource set is larger than an ID of a start PRB of the $(n1+1)^{th}$ resource set. In the partial frequency domain range B, a $1^{st}$ resource set is a resource set with a smallest start PRB, an $N1^{th}$ set is a resource set with a largest start PRB, and the $n1^{th}$ resource set and an $(n1+1)^{th}$ resource set need to meet the following relationship: an ID of a start PRB of the $n1^{th}$ resource set is smaller than an ID of a start PRB of the $(n1+1)^{th}$ resource set.

Possibility (2): The fourth resource includes a resource in a partial frequency domain range, and a fifth resource includes a resource in a remaining partial frequency domain range. Frequency domain resources included in the fourth resource are consecutive, and frequency domain resources included in the fifth resource are also consecutive.

When a largest ID of a PRB included in the fourth resource is less than a largest ID of a PRB in the third resource, a division manner of a resource set may be obtained based on the partial frequency domain range A in the possibility (1). When a smallest ID of a PRB included in the fourth resource is larger than a largest ID of a PRB in the fifth resource, a division manner of a resource set may be obtained based on the partial frequency domain range B in the possibility (1). Details are not described herein again.

Optionally, the fifth resource may include resources in two different partial frequency domain ranges, the resources in the two different partial frequency domain ranges are separated by the fourth resource (the fourth resource includes a partial frequency domain range) in frequency domain, and the two partial frequency domain ranges include a partial frequency domain range C and a partial frequency domain range D. For reporting of a measurement result of each resource set, refer to descriptions of the possibility (1) in step 1801. For example, in the foregoing solution, the fourth resource is replaced with the fifth resource, the partial frequency domain range A is replaced with the partial frequency domain range C, and the partial frequency domain range B is replaced with the partial frequency domain range D. Details are not described herein.

It should be understood that the partial frequency domain range A, the partial frequency domain range B, the partial frequency domain range C, and the partial frequency domain range D are merely used as examples of names of related frequency domain ranges. This application is not limited thereto. For example, the foregoing partial frequency domain range may also be referred to as a frequency domain range I or a frequency domain range II.

Step 1802: The terminal device #B separately performs CLI measurement on the L resource sets.

For example, the terminal device #B may measure the CLIs based on the L resource sets in step 1801.

Optionally, the method may further include the following steps.

Step 1803: The terminal device sends a measurement result to the network device, and correspondingly, the network device receives the measurement result.

The measurement result may be a CLI-SRS-RSRP, an SINR, and/or a CLI-RSSI. The following uses the CLI-RSSI as an example to describe reporting of the measurement result by the terminal device.

Optionally, the terminal device may report a measurement result greater than a specific threshold. For example, the terminal device separately measures the resource sets to obtain CLI-RSSIs respectively corresponding to the resource sets. For example, the terminal device measures the SB #1 to obtain a CLI-RSSI #1, measures the SB #2 to obtain a CLI-RSSI #2, and measures the SB #3 to obtain a CLI-RSSI #3. If a value of the CLI-RSSI #1 is 2, a value of the CLI-RSSI #2 is 6, a value of the CLI-RSSI #3 is 5, and the threshold is 4, the terminal device sends the CLI-RSSI #2 and the CLI-RSSI #3 to the network device, and does not send the CLI-RSSI #1. In other words, when interference is greater than a specific threshold, the terminal device reports an interference measurement result to the network device. It should be understood that the threshold may be predefined, may be configured, or may be indicated by the network device to the terminal device. This is not limited in embodiments of this application.

When the terminal device sends the CLI-RSSI to the network device, there may be the following several manners: Manner 1: The terminal device reports a reference value and a difference between a remaining measurement result and the reference value to the network device.

Optionally, the reference value may be one of a plurality of measurement results.

In a possible implementation, the terminal device sends a real value (real value) of the reference value and a real value of the difference between the remaining measurement result and the reference value to the network device. For example, the terminal device measures the SB #1 to obtain the CLI-RSSI #1, measures the SB #2 to obtain the CLI-RSSI #2, and measures the SB #3 to obtain the CLI-RSSI #3. The value of the CLI-RSSI #1 is 2, the value of the CLI-RSSI #2 is 6, and the value of the CLI-RSSI #3 is 5. The terminal device may use the value of the CLI-RSSI #1 as the reference value, and determine the difference between the remaining measurement result and the reference value. For example, a difference between the value of the CLI-RSSI #2 and the reference value is 4, and a difference between the value of the CLI-RSSI #3 and the reference value is 3. The terminal device sends the reference value 2, the difference 4, and the difference 3 to the network device.

In another possible implementation, the terminal device sends, to the network device, an index corresponding to the reference value and a representation value of a difference between an index of the remaining measurement result and the index of the reference value. For example, the terminal device measures the SB #1 to obtain the CLI-RSSI #1, measures the SB #2 to obtain the CLI-RSSI #2, and measures the SB #3 to obtain the CLI-RSSI #3. The value of the CLI-RSSI #1 is 2, the value of the CLI-RSSI #2 is 6, and the value of the CLI-RSSI #3 is 5. The terminal device may use the value of the CLI-RSSI #2 as the reference value. An index corresponding to the reference value 6 is an index 5, an index corresponding to the value 2 of the CLI-RSSI #1 is an index 1, and an index corresponding to the value 5 of the CLI-RSSI #3 is an index 4. Therefore, a difference between the index corresponding to the value of the CLI-RSSI #1 and the index corresponding to the reference value is 4, and a corresponding representation value is 2; and a difference between the index corresponding to the value of the CLI-RSSI #3 and the index corresponding to the reference value is 1, and a corresponding representation value is 1. For a correspondence between the difference of the index and the representation value, refer to Table 2. Details are not described herein again. In this case, the terminal device sends the index 5 of the reference value, an index 2 of the difference, and the index 1 of the difference to the network device. It should be understood that Table 2 is merely used as an example instead of a limitation.

It may be understood that, in the foregoing two implementations, to enable the network device to learn of a resource set corresponding to a difference, the terminal device may further send a correspondence between the difference and the resource set to the network device. For example, the difference 4 corresponds to the CLI-RSSI #2, and the difference 3 corresponds to the CLI-RSSI #3. It should be understood that the correspondence may also be predefined. Alternatively, the terminal device sends the difference and the index of the resource set corresponding to the difference. For another example, the terminal device may report the differences in a specific order, for example, send the difference 4 and the difference 3 in a sequence of the SB #2 and the SB #3. The sending sequence may be predefined, or may be configured, or may be indicated by the terminal device to the network device, or may be indicated by the network device to the terminal device. This is not limited in embodiments of this application. Alternatively, the network device or the terminal device may preconfigure a plurality of sending rules, and may determine a rule before sending, and perform sending according to the rule. In conclusion, a rule based on which the measurement result is sent needs to be known by both the network device and the terminal device. In this way, the two communication parties can determine the correspondence between the measurement result and the resource set.

Optionally, in the foregoing two implementations, the terminal device may determine the reference value by using, as the reference value, an RSSI corresponding to a resource set with the largest RSSI; or using, as the reference value, an RSSI corresponding to a resource set with the largest RSSI in a resource set adjacent to a resource for uplink transmission; or using, as the reference value, an RSSI corresponding to a resource set with a smallest ID in a resource set adjacent to a resource for uplink transmission; or using, as the reference value, an RSSI corresponding to a resource set with a largest ID in a resource set adjacent to a resource for uplink transmission. This is not limited in embodiments of this application.

Optionally, the terminal device may distinguish between the reference value and the difference, or distinguish between an index of the reference value and an index of the difference by using different quantities of bits. A quantity of bits used to represent the reference value (or an index of a reference value) and a quantity of bits used to represent the difference (or a difference index) are different. For example, the quantity of the bits used to represent the reference value (or the index of the reference value) is greater than the quantity of the bits used to represent the difference (or the difference index). In this way, when receiving different quantities of bits, the network device can also distinguish between the reference value and the difference.

Optionally, the terminal device may alternatively indicate, by using the indication information, that the reported information is the difference or the reference value. In this way, when receiving the indication information and the reported value, the network device can also distinguish between the reference value and the difference.

Manner 2: The terminal device reports, to the network device, a measurement result corresponding to each resource set.

For example, the terminal device measures the SB #1 to obtain the CLI-RSSI #1, measures the SB #2 to obtain the CLI-RSSI #2, and measures the SB #3 to obtain the CLI-RSSI #3. The value of the CLI-RSSI #1 is 2, the value of the CLI-RSSI #2 is 6, and the value of the CLI-RSSI #3 is 5. The terminal device may send, to the network device, a real value of a CLI-RSSI corresponding to each resource set, or may send, to the network device, an index of the real value of the CLI-RSSI corresponding to each resource set. It may be understood that the terminal device further sends a correspondence between the real value (or the index) of the CLI-RSSI and each resource set to the network device. Specifically, refer to descriptions of the correspondence in the manner 1. Details are not described herein again.

Manner 3: The terminal device reports a wideband measurement result of a CLI resource and a difference between a measurement result corresponding to each resource set and the wideband measurement result to the network device.

The wideband measurement result may be an average value of RSSIs of all reported resource sets, or may be an average value of RSSIs of all measured resource sets.

For example, the terminal device measures the SB #1 to obtain the CLI-RSSI #1, measures the SB #2 to obtain the CLI-RSSI #2, and measures the SB #3 to obtain the CLI-RSSI #3. The value of the CLI-RSSI #1 is 2, the value of the CLI-RSSI #2 is 6, and the value of the CLI-RSSI #3 is 5. The terminal device measures the CLI resource to obtain a CLI-RSSI value (13/3). The terminal device may send, to the network device, a wideband measurement value, namely, (13/3), and a difference between the measurement result of each resource set and the wideband measurement, namely, 2-(13/3), 6-(13/3), and 5-(13/3). Alternatively, the terminal device sends, to the network device, an index value corresponding to the wideband measurement value and an index value corresponding to a difference between the measurement result of each resource set and the wideband measurement. It may be understood that the terminal device further sends a correspondence between a real value (or an index) of the CLI-RSSI and each resource set to the network device. Specifically, refer to descriptions of the correspondence in the manner 1. Details are not described herein again.

It should be understood that the foregoing solution is described by using an example in which the difference is used as a relative value. However, this application is not limited thereto. For example, the wideband measurement result and the measurement result of each resource set are used. The terminal device may also report a ratio of the measurement result of each resource set to the wideband measurement result, or another operation value that can represent a relative relationship, for example, a logarithmic operation, which shall fall within the protection scope of this application.

In this embodiment, a method for configuring a CLI resource between UEs is provided, to avoid a possible overlap between the resource for uplink transmission and an actual downlink UE-UE CLI measurement resource; and a measurement method and a reporting method based on a configured resource are provided. This improves accuracy of channel measurement.

The foregoing describes in detail CLI measurement between UEs, and the following describes CLI measurement between network devices.

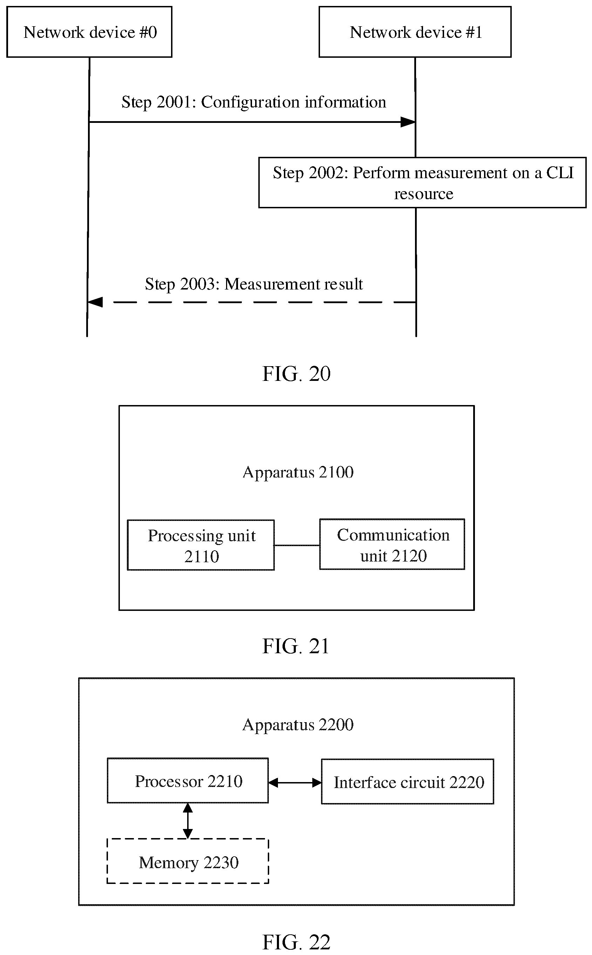

This application provides still another embodiment. This embodiment provides a communication method. As shown in FIG. 20, the method may include the following steps.

Step 2001: A network device #0 sends configuration information to a network device #1, and correspondingly, the network device #1 receives the configuration information.

The configuration information is used to configure a CLI measurement resource. Specifically, for configuration of the CLI resource, refer to related descriptions of the first resource, the second resource, and the third resource in step 1101. Details are not described herein again. A difference lies in that a transmission direction in the CLI resource herein is different from that in step 1101. The CLI resource is a resource for uplink transmission. For example, when the CLI resource includes uplink resources in two partial frequency domain ranges and downlink resources in one partial frequency domain range, for resource distribution of the CLI resource, refer to related descriptions of the manner A to the manner C in step 1101. When the CLI resource includes uplink resources in one partial frequency domain range and downlink resources in one partial frequency domain range, or when the CLI resource includes uplink resources in one partial frequency domain range and downlink resources in two partial frequency domain ranges, refer to related descriptions of the manner D in step 1101. When some CLI resources and a downlink resource belong to a same resource set, refer to descriptions of the case 2 in step 1101. Details are not described herein again.

Step 2002: The network device #1 performs measurement on the CLI resource.

Specifically, for the measurement manner, refer to descriptions of step 1102. Details are not described herein again.

Optionally, the method may further include the following steps.

Step 2003: The network device #1 sends a measurement result to the network device #0, and correspondingly, the network device receives the measurement result.

Specifically, for a manner in which the network device sends the measurement result to the network device #0, refer to descriptions in step 1803. Details are not described herein again.

In this embodiment, a manner for configuring a CLI resource between network devices is provided, to avoid a possible overlap between an actual cell-cell CLI measurement resource and a resource for downlink transmission; and a measurement method and a reporting method based on a configured resource are provided. This improves accuracy of channel measurement.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 21 and FIG. 22 each are a diagram of a structure of a possible communication apparatus according to an embodiment of this application. The communication apparatus may be configured to implement the functions of the terminal device or the network device in the foregoing method embodiments, and therefore can also implement the beneficial effects in the foregoing method embodiments. In embodiments of this application, the communication apparatus may be one of the terminals 120a to 120j shown in FIG. 1, may be the base station 110a or 110b shown in FIG. 1, or may be a module (for example, a chip) used in the terminal or the base station.

As shown in FIG. 21, the communication apparatus 2100 includes a processing unit 2110 and a transceiver unit 2120. The communication apparatus 2100 is configured to implement a function of the terminal device or the network device in the method embodiment shown in FIG. 11, FIG. 18, or FIG. 20.

The following describes a case in which the communication apparatus 2100 is configured to implement the function of the terminal device in the method embodiment shown in FIG. 11.

The transceiver unit 2120 is configured to receive configuration information, where the configuration information indicates a first resource for CSI-RS measurement. The first resource includes a second resource and a third resource, the second resource is used for downlink transmission, and the third resource is used for uplink transmission. The second resource and the third resource are different frequency domain resources on a same time domain resource. In other words, the second resource and the third resource are a same resource in time domain and are different resources in frequency domain.

The processing unit 2110 is configured to obtain a measurement result based on an interference measurement signal. Correspondingly to the possible implementation A in step 1102, the terminal device may separately measure the CSI-RS on M resource sets in N resource sets by using the processing unit, where M is less than or equal to N, and M and N are positive integers. In other words, the terminal device may measure, by using the processing unit, the CSI-RS on a resource for downlink transmission (namely, the second resource) configured based on the configuration information, or on a part of the resource for downlink transmission (namely, a part of the second resource or a subset of the second resource) configured based on the configuration information.

Correspondingly to the possible implementation B in step 1102, the terminal device may measure, by using the processing unit, the CSI-RS on a resource that is in the first resource and that is for downlink transmission, rather than a resource that is in the first resource and that is for uplink transmission. For example, in FIG. 16, the processing unit performs measurement only on the PRB #1 to the PRB #14 and the PRB #26 to the PRB #32.

Optionally, the transceiver unit may further receive indication information, where the indication information indicates a to-be-measured resource. For example, an N-bit bitmap may be high layer configured to indicate the M resource sets that are in the N resource sets and that are for measurement, where one bit corresponds to one resource set, and when an $n^{th}$ bit is 1, it indicates that measurement is performed on an $n^{th}$ resource set. For example, an N-bit bitmap in a high layer configuration parameter csi-ReportingBand indicates the M resource sets that are in the N resource sets and that are for measurement. One bit corresponds to one resource set, and when an $n^{th}$ bit is 1, it indicates that measurement is performed on an $n^{th}$ resource set. The processing unit determines a measurement resource based on the indication information, and performs measurement on the measurement resource.

The transceiver unit 2120 is further configured to send the measurement result to the network device. An example in which a PMI is used as the measurement result is as follows:

The second resource includes resources in two different partial frequency domain ranges, and the resources in the two different partial frequency domain ranges are separated by the third resource in frequency domain.

Specifically, the manner a in step 1103 is used as an example of reporting the PMI by the terminal device.

It is assumed that a maximum quantity of PRBs included in each resource set is K0 (that is, a value of $N_{PRB}^{SB}$ is K0), where K0 is an even number greater than 0. A first partial frequency domain range includes N1 resource sets, and a second partial frequency domain range includes N2 resource sets.

A resource set X1 is a start resource set in the first partial frequency domain range, and the resource set X1 is a resource set whose start PRB has a smallest ID in the N1 resource sets (for example, the SB #1 in FIG. 12(c)).

The resource set X2 is an end resource set in the first partial frequency domain range, and the resource set X2 is a resource set whose start PRB has a largest ID in the N1 resource sets (for example, the SB #3 in FIG. 12(c)).

The resource set X3 is a start resource set in the second partial frequency domain range, and the resource set X3 is a resource set whose start PRB has a smallest ID in the N2 resource sets (for example, the SB #4 in FIG. 12(c)).

A resource set X4 is an end resource set in the second partial frequency domain range, and the resource set X4 is a resource set whose start PRB has a largest ID in the N2 resource sets (for example, the SB #6 in FIG. 12(c)).

A resource set X5 is a resource set other than the resource set X1, the resource set X2, the resource set X3, and the resource set X4 in the N1 resource sets and the N2 resource sets. The processing unit separately performs measurement on first (K0/2) PRBs in each of the resource set X5, and the transceiver unit reports a 1st PMI for the (K0/2) PRBs. The processing unit performs measurement on last (K0/2) PRBs in each of the resource set X5, and the transceiver unit reports a 2nd PMI for the (K0/2) PRBs. It should be understood that the resource set X5 may be one or more resource sets other than the resource set X1, the resource set X2, the resource set X3, and the resource set X4.

In a case in which a quantity of RBs included in the resource set X1 and a quantity of RBs included in the resource set X3 are S1 and S3 respectively,

if S1 is less than or equal to K0/2, the processing unit performs measurement on the PRB in the resource set X1, and the transceiver unit reports one PMI for the resource set; or
if S1 is greater than K0/2, the processing unit performs measurement on first (S1-(K0/2)) PRBs in the resource set X1, the transceiver unit reports a 1st PMI for the (S1-(K0/2)) PRBs, the processing unit performs measurement on last (K0/2) PRBs in the resource set X1, and the transceiver unit reports a 2nd PMI for the (K0/2) PRBs; and
if S3 is less than or equal to K0/2, the processing unit performs measurement on the PRB in the resource set X3, and the transceiver unit reports one PMI for the resource set; or
if S3 is greater than K0/2, the processing unit performs measurement on first (S3-(K0/2)) PRBs in the resource set X3, the transceiver unit reports a 1st PMI for the (S3-(K0/2)) PRBs, the processing unit performs measurement on last (K0/2) PRBs in the resource set X3, and the transceiver unit reports a 2nd PMI for the (K0/2) PRBs.

In a case in which a quantity of PRBs included in the resource set X2 and a quantity of PRBs included in the resource set X4 are S2 and S4 respectively,

if S2 is less than or equal to K0/2, the processing unit performs measurement on the PRB in the resource set X2, and the transceiver unit reports one PMI for the resource set; or
if S2 is greater than K0/2, the processing unit performs measurement on first (K0/2) PRBs in the resource set X2, the transceiver unit reports a 1st PMI for the (K0/2) PRBs, the processing unit performs measurement on last (S2-(K0/2)) PRBs in the resource set X2, and the transceiver unit reports a 2nd PMI for the (S2-(K0/2)) PRBs; and
if S4 is less than or equal to K0/2, the processing unit performs measurement on the PRB in the resource set X4, and the transceiver unit reports one PMI for the resource set; or if S4 is greater than K0/2, the processing unit performs measurement on first (K0/2) PRBs in the resource set X4, the transceiver unit reports a 1st PMI for the (K0/2) PRBs, the processing unit performs measurement on last (S4-(K0/2)) PRBs in the resource set X4, and the transceiver unit reports a 2nd PMI for the (S4-(K0/2)) PRBs.

Specially, when N1=1, for measurement and reporting manners of a resource set in the first partial frequency domain range, refer to measurement and reporting manners of the resource set X1 or the resource set X2; or when N2=1, for measurement and reporting manners of a resource set in the second partial frequency domain range, refer to measurement and reporting manners of the resource set X3 or the resource set X4.

The foregoing solution may still be used when K0/2 is replaced with X, where X is a positive integer less than or equal to K0/2.

For example, in FIG. 12(c), K0 is 4.

The SB #1 includes one PRB. In this case, the processing unit performs measurement on the SB #1, and the transceiver unit reports one PMI for the SB #1.

An SB #2 includes four PRBs. In this case, the processing unit performs measurement on first two PRBs (namely, a PRB #8 and a PRB #9), the transceiver unit reports a 1st PMI for the PRB #8 and the PRB #9, the processing unit performs measurement on last two PRBs (namely, a PRB #10 and a PRB #11), and the transceiver unit reports a 2nd PMI for the PRB #10 and the PRB #11.

The SB #3 includes three PRBs. In this case, the processing unit performs measurement on a first PRB (namely, the PRB #12), the transceiver unit reports a 1st PMI for the PRB #12, the processing unit performs measurement on last two PRBs (namely, the PRB #13 and the PRB #14), and the transceiver unit reports a 2nd PMI for the PRB #13 and the PRB #14.

The SB #4 includes two PRBs. In this case, the processing unit performs measurement on the two PRBs (namely, the PRB #26 and the PRB #27), and the transceiver unit reports one PMI for the PRB #26 and the PRB #27.

An SB #5 includes four PRBs. In this case, the processing unit performs measurement on first two PRBs (namely, a PRB #28 and a PRB #29), the transceiver unit reports a 1st PMI for the PRB #28 and the PRB #29, the processing unit performs measurement on last two PRBs (namely, a PRB #30 and a PRB #31), and the transceiver unit reports a 2nd PMI for the PRB #30 and the PRB #31.

The SB #6 includes one PRB. In this case, the processing unit performs measurement on the SB #6, and the transceiver unit reports one PMI for the SB #6.

The manner e-1 in step 1103 is used as an example of reporting the PMI by the terminal device.

It is assumed that a maximum quantity of PRBs included in each resource set is K1 (that is, a value of $N_{PRB}^{SB}$ is K1), where K1 is an even number greater than 0. A first partial frequency domain range includes N1 resource sets, and a second partial frequency domain range includes N2 resource sets. The first partial frequency domain range including the N1 resource sets may be understood as the first partial frequency domain range overlapping the N1 resource sets in frequency domain. The second partial frequency domain range including the N1 resource sets may be understood as the second partial frequency domain range overlapping the N2 resource sets in frequency domain. Details are not described subsequently.

A resource set Z1 is a start resource set in the first partial frequency domain range, and the resource set Z1 is a resource set whose start PRB has a smallest ID in the N1 resource sets (for example, the SB #1 in FIG. 16).

A resource set Z2 is an end resource set in the first partial frequency domain range, and the resource set Z2 is a resource set whose start PRB has a largest ID in the N1 resource sets (for example, the SB #3 in FIG. 16). A (Z2-2)$^{th}$ resource set includes a PRB that is overlapped between the first partial frequency domain range and the resource set Z2 (for example, the PRB #12, the PRB #13, and the PRB #14 in FIG. 16).

A resource set Z3 is a start resource set in the second partial frequency domain range, and the resource set Z3 is a resource set whose start PRB has a smallest ID in the N2 resource sets (for example, the SB #6 in FIG. 16). A (Z3-2)$^{th}$ resource set includes a PRB that is overlapped between the second partial frequency domain range and the resource set Z3 (for example, the PRB #26 and the PRB #27 in FIG. 16).

A resource set Z4 is an end resource set in the second partial frequency domain range, and the resource set Z4 is a resource set whose start PRB has a largest ID in the N2 resource sets (for example, the SB #8 in FIG. 16).

A resource set Z5 is a resource set other than the resource set Z1, the resource set Z2, the resource set Z3, and the resource set Z4 in the N1 resource sets and the N2 resource sets. It should be understood that the resource set Z5 may be one or more resource sets other than the resource set Z1, the resource set Z2, the resource set Z3, and the resource set Z4.

In each of the resource sets Z5, the processing unit performs measurement on first (K1/2) PRBs in each resource set, the transceiver unit reports a 1$^{st}$ PMI for the (K1/2) PRBs, the processing unit performs measurement on last (K1/2) PRBs in each resource set, and the transceiver unit reports a 2$^{nd}$ PMI for the (K1/2) PRBs.

When a quantity of PRBs included in the resource set Z1 and a quantity of PRBs included in the (Z3-2)$^{th}$ resource set is E1 and E3 respectively,

if E1 is less than or equal to K1/2, the processing unit performs measurement on the PRB in the resource set Z1, and the transceiver unit reports one PMI for the resource set; or if E1 is greater than K1/2, the processing unit performs measurement on first (E1-(K1/2)) PRBs in the resource set Z1, the transceiver unit reports a 1$^{st}$ PMI for the E1-(K1/2) PRBs, the processing unit performs measurement on last (K1/2) PRBs in the resource set Z1, and the transceiver unit reports a 2$^{nd}$ PMI for the (K0/2) PRBs; and

if E3 is less than or equal to K1/2, the processing unit performs measurement on the PRB in the (Z3-2)$^{th}$ resource set, and the transceiver unit reports one PMI for the resource set; or if E3 is greater than K1/2, the processing unit performs measurement on first (E3-(K1/2)) PRBs in the (Z3-2)$^{th}$ resource set, the transceiver unit reports a 1$^{st}$ PMI for the (E3-(K1/2)) PRBs, the processing unit performs measurement on last (K1/2) PRBs in the (E3-2)$^{th}$ resource set, and the transceiver unit reports a 2$^{nd}$ PMI for the (K0/2) PRBs.

When a quantity of PRBs included in the (Z2-2)$^{th}$ resource set and a quantity of PRBs included in the resource set Z4 are E2 and E4 respectively,

if E2 is less than or equal to K1/2, the processing unit performs measurement on the PRB in the (Z2-2)$^{th}$ resource set, and the transceiver unit reports one PMI for the resource set; or if E2 is greater than K1/2, the processing unit performs measurement on first (K1/2) PRBs in the (Z2-2)$^{th}$ resource set, the transceiver unit reports a 1$^{st}$ PMI for the (K1/2) PRBs, the processing unit performs measurement on last (E2-(K1/2)) PRBs in the (Z2-2)$^{th}$ resource set, and the transceiver unit reports a 2$^{nd}$ PMI for the (E2-(K1/2)) PRBs; and

if E4 is less than or equal to K1/2, the processing unit performs measurement on the PRB in the resource set Z4, and the transceiver unit reports one PMI for the resource set; or if E4 is greater than K1/2, the processing unit performs measurement on first (K1/2) PRBs in the resource set Z4, the transceiver unit reports a 1$^{st}$ PMI for the (E4-(K1/2)) PRBs, the processing unit performs measurement on last (E4-(K1/2)) PRBs in the resource set Z4, and the transceiver unit reports a 2$^{nd}$ PMI for the (K1/2) PRBs.

Specially, when N1=1, for measurement and reporting manners of a resource set in the first partial frequency domain range, refer to measurement and reporting manners of the resource set Z1 or the (Z2-2)th resource set; or when N2=1, for measurement and reporting manners of a resource set in the second partial frequency domain range, refer to measurement and reporting manners of the (Z3-2)th resource set or the resource set Z4.

The foregoing solution may still be used when K1/2 is replaced with X, where X is a positive integer less than or equal to K1/2.

For example, in FIG. 16, K1 is 4.

The SB #1 includes one PRB. In this case, the processing unit performs measurement on the SB #1, and the transceiver unit reports one PMI for the SB #1.

An SB #2 includes four PRBs. In this case, the processing unit performs measurement on first two PRBs (namely, a PRB #8 and a PRB #9), the transceiver unit reports a 1st PMI for the PRB #8 and the PRB #9, the processing unit performs measurement on last two PRBs (namely, a PRB #10 and a PRB #11), and the transceiver unit reports a 2nd PMI for the PRB #10 and the PRB #11.

The SB #3 includes four PRBs, and PRBs that are overlapped between the SB #3 and the first partial frequency domain range are the PRB #12, the PRB #13, and the PRB #14. In this case, the processing unit performs measurement on first two PRBs (namely, the PRB #12 and the PRB #13), the transceiver unit reports a 1st PMI for the PRB #12 and the PRB #13, the processing unit performs measurement on the last PRB (namely, the PRB #14), and the transceiver unit reports a 2nd PMI for the PRB #14.

The SB #6 includes four PRBs, and PRBs that are overlapped between the SB #6 and the second partial frequency domain range are the PRB #26 and the PRB #27. In this case, the processing unit performs measurement on two PRBs (namely, the PRB #26 and the PRB #27), and the transceiver unit reports one PMI for the PRB #26 and the PRB #27.

An SB #7 includes four PRBs. In this case, the processing unit performs measurement on first two PRBs (namely, a PRB #28 and a PRB #29), the transceiver unit reports a 1st PMI for the PRB #28 and the PRB #29, the processing unit performs measurement on last two PRBs (namely, a PRB #30 and a PRB #31), and the transceiver unit reports a 2nd PMI for the PRB #30 and the PRB #31.

The SB #8 includes one PRB. In this case, the processing unit performs measurement on the SB #8, and the transceiver unit reports one PMI for the SB #8.

The following describes a case in which the communication apparatus 2100 is configured to implement the function of the network device in the method embodiment shown in FIG. 11. The transceiver unit 2120 is configured to send configuration information, and the transceiver unit 2120 is further configured to receive the measurement result.

The following describes a case in which the communication apparatus 2100 is configured to implement the function of the terminal device in the method embodiment shown in FIG. 18. The transceiver unit 2120 is configured to receive the configuration information, where the configuration information indicates a CLI resource (namely, a fourth resource). The fourth resource is used for downlink transmission. The fourth resource includes L resource sets, each of the L resource sets includes at least one PRB, and the L resource sets do not overlap each other.

The processing unit 2110 may determine the fourth resource based on the configuration information, and perform measurement on the fourth resource.

The transceiver unit 2120 is further configured to send the measurement result to the network device.

The manner 1 in step 1803 is used as an example.

The transceiver unit 2120 may be configured to report a reference value and a difference between a remaining measurement result and the reference value to the network device.

In a possible implementation, the transceiver unit sends a real value (real value) of the reference value and a real value of the difference between the remaining measurement result and the reference value to the network device. For example, the processing unit measures an SB #1 to obtain a CLI-RSSI #1, measures an SB #2 to obtain a CLI-RSSI #2, and measures an SB #3 to obtain a CLI-RSSI #3. A value of the CLI-RSSI #1 is 2, a value of the CLI-RSSI #2 is 6, and a value of the CLI-RSSI #3 is 5. The processing unit may use the value of the CLI-RSSI #1 as the reference value, and determine the difference between the remaining measurement result and the reference value. For example, a difference between the value of the CLI-RSSI #2 and the reference value is 4, and a difference between the value of the CLI-RSSI #3 and the reference value is 3. The transceiver unit sends the reference value 2, the difference 4, and the difference 3 to the network device.

Optionally, the transceiver unit may further send a correspondence between the difference and the resource set to the network device. For example, the difference 4 corresponds to the CLI-RSSI #2, and the difference 3 corresponds to the CLI-RSSI #3.

In another possible implementation, the transceiver unit may further send, to the network device, an index corresponding to the reference value and a representation value of a difference between an index of the remaining measurement result and the index of the reference value. For example, the processing unit measures an SB #1 to obtain a CLI-RSSI #1, measures an SB #2 to obtain a CLI-RSSI #2, and measures an SB #3 to obtain a CLI-RSSI #3. A value of the CLI-RSSI #1 is 2, a value of the CLI-RSSI #2 is 6, and a value of the CLI-RSSI #3 is 5. The processing unit may use the value of the CLI-RSSI #2 as the reference value. An index corresponding to the reference value 6 is an index 5, an index corresponding to the value 2 of the CLI-RSSI #1 is an index 1, and an index corresponding to the value 5 of the CLI-RSSI #3 is an index 4. Therefore, a difference between the index corresponding to the value of the CLI-RSSI #1 and the index corresponding to the reference value is 4, and a corresponding representation value is 2; and a difference between the index corresponding to the value of the CLI-RSSI #3 and the index corresponding to the reference value is 1, and a corresponding representation value is 1. For a correspondence between the difference of the index and the representation value, refer to Table 2. Details are not described herein again. In this case, the transceiver unit sends the index 5 of the reference value, an index 2 of the difference, and the index 1 of the difference to the network device.

Optionally, the transceiver unit may further send a correspondence between the index of the difference and the resource set to the network device.

The manner 2 in step 1803 is used as an example.

For example, the processing unit measures an SB #1 to obtain a CLI-RSSI #1, measures an SB #2 to obtain a CLI-RSSI #2, and measures an SB #3 to obtain a CLI-RSSI #3. A value of the CLI-RSSI #1 is 2, a value of the CLI-RSSI #2 is 6, and a value of the CLI-RSSI #3 is 5.

The transceiver unit may send, to the network device, a real value of a CLI-RSSI corresponding to each resource set, or may send, to the network device, an index of the real value of the CLI-RSSI corresponding to each resource set.

Optionally, the transceiver unit may further send a correspondence between the real value (or the index) of the CLI-RSSI and each resource set to the network device.

The manner 3 in step 1803 is used as an example.

The transceiver unit may report a wideband measurement result of a CLI resource and a difference between a measurement result corresponding to each resource set and the wideband measurement result to the network device.

The wideband measurement result may be an average value of RSSIs of all reported resource sets, or may be an average value of RSSIs of all measured resource sets.

For example, the processing unit measures an SB #1 to obtain a CLI-RSSI #1, measures an SB #2 to obtain a CLI-RSSI #2, and measures an SB #3 to obtain a CLI-RSSI #3. A value of the CLI-RSSI #1 is 2, a value of the CLI-RSSI #2 is 6, and a value of the CLI-RSSI #3 is 5.

The processing unit measures the CLI resource to obtain a CLI-RSSI value (13/3).

The transceiver unit may send, to the network device, a wideband measurement value, namely, (13/3), and a difference between the measurement result of each resource set and the wideband measurement, namely, 2-(13/3), 6-(13/3), and 5-(13/3).

Alternatively, the transceiver unit sends, to the network device, an index value corresponding to the wideband measurement value and an index value corresponding to a difference between the measurement result of each resource set and the wideband measurement.

Optionally, the transceiver unit may further send a correspondence between the real value (or the index) of the CLI-RSSI and each resource set to the network device.

The following describes a case in which the communication apparatus 2100 is configured to implement the function of the network device in the method embodiment shown in FIG. 18. The transceiver unit 2120 is configured to send configuration information, and the transceiver unit 2120 is further configured to receive the measurement result.

The following describes a case in which the communication apparatus 2100 is configured to implement the function of the network device #1 in the method embodiment shown in FIG. 20. The transceiver unit 2120 is configured to receive configuration information, where the configuration information is used to configure a CLI measurement resource.

The processing unit 2110 may determine the CLI measurement resource based on the configuration information.

The processing unit 2110 is configured to obtain a measurement result based on an interference measurement signal, for example, measure an interference measurement signal on the CLI measurement resource to obtain a measurement result.

The transceiver unit 2120 is further configured to send the measurement result to the network device.

The following describes a case in which the communication apparatus 2100 is configured to implement the function of the network device #0 in the method embodiment shown in FIG. 20.

The transceiver unit 2120 is configured to send configuration information.

The transceiver unit 2120 is further configured to receive a measurement result.

For more detailed descriptions of the processing unit 2110 and the transceiver unit 2120, directly refer to related descriptions in the method embodiments shown in FIG. 11, FIG. 18, and FIG. 20. Details are not described herein again.

As shown in FIG. 22, a communication apparatus 2200 includes a processor 2210 and an interface circuit 2220. The processor 2210 and the interface circuit 2220 are coupled to each other. It may be understood that the interface circuit 2220 may be a transceiver or an input/output interface. Optionally, the communication apparatus 2200 may further include a memory 2230, configured to store instructions executed by the processor 2210, input data required by the processor 2210 to run instructions, or data generated after the processor 2210 runs instructions.

When the communication apparatus 2200 is configured to implement the method shown in FIG. 11, FIG. 18, or FIG. 20, the processor 2210 is configured to implement a function of the processing unit 2110, and the interface circuit 2220 is configured to implement a function of the transceiver unit 2120.

When the communication apparatus is a chip used in a terminal, the terminal chip implements the functions of the terminal in the foregoing method embodiments. The terminal chip receives information from another module (for example, a radio frequency module or an antenna) in the terminal, where the information is sent by a base station to the terminal; or the terminal chip sends information to another module (for example, a radio frequency module or an antenna) in the terminal, where the information is sent by the terminal to a base station.

When the communication apparatus is a module used in a base station, the base station module implements the functions of the base station in the foregoing method embodiments. The base station module receives information from another module (for example, a radio frequency module or an antenna) in the base station, where the information is sent by a terminal to the base station; or the base station module sends information to another module (for example, a radio frequency module or an antenna) in the base station, where the information is sent by the base station to a terminal. The base station module herein may be a baseband chip in the base station, or may be a DU or another module. The DU herein may be a DU in an open radio access network (open radio access network, O-RAN) architecture.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Depending on whether optional is used in this specification: In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various digital numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

receiving configuration information, wherein the configuration information indicates a first resource of a channel state information-reference signal CSI-RS, the first resource comprises a second resource and a third resource, the second resource is used for downlink transmission, the third resource is used for uplink transmission, the second resource and the third resource are different frequency domain resources on a same time domain resource, the second resource comprises N resource sets, each of the N resource sets comprises at least one physical resource block PRB, the N resource sets do not overlap each other, and PRBs comprised in each of the N resource sets are consecutive, or PRBs comprised in at least one of the N resource sets are inconsecutive; and separately measuring the CSI-RS on M resource sets in the N resource sets, wherein M is less than or equal to N, and M and N are positive integers.

2. The method according to claim 1, wherein a quantity of PRBs comprised in each of the N resource sets is determined based on a first parameter, and the first parameter comprises at least one of the following: a maximum quantity of PRBs comprised in any one of the N resource sets, an index ID of a start PRB of the second resource, and a total quantity of PRBs comprised in the second resource.

3. The method according to claim 2, wherein the PRBs comprised in each of the N resource sets are consecutive, the second resource comprises a first partial frequency domain range and a second partial frequency domain range, the first partial frequency domain range comprises N1 resource sets, the second partial frequency domain range comprises N2 resource sets, the first partial frequency domain range and the second partial frequency domain range are not adjacent in frequency domain, a sum of N1 and N2 is N, and the quantity of PRBs comprised in each of the resource sets comprised in the second resource and the first parameter meet the following relationship:

$$QA = N_{PRB}^{SB} - (N_1^{start} \bmod N_{PRB}^{SB});$$

$$QB = \left(N_1^{start} + N_1^{size}\right) \bmod N_{PRB}^{SB} \text{ and } \left(N_1^{start} + N_1^{size}\right) \bmod N_{PRB}^{SB} \text{ is not } 0,$$

or

$$QB = N_{PRB}^{SB} \text{ and } \left(N_1^{start} + N_1^{size}\right) \bmod N_{PRB}^{SB} \text{ is } 0;$$

$$QC = N_{PRB}^{SB};$$

$$QD = N_{PRB}^{SB} - (N_2^{start} \bmod N_{PRB}^{SB});$$

and

$$QE = \left(N_2^{start} + N_2^{size}\right) \bmod N_{PRB}^{SB} \text{ and } \left(N_2^{start} + N_2^{size}\right) \bmod N_{PRB}^{SB} \text{ is not } 0,$$

or

$$QE = N_{PRB}^{SB} \text{ and } \left(N_2^{start} + N_2^{size}\right) \bmod N_{PRB}^{SB} \text{ is } 0,$$

wherein

QA is a quantity of PRBs comprised in a first resource set, and the first resource set is a resource set whose start PRB has a smallest ID in the N1 resource sets;

QB is a quantity of PRBs comprised in a second resource set, and the second resource set is a resource set whose start PRB has a largest ID in the N1 resource sets;

QD is a quantity of PRBs comprised in a third resource set, and the third resource set is a resource set whose start PRB has a smallest ID in the N2 resource sets;

QE is a quantity of PRBs comprised in a fourth resource set, and the fourth resource set is a resource set whose start PRB has a largest ID in the N2 resource sets;

QC is a quantity of PRBs comprised in a fifth resource set, and a resource set other than the first resource set, the second resource set, the third resource set, and the fourth resource set in the (N1+N2) resource sets is one or more fifth resource sets;

$N_{PRB}^{SB}$ is the maximum quantity of PRBs comprised in any resource set of the second resource;

$N_1^{start}$ and $N_2^{start}$ are an ID of a start PRB occupied by the first partial frequency domain range and an ID of a start PRB occupied by the second partial frequency domain range respectively; and

$N_1^{size}$ and $N_2^{size}$ are a total quantity of PRBs comprised in the first partial frequency domain range and a total quantity of PRBs comprised in the second partial frequency domain range respectively.

4. The method according to claim 3, wherein a value of $N_{PRB}^{SB}$ is K0; and the method further comprises:

separately performing measurement on first (K0/2) PRBs in each of the one or more fifth resource sets and reporting a 1st pre-coding matrix indicator PMI for the (K0/2) PRBs;

separately performing measurement on last (K0/2) PRBs in each of the one or more fifth resource sets and reporting a 2nd PMI for the (K0/2) PRBs;

in a case in which the quantity of RBs comprised in the first resource set and the quantity of RBs comprised in the third resource set are S1 and S3 respectively,

if S1 is less than or equal to K0/2, performing measurement on the PRB in the first resource set and reporting one PMI for the first resource set; or

if S1 is greater than K0/2, performing measurement on first (S1-(K0/2)) PRBs in the first resource set and reporting a 1st PMI for the (S1-(K0/2)) PRBs, and performing measurement on last (K0/2) PRBs in the first resource set and reporting a 2nd PMI for the (K0/2) PRBs; and

if S3 is less than or equal to K0/2, performing measurement on the PRB in the third resource set and reporting one PMI for the third resource set; or

if S3 is greater than K0/2, performing measurement on first (S3-(K0/2)) PRBs in the third resource set and reporting a 1st PMI for the (S3-(K0/2)) PRBs, and performing measurement on last (K0/2) PRBs in the third resource set and reporting a 2nd PMI for the (K0/2) PRBs; and

in a case in which the quantity of PRBs comprised in the second resource set and the quantity of PRBs comprised in the fourth resource set are S2 and S4 respectively,

if S2 is less than or equal to K0/2, performing measurement on the PRB in the second resource set and reporting one PMI for the second resource set; or

if S2 is greater than K0/2, performing measurement on first (K0/2) PRBs in the second resource set and reporting a 1st PMI for the (K0/2) PRBs, and performing measurement on last (S2-(K0/2)) PRBs in the second resource set and reporting a 2nd PMI for the (S2-(K0/2)) PRBs; and

if S4 is less than or equal to K0/2, performing measurement on the PRB in the fourth resource set and reporting one PMI for the resource set; or

if S4 is greater than K0/2, performing measurement on first (K0/2) PRBs in the fourth resource set and reporting a 1st PMI for the (K0/2) PRBs, and performing measurement on last (S4-(K0/2)) PRBs in the fourth resource set and reporting a 2nd PMI for the (S4-(K0/2)) PRBs.

5. The method according to claim 2, wherein the PRBs comprised in at least one of the N resource sets are inconsecutive, the second resource comprises a third resource subset and a fourth resource subset, the third resource subset comprises N1 resource sets, the fourth resource subset comprises N2 resource sets, a sum of N1 and N2 is N, an ID of a start PRB in the third resource subset is smaller than an ID of a start PRB in the fourth resource subset, the third resource subset and the fourth resource subset are not adjacent in frequency domain, and the quantity of PRBs comprised in each of the resource sets comprised in the second resource and the first parameter meet the following relationship:

$$Qi = N_{PRB}^{SB} - (N_1^{start} \bmod N_{PRB}^{SB});$$

$$Qr = \left(N_1^{start} + N_{1+2}^{size}\right) \bmod N_{PRB}^{SB} \ \text{and} \ \left(N_1^{start} + N_{1+2}^{size}\right) \bmod N_{PRB}^{SB} \ \text{is not } 0,$$

or

$$Qr = N_{PRB}^{SB} \ \text{and} \ \left(N_1^{start} + N_{1+2}^{size}\right) \bmod N_{PRB}^{SB} \ \text{is } 0; \text{ a}$$

and

$$Qv = N_{PRB}^{SB},$$

wherein

Qi is a quantity of PRBs comprised in a sixth resource set, and the sixth resource set is a resource set whose start PRB has a smallest ID in the N resource sets;
Qr is a quantity of PRBs comprised in a seventh resource set, and the seventh resource set is a resource set whose start PRB has a largest ID in the N resource sets;
Qv is a quantity of PRBs comprised in an eighth resource set, and a resource set other than the sixth resource set and the seventh resource set in the N resource sets is one or more eighth resource sets;

$N_{PRB}^{SB}$ is the maximum quantity of PRBs comprised in any resource set of the second resource;

$N_1^{start}$ is an ID of a start PRB occupied by the third resource subset; and

$N_{1+2}^{size}$ is the total quantity of PRBs comprised in the third resource subset and the fourth resource subset.

6. The method according to claim 5, wherein a value of $N_{PRB}^{SB}$ is K0; and the method further comprises:

separately performing measurement on first (K0/2) PRBs in each of the one or more eighth resource sets and reporting a 1st PMI for the (K0/2) PRBs;
separately performing measurement on last (K0/2) PRBs in each of the one or more eighth resource sets and reporting a 2nd PMI for the (K0/2) PRBs;
in a case in which the quantity of RBs comprised in the sixth resource set is J1,
if J1 is less than or equal to K0/2, performing measurement on the PRB in the sixth resource set and reporting one PMI for the resource set; or
if J1 is greater than K0/2, performing measurement on first (S1-(K0/2)) PRBs in the sixth resource set and reporting a 1st PMI for the (S1-(K0/2)) PRBs, and performing measurement on last (K0/2) PRBs in the sixth resource set and reporting a 2nd PMI for the (K0/2) PRBs; and
in a case in which the quantity of PRBs comprised in the seventh resource set is J2,
if J2 is less than or equal to K0/2, performing measurement on the PRB in the seventh resource set and reporting one PMI for the resource set; or
if J2 is greater than K0/2, performing measurement on first (K0/2) PRBs in the seventh resource set and reporting a 1st PMI for the (K0/2) PRBs, and performing measurement on last (S4-(K0/2)) PRBs in the seventh resource set and reporting a 2nd PMI for the (S4-(K0/2)) PRBs.

7. A communication method, comprising:

receiving configuration information, wherein the configuration information indicates a first resource of a CSI-RS, the first resource comprises P resource sets, the P resource sets do not overlap each other, each of the P resource sets comprises at least one PRB, the P resource sets comprise a resource set #a, the resource set #a comprises a first PRB and a second PRB, the first PRB is used for downlink transmission, the second PRB is used for uplink transmission, and P is a positive integer; and

separately measuring the CSI-RS on PRBs that are used for downlink transmission and that are comprised in S resource sets in the P resource sets, wherein S is a positive integer less than P.

8. The method according to claim 7, wherein a quantity of PRBs comprised in each of the resource sets comprised in the first resource is determined based on a first parameter, and the first parameter comprises at least one of the following: a maximum quantity of PRBs comprised in any resource set of the first resource, an ID of a start PRB of the first resource, and a total quantity of PRBs comprised in the first resource.

9. The method according to claim 8, wherein the quantity of PRBs comprised in each of the N resource sets and the first parameter meet the following relationship:

$$Qj = N_{PRB}^{SB} - \left(N_{BWP,i}^{start} \bmod N_{PRB}^{SB}\right);$$

$$Qk = \left(N_{BWP,i}^{start} + N_{BWP,i}^{size}\right) \bmod N_{PRB}^{SB} \text{ and } \left(N_{BWP,i}^{start} + N_{BWP,i}^{size}\right) \bmod N_{PRB}^{SB} \text{ is not } 0,$$

or

$$Qk = N_{PRB}^{SB} \text{ and } \left(N_{BWP,i}^{start} + N_{BWP,i}^{size}\right) \bmod N_{PRB}^{SB} \text{ is } 0;$$

and

$$Ql = N_{PRB}^{SB},$$

wherein

Qj is a quantity of PRBs comprised in a ninth resource set, and the ninth resource set is a resource set ranked first in the P resource sets;
Qk is a quantity of PRBs comprised in a tenth resource set, and the tenth resource set is a resource set ranked last in the P resource sets;
Ql is a quantity of PRBs comprised in an eleventh resource set, and a resource set other than the ninth resource set and the tenth resource set in the P resource sets is one or more eleventh resource sets;

$N_{PRB}^{SB}$ is the maximum quantity of PRBs comprised in any one of the P resource sets;

$N_{BWP,i}^{start}$ is the ID of the start PRB occupied by the first resource; and

$N_{BWP,i}^{size}$ is the total quantity of PRBs comprised in the P resource sets.

10. The method according to claim 9, wherein a value of $N_{PRB}^{SB}$ is K1, K1 is an even number greater than 0, the first resource comprises a second resource and a third resource, the second resource is used for downlink transmission, the third resource is used for uplink transmission, the second resource and the third resource are different frequency domain resources on a same time domain resource, the second resource comprises a first partial frequency domain range and a second partial frequency domain range, an ID of a start PRB of the first partial frequency domain range is smaller than an ID of a start PRB of the second partial frequency domain range, the first partial frequency domain range overlaps N1 resource sets in frequency domain, and the second partial frequency domain range overlaps N2 resource sets in frequency domain; and the method further comprises:

a twelfth resource set is a resource set whose start PRB has a largest ID in the N1 resource sets, and a thirteenth resource set is a resource set comprising a PRB that is overlapped between the twelfth resource set and the first partial frequency domain range;
a fourteenth resource set is a resource set whose start PRB has a smallest ID in the N2 resource sets, and a fifteenth resource set is a resource set comprising a PRB that is overlapped between the fourteenth resource set and the second partial frequency domain range;
the quantity of PRBs comprised in the ninth resource set and the quantity of PRBs comprised in the tenth resource set are E1 and E4 respectively, the resource set #a belongs to the one or more eleventh resource sets, and the second PRB in the resource set #a belongs to the third resource;

a quantity of PRBs comprised in the thirteenth resource set and a quantity of PRBs comprised in the fifteenth resource set are E2 and E3 respectively;

if E1 is less than or equal to K1/2, performing measurement on the PRB in the ninth resource set and reporting one PMI for the resource set; or if E1 is greater than K1/2, performing measurement on first (E1-(K1/2)) PRBs in the ninth resource set and reporting a $1^{st}$ PMI for the (E1-(K1/2)) PRBs, and performing measurement on last (K1/2) PRBs in the ninth resource set and reporting a $2^{nd}$ PMI for the (K0/2) PRBs;

if E3 is less than or equal to K1/2, performing measurement on the PRB in the fifteenth resource set and reporting one PMI for the resource set; or if E3 is greater than K1/2, performing measurement on first (E3-(K1/2)) PRBs in the fifteenth resource set and reporting a $1^{st}$ PMI for the (E3-(K1/2)) PRBs, and performing measurement on last (K1/2) PRBs in the fifteenth resource set and reporting a $2^{nd}$ PMI for the (K0/2) PRBs;

if E2 is less than or equal to K1/2, performing measurement on the PRB in the thirteenth resource set and reporting one PMI for the resource set; or if E2 is greater than K1/2, performing measurement on first (K1/2) PRBs in the thirteenth resource set and reporting a $1^{st}$ PMI for the (K1/2) PRBs, and performing measurement on last (E2-(K1/2)) PRBs in the thirteenth resource set and reporting a $2^{nd}$ PMI for the (E2-(K1/2)) PRBs;

if E4 is less than or equal to K1/2, performing measurement on the PRB in the tenth resource set and reporting one PMI for the resource set; or if E4 is greater than K1/2, performing measurement on first (K1/2) PRBs in the tenth resource set and reporting a $1^{st}$ PMI for the (K1/2) PRBs; and performing measurement on last (E4-(K1/2)) PRBs in the tenth resource set and reporting a $2^{nd}$ PMI for the (E4-(K1/2)) PRBs; and

performing measurement on first (K1/2) PRBs in each of one or more sixteenth resource sets and reporting a $1^{st}$ PMI for the (K1/2) PRBs; and performing measurement on last (K1/2) PRBs in each of the one or more sixteenth resource sets and reporting a $2^{nd}$ PMI for the (K1/2) PRBs, wherein a resource set other than the ninth resource set, the tenth resource set, the twelfth resource set, and the fourteenth resource set in the N1 and N2 resource sets is the one or more sixteenth resource sets, and the sixteenth resource set comprises $N_{PRB}^{SB}$ PRBs.

11. The method according to any one of claims 7 to 10, wherein the method further comprises:
receiving first information, wherein the first information indicates the M resource sets, or the first information indicates the S resource sets.

12. A communication method, comprising:

receiving configuration information, wherein the configuration information indicates a fourth resource for CLI measurement, the fourth resource is used for downlink transmission, the fourth resource comprises L resource sets, each of the L resource sets comprises at least one PRB, and the L resource sets do not overlap each other; and
separately performing CLI measurement on the L resource sets.

13. The method according to claim 12, wherein in the L resource sets, at least two resource sets comprise different maximum quantities of PRBs.

14. The method according to claim 12 or 13, wherein the method further comprises:

sending an index of a first value, wherein the first value is an average value of CLIs respectively corresponding to the L resource sets; and
sending a second value corresponding to a difference between an index of a first measurement result and the index of the first value, wherein the second value indicates an interval in which the difference falls or the difference, and the first measurement result is measurement results respectively corresponding to the L resource sets.

15. The method according to claim 14, wherein the method further comprises:
sending a correspondence between the second value and the L resource sets.

16. A communication method, wherein the method comprises:

determining a first resource of a CSI-RS, wherein the first resource comprises a second resource and a third resource, the second resource is used for downlink transmission, the third resource is used for uplink transmission, the second resource and the third resource are different frequency domain resources on a same time domain resource, the second resource comprises N resource sets, each of the N resource sets comprises at least one physical resource block PRB, the N resource sets do not overlap each other, and PRBs comprised in each of the N resource sets are consecutive, or PRBs comprised in at least one of the N resource sets are inconsecutive; and

sending configuration information, wherein the configuration information indicates the first resource.

17. The method according to claim 16, wherein a quantity of PRBs comprised in each of the N resource sets is determined based on a first parameter, and the first parameter comprises at least one of the following: a maximum quantity of PRBs comprised in any one of the N resource sets, an ID of a start PRB of the second resource, and a total quantity of PRBs comprised in the second resource.

18. The method according to claim 17, wherein the PRBs comprised in each of the N resource sets are consecutive, the second resource comprises a first partial frequency domain range and a second partial frequency domain range, the first partial frequency domain range comprises N1 resource sets, the second partial frequency domain range comprises N2 resource sets, the first partial frequency domain range and the second partial frequency domain range are not adjacent in frequency domain, a sum of N1 and N2 is N, and the quantity of PRBs comprised in each of the resource sets comprised in the second resource and the first parameter meet the following relationship:

$$QA = N_{PRB}^{SB} - (N_1^{start} \bmod N_{PRB}^{SB});$$

$$QB = \left(N_1^{start} + N_1^{size}\right) \bmod N_{PRB}^{SB} \text{ and } \left(N_1^{start} + N_1^{size}\right) \bmod N_{PRB}^{SB} \text{ is not } 0,$$

or

$$QB = N_{PRB}^{SB} \text{ and } \left(N_1^{start} + N_1^{size}\right) \bmod N_{PRB}^{SB} \text{ is } 0;$$

$$QC = N_{PRB}^{SB};$$

$$QD = N_{PRB}^{SB} - (N_2^{start} \bmod N_{PRB}^{SB});$$

and

$$QE = \left(N_2^{start} + N_2^{size}\right) \bmod N_{PRB}^{SB} \text{ and } \left(N_2^{start} + N_2^{size}\right) \bmod N_{PRB}^{SB} \text{ is not } 0,$$

or

$$QE = N_{PRB}^{SB} \text{ and } \left(N_2^{start} + N_2^{size}\right) \bmod N_{PRB}^{SB} \text{ is } 0,$$

wherein

QA is a quantity of PRBs comprised in a first resource set, and the first resource set is a resource set whose start PRB has a smallest ID in the N1 resource sets;
QB is a quantity of PRBs comprised in a second resource set, and the second resource set is a resource set whose start PRB has a largest ID in the N1 resource sets;
QD is a quantity of PRBs comprised in a third resource set, and the third resource set is a resource set whose start PRB has a smallest ID in the N2 resource sets;
QE is a quantity of PRBs comprised in a fourth resource set, and the fourth resource set is a resource set whose start PRB has a largest ID in the N2 resource sets;
QC is a quantity of PRBs comprised in a fifth resource set, and a resource set other than the first resource set, the second resource set, the third resource set, and the fourth resource set in the (N1+N2) resource sets is one or more fifth resource sets;

$N_{PRB}^{SB}$ is the maximum quantity of PRBs comprised in any resource set of the second resource;

$N_1^{start}$ and $N_2^{start}$ are an ID of a start PRB occupied by the first partial frequency domain range and an ID of a start PRB occupied by the second partial frequency domain range respectively; and

$N_1^{size}$ and $N_2^{size}$ are a total quantity of PRBs comprised in the first partial frequency domain range and a total quantity of PRBs comprised in the second partial frequency domain range respectively.

19. The method according to claim 18, wherein the method further comprises:

receiving at least one PMI, wherein

a value of $N_{PRB}^{SB}$ is K0;

the at least one PMI comprises a PMI corresponding to first (K0/2) PRBs in each of the one or more fifth resource sets, and the at least one PMI further comprises a PMI corresponding to last (K0/2) PRBs in each of the one or more fifth resource sets;

the quantity of RBs comprised in the first resource set and the quantity of RBs comprised in the third resource set are S1 and S3 respectively, wherein

if S1 is less than or equal to K0/2, the at least one PMI comprises one PMI corresponding to the first resource set; or

if S1 is greater than K0/2, the at least one PMI comprises one PMI corresponding to first (S1-(K0/2)) PRBs in the first resource set, and the at least one PMI further comprises one PMI corresponding to last (K0/2) PRBs in the first resource set; and

if S3 is less than or equal to K0/2, the at least one PMI comprises one PMI corresponding to the PRB in the third resource set; or

if S3 is greater than K0/2, the at least one PMI comprises one PMI corresponding to first (S3-(K0/2)) PRBs in the third resource set, and the at least one PMI further comprises one PMI corresponding to last (K0/2) PRBs in the third resource set; and

the quantity of PRBs comprised in the second resource set and the quantity of PRBs comprised in the fourth resource set are S2 and S4 respectively, wherein

if S2 is less than or equal to K0/2, the at least one PMI comprises one PMI corresponding to the second resource set; or

if S2 is greater than K0/2, the at least one PMI comprises one PMI corresponding to first (K0/2) PRBs in the second resource set, and the at least one PMI further comprises one PMI corresponding to last (S2-(K0/2)) PRBs in the second resource set; and

if S4 is less than or equal to K0/2, the at least one PMI comprises one PMI corresponding to the fourth resource set; or

if S4 is greater than K0/2, the at least one PMI comprises one PMI corresponding to first (K0/2) PRBs in the fourth resource, and the at least one PMI further comprises one PMI corresponding to last (S4-(K0/2)) PRBs in the fourth resource set.

20. The method according to claim 17, wherein the PRBs comprised in at least one of the N resource sets are inconsecutive, the second resource comprises a third resource subset and a fourth resource subset, the third resource subset comprises N1 resource sets, the fourth resource subset comprises N2 resource sets, a sum of N1 and N2 is N, an ID of a start PRB in the third resource subset is smaller than an ID of a start PRB in the fourth resource subset, the third resource subset and the fourth resource subset are not adjacent in frequency domain, and the quantity of PRBs comprised in each of the resource sets comprised in the second resource and the first parameter meet the following relationship:

$$Qi = N_{PRB}^{SB} - (N_1^{start} \bmod N_{PRB}^{SB});$$

$$Qr = \left(N_1^{start} + N_{1+2}^{size}\right) \bmod N_{PRB}^{SB} \text{ and } \left(N_1^{start} + N_{1+2}^{size}\right) \bmod N_{PRB}^{SB} \text{ is not } 0,$$

or

$$Qr = N_{PRB}^{SB} \text{ and } \left(N_1^{start} + N_{1+2}^{size}\right) mod\ N_{PRB}^{SB} \text{ is } 0;$$

and

$$Qv = N_{PRB}^{SB},$$

wherein

Qi is a quantity of PRBs comprised in a sixth resource set, and the sixth resource set is a resource set whose start PRB has a smallest ID in the N resource sets;
Qr is a quantity of PRBs comprised in a seventh resource set, and the seventh resource set is a resource set whose start PRB has a largest ID in the N resource sets;
Qv is a quantity of PRBs comprised in an eighth resource set, and a resource set other than the sixth resource set and the seventh resource set in the N resource sets is one or more eighth resource sets;

$N_{PRB}^{SB}$ is the maximum quantity of PRBs comprised in any resource set of the second resource;

$N_1^{start}$ is an ID of a start PRB occupied by the third resource subset; and

$N_{1+2}^{size}$ is the total quantity of PRBs comprised in the third resource subset and the fourth resource subset.

21. The method according to claim 20, wherein

receiving at least one PMI, wherein

a value of $N_{PRB}^{SB}$ is K0;
the at least one PMI comprises a PMI corresponding to first (K0/2) PRBs in each of the one or more eighth resource sets, and the at least one PMI further comprises a PMI corresponding to last (K0/2) PRBs in each of the one or more eighth resource sets;
the quantity of RBs comprised in the sixth resource set is J1, wherein
if J1 is less than or equal to K0/2, the at least one PMI comprises one PMI corresponding to the sixth resource set; or
if J1 is greater than K0/2, the at least one PMI comprises one PMI corresponding to first (S1-(K0/2)) PRBs in the sixth resource set, and the at least one PMI further comprises one PMI corresponding to last (K0/2) PRBs in the sixth resource set; and
the quantity of PRBs comprised in the seventh resource set is J2, wherein
if J2 is less than or equal to K0/2, the at least one PMI comprises one PMI corresponding to the seventh resource set; or
if J2 is greater than K0/2, the at least one PMI comprises one PMI corresponding to first (K0/2) PRBs in the seventh resource, and the at least one PMI further comprises one PMI corresponding to last (S4-(K0/2)) PRBs in the seventh resource set.

22. A communication method, comprising:

determining a first resource of a CSI-RS, wherein the first resource comprises P resource sets, the P resource sets do not overlap each other, each of the P resource sets comprises at least one PRB, the P resource sets comprise a resource set #a, the resource set #a comprises a first PRB and a second PRB, the first PRB is used for downlink transmission, the second PRB is used for uplink transmission, and P is a positive integer; and
sending configuration information, wherein the configuration information indicates the first resource.

23. The method according to claim 22, wherein a quantity of PRBs comprised in each of the resource sets comprised in the first resource is determined based on a first parameter, and the first parameter comprises at least one of the following: a maximum quantity of PRBs comprised in any resource set of the first resource, an ID of a start PRB of the first resource, and a total quantity of PRBs comprised in the first resource.

24. The method according to claim 23, wherein the quantity of PRBs comprised in each of the P resource sets and the first parameter meet the following relationship:

$$Qj = N_{PRB}^{SB} - \left(N_{BWP,i}^{start} \bmod N_{PRB}^{SB}\right);$$

$$Qk = \left(N_{BWP,i}^{start} + N_{BWP,i}^{size}\right) \bmod N_{PRB}^{SB} \text{ and } \left(N_{BWP,i}^{start} + N_{BWP,i}^{size}\right) \bmod N_{PRB}^{SB} \text{ is not } 0,$$

or

$$Qk = N_{PRB}^{SB} \text{ and } \left(N_{BWP,i}^{start} + N_{BWP,i}^{size}\right) \bmod N_{PRB}^{SB} \text{ is } 0;$$

and

$$Ql = N_{PRB}^{SB},$$

wherein

Qj is a quantity of PRBs comprised in a ninth resource set, and the ninth resource set is a resource set ranked first in the P resource sets;

Qk is a quantity of PRBs comprised in a tenth resource set, and the tenth resource set is a resource set ranked last in the P resource sets;

Ql is a quantity of PRBs comprised in an eleventh resource set, and a resource set other than the ninth resource set and the tenth resource set in the P resource sets is one or more eleventh resource sets;

$N_{PRB}^{SB}$ is the maximum quantity of PRBs comprised in any one of the P resource sets;

$N_{BWP,i}^{start}$ is the ID of the start PRB occupied by the first resource; and

$N_{BWP,i}^{size}$ is the total quantity of PRBs comprised in the P resource sets.

25. The method according to claim 24, wherein a value of $N_{PRB}^{SB}$ is K1, K1 is an even number greater than 0, the first resource comprises a second resource and a third resource, the second resource is used for downlink transmission, the third resource is used for uplink transmission, the second resource and the third resource are different frequency domain resources on a same time domain resource, the second resource comprises a first partial frequency domain range and a second partial frequency domain range, an ID of a start PRB of the first partial frequency domain range is smaller than an ID of a start PRB of the second partial frequency domain range, the first partial frequency domain range overlaps N1 resource sets in frequency domain, and the second partial frequency domain range overlaps N2 resource sets in frequency domain; and the method further comprises:

a twelfth resource set is a resource set whose start PRB has a largest ID in the N1 resource sets, and a thirteenth resource set is a resource set comprising a PRB that is overlapped between the twelfth resource set and the first partial frequency domain range;

a fourteenth resource set is a resource set whose start PRB has a smallest ID in the N2 resource sets, and a fifteenth resource set is a resource set comprising a PRB that is overlapped between the fourteenth resource set and the second partial frequency domain range;

the quantity of PRBs comprised in the ninth resource set and the quantity of PRBs comprised in the tenth resource set are E1 and E4 respectively, the resource set #a belongs to the one or more eleventh resource sets, and the second PRB in the resource set #a belongs to the third resource;

a quantity of PRBs comprised in the thirteenth resource set and a quantity of PRBs comprised in the fifteenth resource set are E2 and E3 respectively;

receiving at least one PMI, wherein

if E1 is less than or equal to K1/2, the at least one PMI comprises one PMI corresponding to the ninth resource set; or if E1 is greater than K1/2, the at least one PMI comprises one PMI corresponding to first (E1-(K1/2)) PRBs in the ninth resource set, and the at least one PMI further comprises one PMI corresponding to last (K1/2) PRBs in the ninth resource set;

if E3 is less than or equal to K1/2, the at least one PMI comprises one PMI corresponding to the fifteenth resource set; or if E3 is greater than K1/2, the at least one PMI comprises one PMI corresponding to first (E3-(K1/2)) PRBs in the fifteenth resource set, and the at least one PMI further comprises one PMI corresponding to last (K1/2) PRBs in the fifteenth resource set;

if E2 is less than or equal to K1/2, the at least one PMI comprises one PMI corresponding to the thirteenth resource set; or if E2 is greater than K1/2, the at least one PMI comprises one PMI corresponding to first (K1/2) PRBs in the thirteenth resource set, and the at least one PMI further comprises one PMI corresponding to last (E2-(K1/2)) PRBs in the thirteenth resource set;

if E4 is less than or equal to K1/2, the at least one PMI comprises one PMI corresponding to the PRB in the tenth resource set; or if E4 is greater than K1/2, the at least one PMI comprises one PMI corresponding to first (K1/2) PRBs in the tenth resource set, and the at least one PMI further comprises one PMI corresponding to last (E4-(K1/2)) PRBs in the tenth resource set; and

the at least one PMI comprises a PMI corresponding to first (K1/2) PRBs in each of one or more sixteenth resource sets; the at least one PMI comprises a PMI corresponding to last (K1/2) PRBs in each of the one or more sixteenth resource sets; and a resource set other than the ninth resource set, the tenth resource set, the twelfth resource set, and the fourteenth resource set in the N1 and N2 resource sets is the one or more sixteenth resource sets, and the sixteenth resource set comprises $N_{PRB}^{SB}$ PRBs.

26. The method according to any one of claims 22 to 25, wherein the method further comprises:
sending first information, wherein the first information indicates the M resource sets, or the first information indicates the S resource sets.

27. A communication method, comprising:

determining a fourth resource for CLI measurement, wherein the fourth resource is used for downlink transmission, the fourth resource comprises L resource sets, each of the L resource sets comprises at least one PRB, and the L resource sets do not overlap each other; and
sending configuration information, wherein the configuration information indicates the fourth resource.

28. The method according to claim 27, wherein in the L resource sets, at least two resource sets comprise different maximum quantities of PRBs.

29. The method according to claim 27 or 28, wherein the method further comprises:

receiving an index of a first value, wherein the first value is an average value of CLIs respectively corresponding to the L resource sets; and
receiving a second value corresponding to a difference between an index of a first measurement result and the index of the first value, wherein the second value indicates an interval in which the difference falls or the difference, and the first measurement result is measurement results respectively corresponding to the L resource sets.

30. The method according to claim 29, wherein the method further comprises:
receiving a correspondence between the second value and the L resource sets.

31. A communication apparatus, comprising modules configured to perform the method according to any one of claims 1 to 11 or any one of claims 12 to 15.

32. A communication apparatus, comprising modules configured to perform the method according to any one of claims 16 to 26 or any one of claims 27 to 30.

33. A communication system, comprising at least one communication apparatus according to claim 31 and at least one communication apparatus according to claim 32.

34. A computer-readable storage medium, wherein the computer-readable storage medium stores computer instructions, and when the computer instructions are run on a computer, the method according to any one of claims 1 to 11 is performed, the method according to any one of claims 12 to 15 is performed, the method according to any one of claims 16 to 26 is performed, or the method according to any one of claims 27 to 30 is performed.

35. A computer program product, wherein the computer program product comprises computer program code, and when the computer program code is run on a computer, the method according to any one of claims 1 to 11 is performed, the method according to any one of claims 12 to 15 is performed, the method according to any one of claims 16 to 26 is performed, or the method according to any one of claims 27 to 30 is performed.

FIG. 1

EP 4 580 093 A1

Frequency
domain

TDD UL

One
CC

DL | UL

Time
domain

FIG. 2

Frequency
domain

One
CC

DL

UL

DL

UL

Time
domain

FIG. 3

Frequency
domain

gNB

DL

UL

Time domain

FIG. 4

Network device #0    CLI    Network device #1

UL    DL

CLI

Terminal device #0    Terminal device #1

FIG. 5

EP 4 580 093 A1

One CC

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 |

SB #1   SB #2   SB #3   SB #4   SB #5   SB #6   SB #7   SB #8

BWP

FIG. 6

|  | Slot #1 | Slot #2 | Slot #3 | Slot #4 | Slot #5 |  |
|---|---|---|---|---|---|---|

Frequency domain range 3

Frequency domain range 2

Frequency domain range 1

SB #1
SB #2
SB #3
SB #4
SB #5
SB #6
SB #7

☐ Resource for downlink transmission    ▨ Resource for uplink transmission

FIG. 7

FIG. 8

Intra-cell
interference

Cell #0

Inter-cell interference

Cell #1

Inter-cell
interference

Cell #0

Cell #1

☐ Resource for downlink
transmission

▨ Resource for uplink
transmission

BS-BS CLI

UE-UE CLI

FIG. 9

SRS SNR

f0          f1  f2  f3  f4  f5  f6    Frequency domain

Base station

UE 1 sends
an SRS

UE 2 receives
the SRS

▨ Resource for uplink transmission
☐ Resource for downlink transmission
▨ Guardband
▨ UE-UE CLI

FIG. 10

Network device

Terminal device

Step 1101: Configuration information

Step 1102: Measure a CSI-RS on a resource that is in a first resource and that is for downlink transmission

Step 1103: Measurement result

FIG. 11

Frequency domain

DL1 | UL | DL2

FIG. 12(a)

Time domain

Time
domain

| DL1 | GB | UL | GB | DL2 |

Frequency
domain

FIG. 12(b)

FIG. 12(c)

FIG. 13

EP 4 580 093 A1

FIG. 14

Time
domain

DL PRB

| 7 | 8 | 9 | 10 | 11 | 12 | 13 | 14 | 15 | 16 | 17 | 18 | 19 | 20 | 21 | 22 | 23 |

SB #2        SB #3

UL PRB

SB #1

Frequency
domain

FIG. 15

FIG. 16

EP 4 580 093 A1

| DL PRB | | | | | | | | UL PRB | | | | | | | | |
|---|---|---|---|---|---|---|---|---|---|---|---|---|---|---|---|---|
| 7 | 8 | 9 | 10 | 11 | 12 | 13 | 14 | 15 | 16 | 17 | 18 | 19 | 20 | 21 | 22 | 23 |

SB #2    SB #3    SB #4    SB #5

SB #1

Frequency domain

**FIG. 17**

Network device    Terminal device

Step 1801: Configuration information

Step 1802: Separately perform CLI measurement on L resource sets

Step 1803: Measurement result

**FIG. 18**

FIG. 19

FIG. 20

FIG. 21

FIG. 22

## INTERNATIONAL SEARCH REPORT

| International application No. |
|---|
| **PCT/CN2023/120934** |

| A. | CLASSIFICATION OF SUBJECT MATTER |
|---|---|

H04B17/309(2015.01)i

According to International Patent Classification (IPC) or to both national classification and IPC

| B. | FIELDS SEARCHED |
|---|---|

Minimum documentation searched (classification system followed by classification symbols)

IPC:H04B17/-

Documentation searched other than minimum documentation to the extent that such documents are included in the fields searched

Electronic data base consulted during the international search (name of data base and, where practicable, search terms used)

CNABS, CNTXT, CNKI: 测量, 传输, 带内全双工, 交叉, 交叉链路干扰, 交集, 上行, 双工, 下行, 重叠, 资源, 子带全双工, CLI, CSI 1W RS, DL, IBFD, SBFD, TDD, UL; 3GPP, WOTXT, USTXT, EPTXT, VEN: CLI, CSI 1W RS, DL, IBFD, RS, SBFD, TDD, UL, measur+, overlap+, downlink?, intersect+, uplink?, resource?

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114902576 A (QUALCOMM INC.) 12 August 2022 (2022-08-12) description, paragraphs [39]-[111], and figures 6, 12 and 14 | 1-2, 7-8, 11-13, 16-17, 22-23, 26-28, 31-35 |
| A | CN 109088683 A (RESEARCH INSTITUTE OF CHINA MOBILE COMMUNICATIONS CORPORATION et al.) 25 December 2018 (2018-12-25) entire document | 1-35 |
| A | CN 111988099 A (HISENSE GROUP CO., LTD.) 24 November 2020 (2020-11-24) entire document | 1-35 |
| A | WO 2018128851 A2 (INTEL IP CORPORATION) 12 July 2018 (2018-07-12) entire document | 1-35 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 December 2023** | **03 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/120934**

| Patent document cited in search report | | | Publication date (day/month/year) | Patent family member(s) | | | Publication date (day/month/year) |
|---|---|---|---|---|---|---|---|
| CN | 114902576 | A | 12 August 2022 | US | 2022416867 | A1 | 29 December 2022 |
| | | | | EP | 4085537 | A1 | 09 November 2022 |
| | | | | WO | 2021138128 | A1 | 08 July 2021 |
| | | | | IN | 202227029581 | A | 23 September 2022 |
| CN | 109088683 | A | 25 December 2018 | WO | 2018228421 | A1 | 20 December 2018 |
| | | | | CN | 109088683 | B | 29 December 2020 |
| CN | 111988099 | A | 24 November 2020 | None | | | |
| WO | 2018128851 | A2 | 12 July 2018 | DE | 112017005725 | T5 | 14 August 2019 |
| | | | | WO | 2018128851 | A3 | 16 August 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211230368